(19) 

**Europäisches Patentamt**

**European Patent Office**

**Office européen des brevets**

(11) **EP 4 575 835 A1**

(12) **EUROPEAN PATENT APPLICATION**

(43) Date of publication:
25.06.2025 Bulletin 2025/26

(21) Application number: 24221787.5

(22) Date of filing: 19.12.2024

(51) International Patent Classification (IPC):
$G06F\ 16/901^{(2019.01)}$    $G06N\ 3/045^{(2023.01)}$
$G06N\ 3/048^{(2023.01)}$    $G06N\ 3/0495^{(2023.01)}$
$G06N\ 3/063^{(2023.01)}$

(52) Cooperative Patent Classification (CPC):
G06N 3/0495; G06F 16/901; G06N 3/045;
G06N 3/048; G06N 3/063; G06N 3/0464

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.12.2023 GB 202319566

(71) Applicant: Imagination Technologies Limited
Kings Langley, Hertfordshire WD4 8LZ (GB)

(72) Inventors:
• Schamp, Edward Jack Louis
Kings Langley, WD4 8LZ (GB)
• Demirci, Gunduz Vehbi
Kings Langley, WD4 8LZ (GB)
• Dikici, Cagatay
Kings Langley, WD4 8LZ (GB)

(74) Representative: Slingsby Partners LLP
1 Kingsway
London WC2B 6AN (GB)

(54) **COMPRESSING A GRAPH ATTENTION NETWORK**

(57) A computer implemented method of compressing a graph attention network, the method comprising: receiving a graph attention network comprising a graph attention network layer, said graph attention network layer being arranged to perform an operation in dependence on an adjacency matrix mask, said adjacency matrix mask comprising a plurality of elements representative of connected graph nodes; rearranging the rows and/or columns of the adjacency matrix mask so as to gather the plurality of elements representative of connected graph nodes into one or more adjacency sub-matrix masks, the one or more adjacency sub-matrix masks having a greater number of elements representative of connected graph nodes per total number of elements of the one or more adjacency sub-matrix masks than the number of elements representative of connected graph nodes per total number of elements of the adjacency matrix mask; and outputting a compressed graph attention network comprising a compressed graph attention network layer arranged to perform a compressed operation in dependence on the one or more adjacency sub-matrix masks.

FIGURE 7

EP 4 575 835 A1

**Description**

CROSS-REFERENCE TO RELATED APPLICATION

This application claims priority from UK patent application 2319566.2 filed on 19 December 2023, which is herein incorporated by reference in its entirety.

TECHNICAL FIELD

The present disclosure is directed to methods of, and processing systems for, compressing and/or configuring a graph attention network.

BACKGROUND

A neural network is a form of artificial network. Neural networks typically comprise a plurality of interconnected layers (e.g. "layers"). Each layer of a neural network may be one of a plurality of different types. The type of operation, or series of operations, that is performed on the data input to a layer depends on the type of layer. Graph neural networks are a class of neural network for processing data that can be represented as graphs.

A graph attention network ("GAN", or sometimes "GAT") is a known type of graph neural network. A graph attention network can be used to: perform image processing (e.g. image classification); perform traffic forecasting (e.g. road traffic, air traffic and/or low-level satellite orbit traffic forecasting); provide recommendations (e.g. in online shopping, video streaming, social media; advertising applications); predict the function of proteins in protein synthesis applications; and/or control or assist in the control of a vehicle, such as an autonomous vehicle (e.g. by performing image processing as mentioned above to detect vehicle lane position and/or obstacles, e.g. to influence steering of the vehicle in real-time; and/or by performing traffic forecasting as mentioned above, e.g. to influence route planning for the vehicle in real-time). It will be appreciated that this is not an exhaustive list of applications for graph attention networks. The skilled person would understand how to configure a graph attention network to perform any of the processing techniques mentioned in this paragraph, and so for conciseness these techniques will not be discussed in any further detail.

A graph attention network comprises one or more graph attention network layers. A graph attention network layer is typically arranged to perform a series of operations in dependence on a feature embedding matrix (H), a weight matrix (W), a pair of attention vectors ($a_1$ and $a_2$) and an adjacency matrix mask (M). The same adjacency matrix mask (M) is used by each of the graph attention network layers of a graph attention network. A graph attention network layer outputs a feature embedding matrix (H'). The feature embedding matrix (H') may be input-directly, or indirectly (e.g. after performing an activation operation on that feature embedding matrix (H')) - to a subsequent graph attention network layer of the graph attention network. Alternatively, if the graph attention network layer is the final layer of the graph attention network, the feature embedding matrix (H') may be output-directly, or indirectly (e.g. after performing an activation operation on that feature embedding matrix (H')) - from that graph attention network.

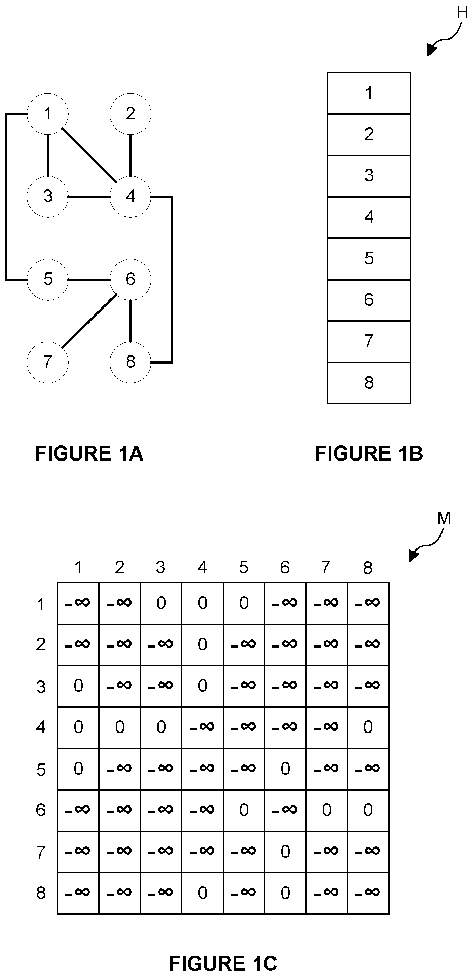

The feature embedding matrix (H) of the first graph attention network layer in a graph attention network represents the features comprised by the nodes of a graph. The adjacency matrix mask (M) used by each of the graph attention network layers of a graph attention network represents the connectivity between those nodes of that graph. These matrices can be understood further with reference to Figures 1A to 1C.

Figure 1A shows an example graph. A graph is a useful structure for representing relationships between objects. Graph data may be encountered in a multitude of real-world scenarios, such as social and computer networks, chemical structures of molecules, natural language processing, and image recognition, to name a few. The graph shown in Figure 1A comprise eight nodes - labelled 1 to 8. Each node comprises one or more features, which describe the properties of that node. Edges connect some of the nodes 1-8. For example, node 1 is connected to nodes 3, 4 and 5 by respective edges. The edges shown in Figure 1A are undirected. That is, the graph shown in Figure 1A is an undirected graph. An undirected edge between node n and node m represents that: node n is connected to node m; and node m is connected to node n. For example, the undirected edge between nodes 1 and 3 represents that: node 1 is connected to node 3; and node 3 is connected to node 1. Some nodes are not connected. For example, node 1 is not connected to node 2. That is, no edge exists between nodes 1 and 2. The graph shown in Figure 1A is provided by way of example only. It is to be understood that the graphs operated on by typical graph attention networks often comprise a far greater number of nodes.

Figure 1B shows an example feature embedding matrix (H). The feature embedding matrix (H) has the *(row × column)* dimensions $N \times F$, where $N$ is the number of nodes in the graph represented by the feature embedding matrix (H) and, for the first graph attention network layer in a graph attention network, $F$ is the number of features comprised by each node of that graph. The feature embedding matrix (H) shown in Figure 1B represents the features comprised by the nodes of the graph shown in Figure 1A. That is, the feature embedding matrix (H) comprises eight rows - labelled 1 to 8. Each of the rows (e.g. rows 1-8 shown in Figure 1B) of the feature embedding matrix (H) represents the features comprised by a respective one of the nodes (e.g. nodes 1-8 in Figure 1A) of the graph. The features comprised by each one of the nodes can be represented by a respective row vector comprising one or more (e.g. $F$) values (e.g. one or more, e.g. $F$, columns). Each of said row vectors forms a row of the feature embedding matrix (H).

Figure 1C shows an example adjacency matrix mask (M). The adjacency matrix mask (M) comprises a plurality of elements, where each element corresponds to a respective pair of nodes of the graph. The adjacency matrix mask (M) has the *(row × column)* dimensions $N \times N$, where $N$ is the number of nodes in the graph represented by the adjacency matrix mask (M). The adjacency matrix mask (M) shown in Figure 1C represents the connectivity between the nodes of the graph shown in Figure 1A. That is, the adjacency matrix mask (M) comprises eight rows and eight columns - both labelled 1 to 8, respectively. Each of the rows (e.g. rows 1 to 8 in Figure 1C) of the adjacency matrix mask (M) represents a respective one of the nodes (e.g. nodes 1-8 in Figure 1A) of the graph represented by that adjacency matrix mask (M). Likewise, each of columns (e.g. columns 1 to 8 in Figure 1A) of the adjacency matrix mask (M) represents a respective one of the nodes (e.g. nodes 1-8 in Figure 1C) of the graph represented by that adjacency matrix mask (M). For this reason, the adjacency matrix mask (M) is a square matrix.

The adjacency matrix mask (M) comprises a plurality of elements representative of connected graph nodes. Typically, each element representative of connected graph nodes comprises a zero (i.e. "0") value - although it is to be understood that in other examples a value other than zero (e.g. a value close to zero) could be used to represent connected graph nodes. Typically, a zero (i.e. "0") value in the (row, column) position (n, m) can represent a connection between node $n$ and node m of a graph. For example, the "0" shown in the (row, column) position (1, 3) in Figure 1C is representative of the connection between nodes 1 and 3 shown in Figure 1A. Similarly, the "0" shown in the (row, column) position (3, 1) in Figure 1C is representative of the connection between nodes 3 and 1 shown in Figure 1A.

The adjacency matrix mask (M) also comprises a plurality of elements representative of non-connected graph nodes. Typically, each element representative of non-connected graph nodes comprises a value representative of negative infinity ("-∞"). A value representative of negative infinity can be encoded using the most negative value available in the number format used to encode the values of the adjacency matrix mask (M). It is to be understood that in other examples a value other than "-∞" (e.g. a value close to the most negative value available) could be used to represent non-connected graph nodes. Typically, a "-∞" value in the (row, column) position (n, m) can represent that node n and node m of a graph are not connected. For example, the "-∞" value shown in the (row, column) position (1, 2) in Figure 1C is representative of nodes 1 and 2 shown in Figure 1A not being connected. Similarly, the "-∞" value shown in the (row, column) position (2, 1) in Figure 1C is representative of nodes 2 and 1 shown in Figure 1A not being connected. The graphs operated on by typical graph attention networks often comprise a large number of nodes, a large proportion of which are not at are not connected to one another. Hence, adjacency matrix masks often comprise a large proportion of "-∞" values.

As will be understood from the preceding paragraphs, an adjacency matrix mask (M) that represents an undirected graph, such as the graph shown in Figure 1A, will necessarily be symmetric (i.e. $M^T = M$) (i.e. symmetric across the diagonal) - e.g. as the value in the (row, column) position (n, m) is necessarily equal the value in the (row, column) position (m, n). It is to be understood that, in other examples (not shown in the Figures), it is possible for edges in a graph to be directed. For example, a directed edge from a node n to a node m would only represent that node n is connected to node m. In the absence of a directed edge from node m to node n, node m is not connected to node n. Graphs that use directed edges are referred to herein as directed graphs. An adjacency matrix mask (M) that represents an undirected graph will not necessarily be symmetric - e.g. as the value in the (row, column) position (n, m) is not necessarily equal the value in the (row, column) position (m, n).

The coefficients of the weight matrix (W) are used to transform the data input to a graph attention network layer. The coefficients of the weight matrix (W) can be defined during a training phase. That is, as would be understood by the skilled person, a graph attention network can be trained by, iteratively: processing training data in a forward pass; assessing the accuracy of the output of that forward pass; and updating the weight coefficients of the layers in a backward pass. The weight matrix (W) has the *(row × column)* dimensions $F \times F'$, where $F$ is the number of columns of the feature embedding matrix (H) input to that graph attention network layer and $F'$ is the number of columns of the feature embedding matrix (H') that will be output from that graph attention network layer. That is, the weight matrix (W) can be used to control the "width" (e.g. number of columns) of the output feature embedding matrix (H') formed by a graph attention network layer.

The pair of attention vectors ($a_1$ and $a_2$) are used to control how much "attention" the graph attention network layer "pays" to each input value in the data input to that layer. In other words, the pair of attention vectors ($a_1$ and $a_2$) cause the graph attention network layer to apply a higher weighting (e.g. closer to 1, assuming a weighting scale from zero to one) to "more important" inputs and a lower weighting (e.g. closer to 0, assuming a weighting scale from zero to one) to "less important inputs". In this way, the "more important" inputs to a graph attention network layer have a larger influence on the output of that graph attention network layer, whilst the "less important" inputs to a graph attention network layer have a smaller influence on the output of that graph attention network layer. The coefficients of the pair of attention vectors ($a_1$ and $a_2$) can be defined during a training phase - e.g. as a result of learning during that training phase which inputs are "more" and "less" important. That is, as would be understood by the skilled person, graph attention network can be trained by, iteratively: processing training data in a forward pass; assessing the accuracy of the output of that forward pass; and updating the attention coefficients of the layers in a backward pass. Each of the attention vectors ($a_1$ and $a_2$) are column vectors having the *(row × column)* dimensions $F' \times 1$, where $F'$ is the number of rows of the weight matrix (W) of that graph attention network layer.

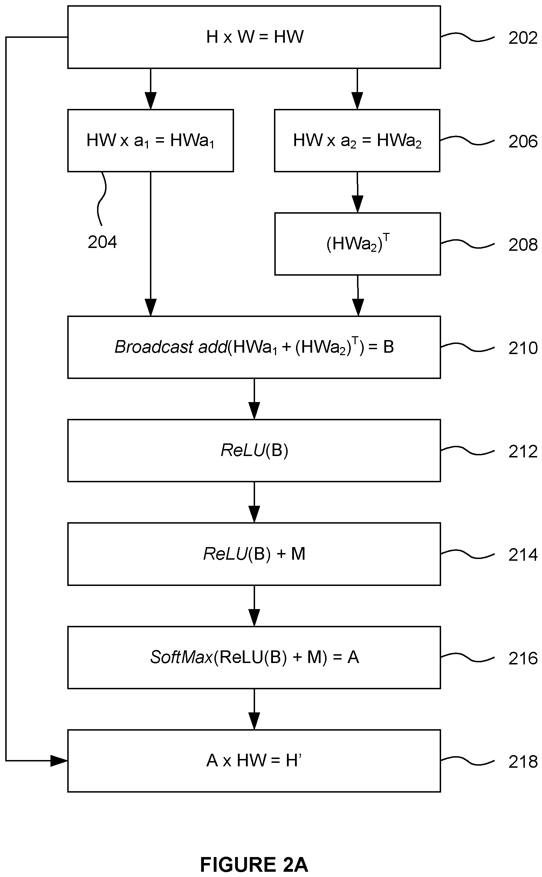

The series of operations performed by a graph attention network layer of a graph attention network can be understood further with reference to Figures 2A to 2C.

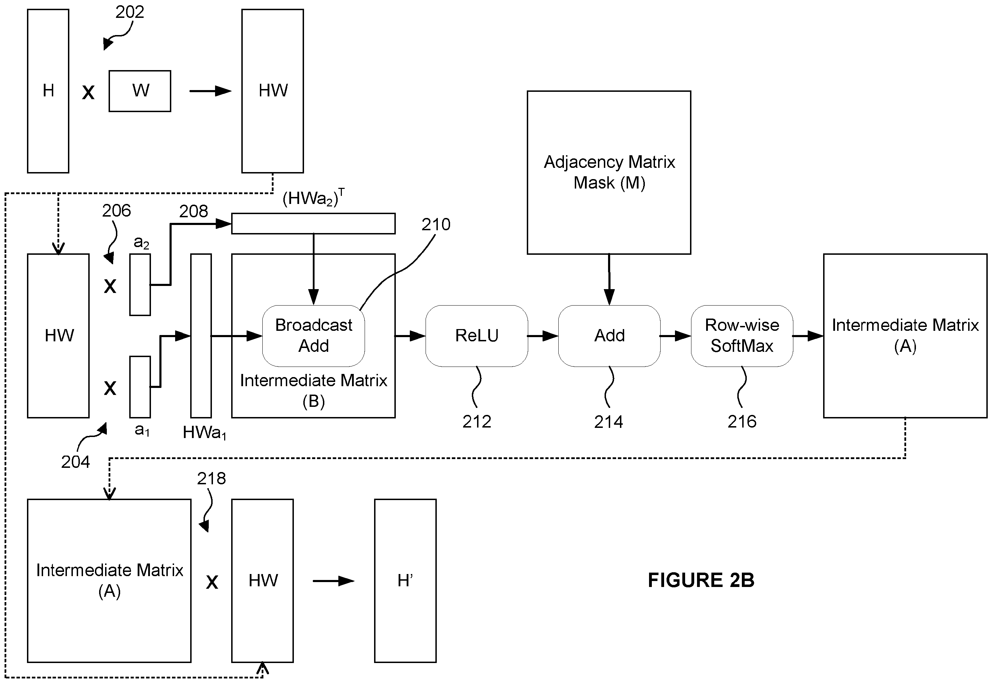

Figure 2A is a flow diagram showing the series of operations performed by a graph attention network layer of a graph attention network. Figure 2B illustrates the series of operations performed by a graph attention network layer of a graph attention network. Figures 2A and 2B use the same reference numerals to refer to the same operations.

Typically, the first operation in the series of operations is a multiplication operation 202 (e.g. a matrix multiplication operation 202). The multiplication operation 202 comprises multiplying the feature embedding matrix (H) by the weight matrix (W). As described herein, the feature embedding matrix (H) has the dimensions $N \times F$ and the weight matrix (W) has the dimensions $F \times F'$. The multiplication operation 202 outputs an intermediate matrix (HW). The intermediate matrix (HW) has the dimensions $N \times F'$.

Next, the series of operations comprises a multiplication operation 204 and a multiplication operation 206. Both operations 204 and 206 may be referred to as matrix-vector multiplication operations. The multiplication operation 204 comprises multiplying the intermediate matrix (HW) by the first attention vector ($a_1$). As described herein, the intermediate matrix (HW) has the dimensions $N \times F'$ and the first attention vector ($a_1$) has the dimensions $F' \times 1$. The multiplication operation 204 outputs an intermediate column vector ($HWa_1$). The intermediate column vector ($HWa_1$) has the dimensions $N \times 1$. The multiplication operation 206 comprises multiplying the intermediate matrix (HW) by the second attention vector ($a_2$). As described herein, the intermediate matrix (HW) has the dimensions $N \times F'$ and the second attention vector ($a_2$) has the dimensions $F' \times 1$. The multiplication operation 206 outputs an intermediate column vector ($HWa_2$). The intermediate column vector ($HWa_2$) has the dimensions $N \times 1$.

Next, the series of operations comprises a transpose operation 208. The transpose operation 208 comprises transposing the intermediate column vector ($HWa_2$). The transpose operation 208 outputs an intermediate row vector ($(HWa_2)^T$). The intermediate row vector ($(HWa_2)^T$) has the dimensions $1 \times N$.

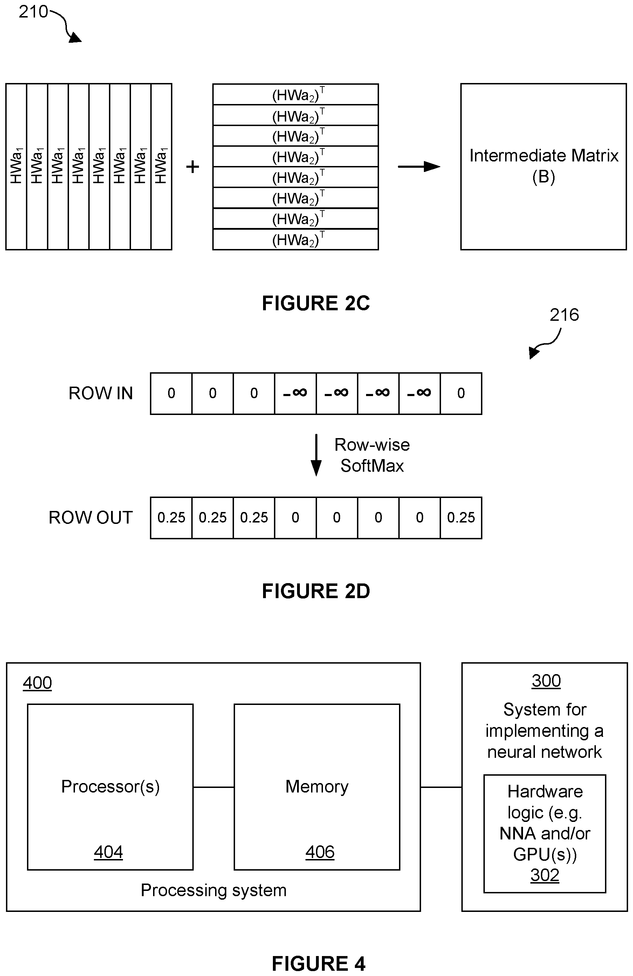

Next, the series of operations comprises a broadcast add operation 210. The broadcast add operation 210 comprises broadcast adding the intermediate column vector ($HWa_1$) and the intermediate row vector ($(HWa_2)^T$). The broadcast add operation 210 is performed in order to form an intermediate matrix (B) having the same dimensions as the adjacency matrix mask (M). That is, the broadcast add operation 210 is performed in order to form an intermediate matrix (B) having the *(row × column)* dimensions $N \times N$. The broadcast add operation 210 is illustrated in Figure 2C. The broadcast add operation 210 involves: forming a first intermediate matrix comprising a number of columns (e.g. $N$) equal to the number of columns of the intermediate row vector ($(HWa_2)^T$), each column comprising the intermediate column vector ($HWa_1$); forming a second intermediate matrix comprising a number of rows (e.g. $N$) equal to the number of rows of the intermediate column vector ($HWa_1$), each row comprising the intermediate row vector ($(HWa_2)^T$); and summing said first intermediate matrix and said second intermediate matrix in order to form an intermediate matrix (B) having the dimensions $N \times N$. The intermediate matrix (B) is sometimes referred to as an intermediate "attention" matrix.

Next, the series of operations can comprise an activation operation 212. The activation operation 212 is performed on the intermediate matrix (B). The activation operation 212 may comprise applying an activation function, such as a sigmoid function or step function, to each of the values in the intermediate matrix (B). Typically, the activation operation 212 comprises applying a rectified linear (ReLU) activation function to each of the values in the intermediate matrix (B). The activation operation 212 outputs an intermediate matrix (ReLU(B)). The intermediate matrix (ReLU(B)) has the dimensions $N \times N$.

Next, the series of operations comprises an addition operation 214 (e.g. a matrix addition operation 214). The addition operation 214 comprises adding the intermediate matrix (ReLU(B)) and the adjacency matrix mask (M). As described herein, the intermediate matrix (ReLU(B)) has the dimensions $N \times N$ and the adjacency matrix mask (M) also has the dimensions $N \times N$. When the "0" values of the adjacency matrix mask (M) are added to the respective values of the intermediate matrix (ReLU(B)), the respective output values equal their respective values of the intermediate matrix (ReLU(B)). When the "-∞" values of the adjacency matrix mask (M) are added to the respective values of the intermediate matrix (ReLU(B)), the respective output values equal "-∞". The addition operation 214 outputs an intermediate matrix (ReLU(B)+M). The intermediate matrix (ReLU(B)+M) has the dimensions $N \times N$.

Next, the series of operations comprises a row-wise SoftMax operation 216. The row-wise SoftMax operation 216 is performed on the intermediate matrix (ReLU(B)+M). The row-wise SoftMax operation 216 comprises scaling the values in each of the rows of the intermediate matrix (ReLU(B)+M) such that the sum of the scaled values in each row equals 1. Figure 2D illustrates a row-wise SoftMax operation 216 being performed on a single row of the intermediate matrix (ReLU(B)+M). Each of the "-∞" values in a row of the intermediate matrix (ReLU(B)+M) will be scaled to zero (i.e. "0") in the output of the row-wise SoftMax operation 216. The other values in that row of the intermediate matrix (ReLU(B)+M) will be scaled such that the sum of those scaled values equals 1. In Figure 2D, the "other values" are all equal (e.g. are four zero values) and so they will each be scaled to the same value (e.g. a value of 0.25, as 0.25 + 0.25 + 0.25 + 0.25 = 1) in the output of the row-wise SoftMax operation 216. The row-wise SoftMax operation 216 is performed separately (e.g. independently) on each of the rows of the intermediate matrix (ReLU(B)+M). The row-wise SoftMax operation 216 outputs an intermediate matrix (A). The intermediate matrix (A) has the dimensions $N \times N$. Intermediate matrix (A) may be referred to as an intermediate "adjacency-attention" matrix. This is because the intermediate adjacency-attention matrix (A) is representative of the adjacency information (e.g. as derived from the adjacency matrix mask (M) described herein) and the attention information (e.g. as derived from the series of operations 202 to 212 described herein) of the graph attention network layer.

Finally, the series of operations comprises a multiplication operation 218 (e.g. a matrix multiplication operation 218). The multiplication operation 218 comprises multiplying the intermediate matrix (A) by the intermediate matrix (HW). Typically, the multiplication operation 218 can be performed using the intermediate matrix (HW) output by the multiplication operation 202. That is, the intermediate matrix (HW) need not be re-calculated - although, in other examples, it could be. As described herein, the intermediate matrix (A) has the dimensions $N \times N$ and the intermediate matrix (HW) has the dimensions $N \times F'$. The multiplication operation 216 outputs a feature embedding matrix (H'). The feature embedding matrix (H') has the dimensions $N \times F'$.

The feature embedding matrix (H') may be input - directly, or indirectly (e.g. after performing an activation operation on that feature embedding matrix (H')) - to a subsequent graph attention network layer of the graph attention network. Said subsequent graph attention network layer can perform the series of operations 202 to 218 described herein in dependence on the feature embedding matrix (H'), a further weight matrix (W), a further pair of attention vectors ($a_1'$ and $a_2'$) and the same adjacency matrix mask (M). Alternatively, if the graph attention network layer is the final layer of the graph attention network, the feature embedding matrix (H') may be output - directly, or indirectly (e.g. after performing an activation operation on that feature embedding matrix (H')) - from that graph attention network as the output of that graph attention network.

Graph attention networks can become very large. For example, it is not unusual for the intermediate matrix (A), the feature embedding matrix (H) and the weight matrix (W) to each have millions or even billions of elements. For example, the intermediate matrix (A), may be a 4096x4096 matrix, the feature embedding matrix (H) may be a 4096x512 matrix and the weight matrix (W) may be a 512x1024 matrix. Determining the result of multiplying the A, H and W matrices for this graph attention network layer (e.g. by performing multiplication operations 202 and 218 described above) would involve performing billions of multiply-accumulate (MAC) operations. In addition, as described above, a number of other operations (e.g. operations 212, 214 and 216 described above) are also performed in dependence on intermediate matrices having the same dimensions as the intermediate matrix (A). Performing these types of operations on intermediate matrices of this size involves performing millions or even billions of further calculations. Moreover, there may be many graph attention network layers in the graph attention network. As such, implementing a graph attention network can involve performing an enormous number of calculations - which can be very computationally expensive. Furthermore, when implementing a graph attention network in hardware logic, e.g. at a neural network accelerator and/or one or more graphics processing units (GPUs), the data representing the graph attention network is typically stored in an "off-chip" memory. The hardware logic can implement a graph attention network layer of the graph attention network by reading in the data representing that graph attention network layer at run-time. A large amount of memory bandwidth can be required in order to read in this data from an off-chip memory.

It is generally desirable to decrease the amount of data required to represent a graph attention network, decrease the power consumed when the graph attention network is implemented and/or decrease the latency (i.e. increase the speed) of implementing the graph attention network.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect of the present invention there is provided a computer implemented method of compressing a graph attention network, the method comprising: receiving a graph attention network comprising a graph attention network layer, said graph attention network layer being arranged to perform an operation in dependence on an adjacency matrix mask, said adjacency matrix mask comprising a plurality of elements representative of connected graph nodes; rearranging the rows and/or columns of the adjacency matrix mask so as to gather the plurality of elements representative of connected graph nodes into one or more adjacency sub-matrix masks, the one or more adjacency sub-matrix masks having a greater number of elements representative of connected graph nodes per total number of elements of the one or more adjacency sub-matrix masks than the number of elements representative of connected graph nodes per total number of elements of the adjacency matrix mask; and outputting a compressed graph attention network comprising a compressed graph attention network layer arranged to perform a compressed operation in dependence on the one or more adjacency sub-matrix masks.

Each element representative of connected graph nodes may comprise a zero value, such that the adjacency matrix mask may comprise a plurality of zero values and the one or more adjacency sub-matrix masks may have a greater number of zero values per total number of values of the one or more adjacency sub-matrix masks than the number of zero values per total number of values of the adjacency matrix mask.

Each of the one or more adjacency sub-matrix masks may have a greater number of elements representative of connected graph nodes per total number of elements of that adjacency sub-matrix mask than the number of elements representative of connected graph nodes per total number of elements of the adjacency matrix mask.

Said rearranging the rows and/or columns of the adjacency matrix mask may comprise: performing permutations of the rows and/or columns of the adjacency matrix mask; and partitioning the rows and/or columns of the permuted adjacency matrix mask to form the one or more adjacency sub-matrix masks.

Said performing permutations of the rows and/or columns of the adjacency matrix mask may comprise performing a symmetric permutation, such that the permuting of the rows of the adjacency matrix mask is the same as the permuting of the columns of the adjacency matrix mask.

The graph attention network layer of the received graph attention network may be arranged to perform a series of operations in order to form a first intermediate matrix, the first intermediate matrix having the same dimensions as the adjacency matrix mask; and the compressed graph attention network layer of the compressed graph attention network may be configured to perform a compressed series of operations in order to form one or more first intermediate sub-matrices, each of the one or more first intermediate sub-matrices having the same dimensions as a respective one of the one or more adjacency sub-matrix masks.

The graph attention network layer of the received graph attention network may be arranged to perform an addition operation in dependence on the adjacency matrix mask and the first intermediate matrix; and the compressed graph attention network layer of the compressed graph attention network may be configured to perform a compressed addition operation in dependence on the one or more adjacency sub-matrix masks and the one or more first intermediate sub-matrices.

The series of operations may further comprise performing an activation operation on the first intermediate matrix prior to performing the addition operation; and the compressed series of operations may further comprise performing an activation operation on each of the one or more first intermediate sub-matrices prior to performing the compressed addition operation.

The graph attention network layer of the received graph attention network may be arranged to perform a row-wise SoftMax operation on a matrix formed in dependence on the adjacency matrix mask and the first intermediate matrix; and the compressed graph attention network layer of the compressed graph attention network may be configured to perform a compressed row-wise SoftMax operation in dependence on one or more sub-matrices, said one or more sub-matrices being formed in dependence on the one or more adjacency sub-matrix masks and the one or more first intermediate sub-matrices.

The method may further comprise: concatenating at least one set of two or more adjacency sub-matrix masks in order to form one or more concatenated adjacency sub-matrix masks; concatenating at least one set of two or more first intermediate sub-matrices in order to form one or more concatenated first intermediate sub-matrices, said concatenation corresponding to the concatenation of said at least one set of two or more adjacency sub-matrix masks; configuring the compressed graph attention network layer of the compressed graph attention network to perform the compressed addition operation in dependence on the one or more concatenated adjacency sub-matrix masks and one or more concatenated first intermediate sub-matrices in order to form one or more concatenated sub-matrices; and configuring the compressed graph attention network layer of the compressed graph attention network to perform the compressed row-wise SoftMax operation on the one or more concatenated sub-matrices.

The method may further comprise: in order to form one or more concatenated sub-matrices, concatenating at least one set of two or more sub-matrices formed by performing the compressed addition operation using the one or more adjacency sub-matrix masks and the one or more first intermediate sub-matrices; and configuring the compressed graph attention network layer of the compressed graph attention network to perform the compressed row-wise SoftMax operation in dependence on the one or more concatenated sub-matrices.

The series of operations may comprise a broadcast add operation, the broadcast add operation forming the first intermediate matrix; and the compressed series of operations may comprise a compressed broadcast add operation, the compressed broadcast add operation forming the one or more first intermediate sub-matrices.

The series of operations may further comprise performing an operation in dependence on a weight matrix and an attention vector, and the method may further comprise: computing, in an offline phase prior to implementing the compressed graph attention network, an attention weight vector in dependence on the weight matrix and the attention vector; and configuring the compressed graph attention network such that the compressed graph attention network layer is configured to perform an operation in dependence on the attention weight vector, said operation being comprised by the compressed series of operations.

The graph attention network layer of the received graph attention network may be arranged to perform a series of operations, in dependence on the adjacency matrix mask, in order to form a second intermediate matrix having the same dimensions as the adjacency matrix mask; and the compressed graph attention network layer of the compressed graph attention network may be configured to perform a compressed series of operations, in dependence on the one or more adjacency sub-matrix masks, in order to form one or more second intermediate sub-matrices, each of the one or more second intermediate sub-matrices having the same dimensions as a respective one of the one or more adjacency sub-matrix masks.

The one or more second intermediate sub-matrices may have a greater number of non-zero values per total number of values of the one or more second intermediate sub-matrices than the number of non-zero values per total number of values of the second intermediate matrix.

The graph attention network layer of the received graph attention network may be arranged to perform multiplication operations in dependence on the second intermediate matrix, a feature embedding matrix, and a weight matrix; and the compressed graph attention network layer of the compressed graph attention network may be configured to perform compressed multiplication operations in dependence on the one or more second intermediate sub-matrices, one or more feature embedding sub-matrices formed in dependence on the feature embedding matrix, and the weight matrix, the output of said compressed multiplication operations being representative of the output of said multiplication operations.

The method may further comprise: so as to form the one or more feature embedding sub-matrices, permuting and partitioning the rows of the feature embedding matrix to match the permutation and partitioning of the columns of the permuted adjacency matrix mask.

The columns of the feature embedding matrix may be neither permuted nor partitioned, and the rows and the columns of the weight matrix may be neither permuted nor partitioned.

The method may comprise: assessing at least one dimension of one or both of the feature embedding matrix and the weight matrix; and in dependence on the dimensions of one or both of the feature embedding matrix and the weight matrix, configuring the compressed graph attention network such that the compressed graph attention network layer is configured to, either: (i) perform a multiplication operation in dependence on the one or more feature embedding sub-matrices and the weight matrix so as to form one or more third intermediate sub-matrices, and subsequently perform a multiplication operation in dependence on the one or more second intermediate sub-matrices and the one or more third intermediate sub-matrices; or (ii) perform a multiplication operation in dependence on the one or more second intermediate sub-matrices and the one or more feature embedding sub-matrices so as to form one or more fourth intermediate sub-matrices, and subsequently perform a multiplication operation in dependence on the one or more fourth intermediate sub-matrices and the weight matrix.

The method may comprise assessing at least one dimension of one or both of the feature embedding matrix and the weight matrix in order to select, from a plurality of predefined series of operations, the series of operations that causes a compressed graph attention network layer configured to perform that series of operations to incur the fewest multiple-accumulate operations.

Assessing at least one dimension of one or both of the feature embedding matrix and the weight matrix may comprise: inputting one or both dimensions of each of the feature embedding matrix and the weight matrix into a first function, the first function being indicative of the number of multiply-accumulate operations associated with operations performed in dependence on the feature embedding matrix and the weight matrix that would be incurred by a compressed graph attention network layer configured to perform a first series of operations; inputting one or both dimensions of each of the feature embedding matrix and the weight matrix into a second function, the second function being indicative of the number of multiply-accumulate operations associated with operations performed in dependence on the feature embedding matrix and the weight matrix that would be incurred by a graph attention network layer configured to perform a second series of operations; and determining whether the output of said first function is greater than the output of said second function.

The compressed graph attention network may be configured such that the graph attention network layer is configured to: perform the first series of operations in response to determining that the output of the first function is less than the output of the second function, the first series of operations comprising (i) performing a multiplication operation in dependence on the one or more feature embedding sub-matrices and the weight matrix so as to form one or more third intermediate sub-matrices, and subsequently perform a multiplication operation in dependence on the one or more second intermediate sub-matrices and the one or more third intermediate sub-matrices; or perform the second series of operations in response to determining that the output of the first function is greater than the output of the second function, the second series of operations comprising (ii) performing a multiplication operation in dependence on the one or more second intermediate sub-matrices and the one or more feature embedding sub-matrices so as to form one or more fourth intermediate sub-matrices, and subsequently perform a multiplication operation in dependence on the one or more fourth intermediate sub-matrices and the weight matrix.

The graph attention network may comprise a plurality of graph attention network layers, the plurality of graph attention network layers comprising said graph attention network layer and one or more further graph attention network layers; and the compressed graph attention network may comprise a plurality of compressed graph attention network layers, the plurality of compressed graph attention network layers comprising said compressed graph attention network layer and one or more further compressed graph attention network layers.

The adjacency matrix mask may be the same for all of the plurality of graph attention network layers, and the one or more adjacency sub-matrix masks may be the same for all of the plurality of compressed graph attention network layers.

The compressed graph attention network may be configured to process an output of a first of the compressed graph attention network layers to determine an input for a second of the compressed graph attention network layers in the compressed graph attention network, and the processing of the output of the first of the compressed graph attention network layers may not comprise performing a permute operation on the output of the first of the compressed graph attention network layers.

The method may further comprise storing the compressed graph attention network for subsequent implementation.

The method may further comprise outputting a computer readable description of the compressed graph attention network that, when implemented at a system for implementing a graph attention network, causes the compressed graph attention network to be executed.

The method may further comprise configuring hardware logic to implement the compressed graph attention network.

According to a second aspect of the present invention there is provided a processing system for compressing a graph attention network, the processing system comprising at least one processor configured to: receive a graph attention network comprising a graph attention network layer, said graph attention network layer being arranged to perform an operation in dependence on an adjacency matrix mask, said adjacency matrix mask comprising a plurality of elements representative of connected graph nodes; rearrange the rows and/or columns of the adjacency matrix mask so as to gather the plurality of elements representative of connected graph nodes into one or more adjacency sub-matrix masks, the one or more adjacency sub-matrix masks having a greater number of elements representative of connected graph nodes per total number of elements of the one or more adjacency sub-matrix masks than the number of elements representative of connected graph nodes per total number of elements of the adjacency matrix mask; and output a compressed graph attention network comprising a compressed graph attention network layer arranged to perform a compressed operation in dependence on the one or more adjacency sub-matrix masks.

According to a third aspect of the present invention there is provided a computer implemented method of configuring a graph attention network, the method comprising: receiving a graph attention network comprising a graph attention network layer, said graph attention network layer being arranged to perform one or more operations in dependence on a feature embedding matrix and a weight matrix; assessing at least one dimension of one or both of the feature embedding matrix and the weight matrix; and in dependence on the dimensions of one or both of the feature embedding matrix and the weight matrix, configuring the graph attention network such that the graph attention network layer is configured to, either: (i) perform an operation in dependence on the feature embedding matrix and the weight matrix so as to form a first intermediate output, and subsequently perform an operation in dependence on a first intermediate matrix and the first intermediate output; or (ii) perform an operation in dependence on the first intermediate matrix and the feature embedding matrix so as to form a second intermediate output, and subsequently perform an operation in dependence on the second intermediate output and the weight matrix.

According to a fourth aspect of the present invention there is provided a processing system for configuring a graph attention network, the processing system comprising at least one processor configured to: receive a graph attention network comprising a graph attention network layer, said graph attention network layer being arranged to perform one or more operations in dependence on a feature embedding matrix and a weight matrix; assess at least one dimension of one or both of the feature embedding matrix and the weight matrix; and in dependence on the dimensions of one or both of the feature embedding matrix and the weight matrix, configure the graph attention network such that the graph attention network layer is configured to, either: (i) perform an operation in dependence on the feature embedding matrix and the weight matrix so as to form a first intermediate output, and subsequently perform an operation in dependence on a first intermediate matrix and the first intermediate output; or (ii) perform an operation in dependence on the first intermediate matrix and the feature embedding matrix so as to form a second intermediate output, and subsequently perform an operation in dependence on the second intermediate output and the weight matrix.

According to a fifth aspect of the present invention there is provided a computer implemented method of configuring a graph attention network, the method comprising: receiving a graph attention network comprising a graph attention network layer, said graph attention network layer being arranged to perform an operation in dependence on a weight matrix and an attention vector; computing an attention weight vector in dependence on the weight matrix and the attention vector; and configuring the graph attention network such that the graph attention network layer is configured to perform an operation in dependence on the attention weight vector.

According to a sixth aspect of the present invention there is provided a processing system for configuring a graph attention network, the processing system comprising at least one processor configured to: receive a graph attention network comprising a graph attention network layer, said graph attention network layer being arranged to perform an operation in dependence on a weight matrix and an attention vector; compute an attention weight vector in dependence on the weight matrix and the attention vector; and configure the graph attention network such that the graph attention network layer is configured to perform an operation in dependence on the attention weight vector.

The processing system may be embodied in hardware on an integrated circuit. There may be provided a method of manufacturing, at an integrated circuit manufacturing system, the processing system. There may be provided an integrated circuit definition dataset that, when processed in an integrated circuit manufacturing system, configures the system to manufacture the processing system. There may be provided a non-transitory computer readable storage medium having stored thereon a computer readable description of the processing system that, when processed in an integrated circuit manufacturing system, causes the integrated circuit manufacturing system to manufacture an integrated circuit embodying the processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

There may also be provided a computer implemented method of compressing a neural network, the method comprising: receiving a neural network comprising a neural network layer, said neural network layer being arranged to perform a series of operations, the series of operations comprising: a broadcast add operation, the broadcast add operation forming an intermediate matrix; and a matrix multiplication operation, the matrix multiplication operation being performed in dependence on the intermediate matrix or a further intermediate matrix formed in dependence on the intermediate matrix, the matrix multiplication operation forming a matrix; and outputting a compressed neural network comprising a compressed neural network layer arranged to perform a compressed series of operations, the compressed series of operations comprising: a compressed broadcast add operation, the compressed broadcast add operation forming one or more intermediate sub-matrices, the one or more intermediate sub-matrices comprising a subset of the values of the intermediate matrix; and a compressed matrix multiplication operation, the compressed matrix multiplication operation being performed in dependence on the one or more intermediate sub-matrices or one or more further intermediate sub-matrices formed in dependence on the one or more intermediate sub-matrices, the compressed matrix multiplication operation forming one or more sub-matrices, the one or more sub-matrices comprising a subset of the values of the matrix.

The compressed matrix multiplication operation may be performed in dependence on one or more intermediate sub-matrices comprising a greater number of non-zero values per total number of values of the one or more intermediate sub-matrices than the number of non-zero values per total number of values of the intermediate matrix that the matrix multiplication operation is performed in dependence on. The compressed matrix multiplication operation may be performed in dependence on one or more intermediate sub-matrices comprising a smaller number of zero values per total number of values of the one or more intermediate sub-matrices than the number of zero values per total number of values of the intermediate matrix that the matrix multiplication operation is performed in dependence on.

There may also be provided a computer implemented method of compressing a graph neural network, the method comprising: receiving a graph neural network comprising a graph neural network layer, said graph neural network layer being arranged to perform an operation in dependence on a matrix, said matrix comprising a plurality of elements representative of connected graph nodes; forming one or more sub-matrices in dependence on the matrix, the one or more sub-matrices having a greater number of elements representative of connected graph nodes per total number of elements of the one or more sub-matrices than the number of elements representative of connected graph nodes per total number of elements of the matrix; and outputting a compressed graph neural network comprising a compressed graph neural network layer arranged to perform a compressed operation in dependence on the one or more sub-matrices.

BRIEF DESCRIPTION OF THE DRAWINGS

Examples will now be described in detail with reference to the accompanying drawings in which:

Figure 1A shows an example graph.
Figure 1B shows an example feature embedding matrix (H).
Figure 1C shows an example adjacency matrix mask (M).

Figure 2A is a flow diagram showing the series of operations performed by a graph attention network layer of a graph attention network.

Figure 2B illustrates the series of operations performed by a graph attention network layer of a graph attention network.

Figure 2C illustrates a broadcast add operation.

Figure 2D illustrates a row-wise SoftMax operation.

Figure 3 shows an example system for implementing a graph attention network.

Figure 4 shows a processing system for compressing and/or configuring a graph attention network.

Figure 5 shows a method of compressing a graph attention network.

Figure 6A shows an example adjacency matrix mask (M) comprising a plurality of elements representative of connected graph nodes.

Figure 6B shows an example hypergraph model corresponding to the adjacency matrix shown in Figure 6A.

Figure 6C shows an example rearranged adjacency matrix mask comprising a plurality of adjacency sub-matrix masks.

Figure 7 illustrates a compressed series of operations performed by a compressed graph attention network layer of a compressed graph attention network.

Figure 8 illustrates the use of concatenation and row-wise split operations within the compressed series of operations illustrated in Figure 7.

Figure 9 shows a method of configuring a graph attention network.

Figure 10 illustrates a series of operations performed by configured graph attention network layer of a configured graph attention network.

Figure 11 illustrates a compressed series of operations performed by configured and compressed graph attention network layer of a configured and compressed graph attention network.

Figure 12 shows another method of configuring a graph attention network.

Figure 13 illustrates a series of operations performed by a configured graph attention network layer of a configured graph attention network.

Figure 14 illustrates a compressed series of operations performed by a configured and compressed graph attention network layer of a configured and compressed graph attention network.

Figure 15 shows a computer system in which a processing system is implemented; and

Figure 16 shows an integrated circuit manufacturing system for generating an integrated circuit embodying a processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

*Hardware logic for implementing a graph attention network*

A graph attention network may be defined by a software model. For example, that software model may define the adjacency matrix mask (M) of the graph attention network, the series of layers of the graph attention network (e.g. the number of layers, the order of the layers, and the connectivity between those layers), each of the graph attention network layers in that series in terms of the series of operations it is configured to perform, and the feature embedding matrix (H), weight matrix (W) and pair of attention vectors ($a_1$ and $a_2$) each graph attention network layer will use. A graph attention network may comprise at least one graph attention network layer arranged to perform the series of operations described herein with reference to Figures 2A to 2D. In general, a graph attention network may be implemented in hardware, software, or any combination thereof.

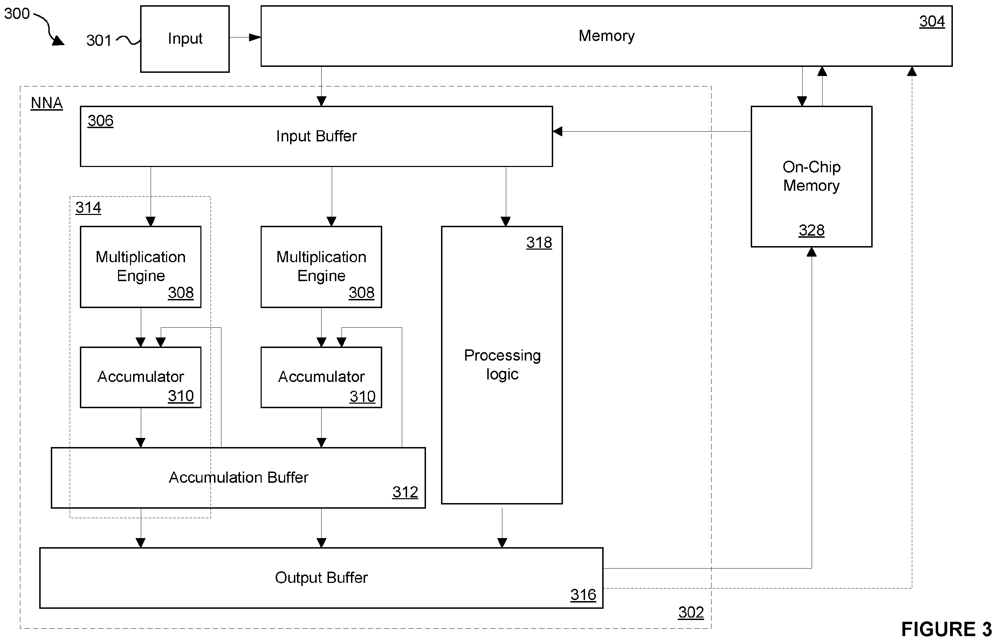

Figure 3 shows an example system 300 for implementing a graph attention network in hardware. System 300 comprises hardware components (e.g. hardware logic, such as processing elements implemented in hardware) and software components (e.g. firmware, and the procedures and tasks for execution at the hardware logic). System 300 comprises hardware logic for implementing a graph attention network. The hardware logic may comprise a neural network accelerator (NNA) and/or one or more graphics processing units (GPUs). Figure 3 shows the system 300 for implementing a graph attention network in an example in which the hardware logic 302 of the system 300 is implemented as an NNA.

A neural network accelerator (NNA) 302 can be configured to execute the operations to be performed by the graph attention network layers of a graph attention network. In further detail, system 300 comprises input 301 for receiving input data. For example, the input data may include data defining the values of the adjacency matrix mask (M) for the graph attention network, the values of the feature embedding matrix (H) to be input to the first graph attention network layer of that graph attention network, and the values of the weight matrix (W) and pair of attention vectors ($a_1$ and $a_2$) that each graph attention network layer of that graph attention network will use.

The input data received at input 301 may be written to a memory 304 comprised by system 300. Memory 304 may be accessible to the NNA 302. Memory 304 may be a system memory accessible to the NNA 302 over a data bus. NNA 302 may be implemented on a chip (e.g. semiconductor die and/or integrated circuit package) and memory 304 may not be physically located on the same chip as NNA 302. As such, memory 304 may be referred to as "off-chip memory" and/or "external memory". Memory 304 may be coupled to an input buffer 306 at the NNA 302 so as to provide input data to the NNA 302.

Input buffer 306 may be arranged to store input data required by the NNA 302. The various buffers of the NNA 302 shown in Figure 3 may be implemented in any suitable manner - e.g. as any number of data stores which are local to the NNA 302 (e.g. on the same semiconductor die and/or provided within the same integrated circuit package) or accessible to the NNA 302 over a data bus or other interconnect.

In Figure 3, system 300 also comprises a memory 328 for storing at least some of the data used by the graph attention network being implemented at the NNA 302. NNA 302 may be implemented on a chip (e.g. semiconductor die and/or integrated circuit package) and memory 328 may be physically located on the same chip (e.g. semiconductor die and/or integrated circuit package) as NNA 308. As such, memory 328 may be referred to as "on-chip memory" and/or "local memory". Data stored in the on-chip memory 328 may be accessed by the NNA 302 without consuming memory bandwidth to the off-chip memory 304. That said, on-chip memory 328 may not have sufficient storage space so as to simultaneously store all of the data used to implement a graph attention network. Thus, subsets of the data may be periodically written into the on-chip memory 328 from off-chip memory 304. The input buffer 306 may be configured to receive input data from the on-chip memory 328 so as to reduce the bandwidth between the off-chip memory 304 and the input buffer 306.

In Figure 3, NNA 302 includes input buffer 306, a plurality of multiplication engines 308, a plurality of accumulators 310, an accumulation buffer 312, and an output buffer 316. A multiplication engine 308 can be configured to perform multiplications between sets of values. As described herein, a large number of multiply-accumulate calculations must typically be performed in order to execute the multiplication operations to be performed in a typical graph attention network layer. Since it may take more than one pass of a multiplication engine 308 to generate a complete output for a multiplication operation (e.g. because a multiplication engine 308 may only receive and process a portion of the values of the matrices being multiplied) the neural network accelerator (NNA) may comprise a plurality of accumulators 310. Each accumulator 310 receives the output of a multiplication engine 308 and adds that output to the previous output of the multiplication engine 308 that relates to the same multiplication operation. Depending on the implementation of the neural network accelerator (NNA) 302, a multiplication engine 308 may not process the same multiplication operation in consecutive cycles and an accumulation buffer 312 may therefore be provided to store partially accumulated outputs for a given operation. The appropriate partial result may be provided by the accumulation buffer 312 to the accumulator 310 at each cycle. The accumulation buffer 312 may be coupled to an output buffer 316, to allow the output buffer 316 to receive output data. The output buffer 316 may be coupled to on-chip memory 328 and/or off-chip memory 304, to which the output data (e.g. intermediate output data to be input to a subsequent operation or layer, or final output data to be output by the graph attention network) stored in the output buffer 316 can be written.

Each multiplication engine 308, together with its respective accumulator 310 and its share of the resources of the accumulation buffer 312, represents a processing element 314 of the NNA 302. Two processing elements 314 are shown in Figure 3 but in general there may be any number. Each processing element 314 may receive a set of values from input buffer 306. By operating on the sets of input values, the processing elements are operable to perform the multiplication operations of the graph attention network layers of a graph attention network. The processing elements 314 of NNA 302 may be independent processing subsystems of the NNA 302 which can operate in parallel.

NNA 302 also comprises other suitable processing logic 318 for implementing different types of operations. For example, NNA 302 may comprise: processing logic for implementing transpose operations; processing logic (e.g. addition logic) for implementing broadcast add operations and addition operations; processing logic (e.g. activation logic) for implementing activation operations; and processing logic for implementing row-wise SoftMax operations. The skilled person would understand how to provide suitable processing logic for implementing these types of operations. For this reason, such processing logic is not shown in any detail Figure 3 for simplicity. It will be evident to a person of skill in the art that this is not an exhaustive list of other suitable processing logic that may be comprised by a neural network accelerator (NNA) 302.

### *Processing system for compressing and/or configuring a graph attention network*

Figure 4 shows a processing system 400 for compressing and/or configuring a graph attention network in accordance with the principles described herein. Processing system 400 comprises at least one processor 404 and a memory 406.

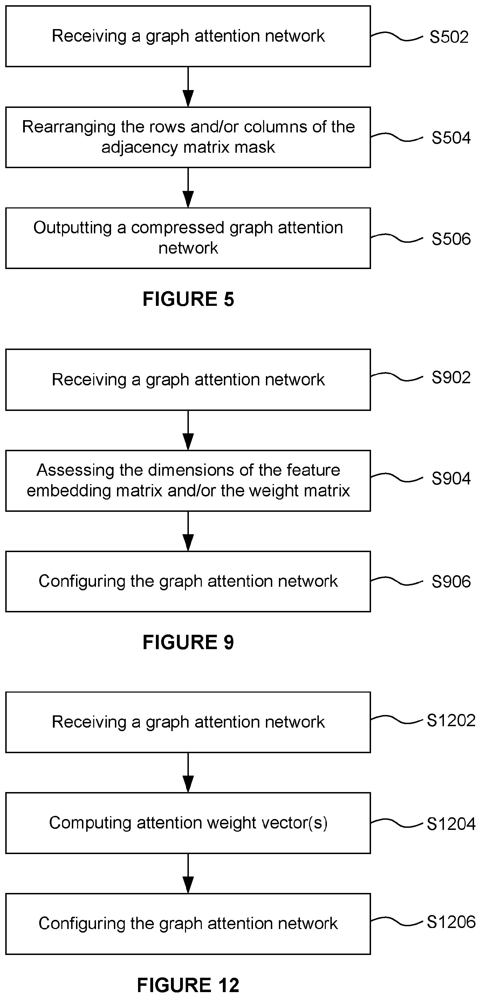

The at least one processor 404 may be implemented in hardware, software, or any combination thereof. The at least one processor 404 may be a microprocessor, a controller or any other suitable type of processor for processing computer executable instructions. The at least one processor 404 can be configured to perform a method of compressing and/or configuring a graph attention network in accordance with the principles described herein (e.g. one or more of the methods as will be described herein with reference to Figures 5, 9 and 12).

Memory 406 is accessible to the at least one processor 404. Memory 406 may be a system memory accessible to the at least one processor 404 over a data bus. The at least one processor 404 may be implemented on a chip (e.g. semiconductor die and/or integrated circuit package) and memory 406 may not be physically located on the same chip (e.g. semiconductor die and/or integrated circuit package) as the at least one processor 404. As such, memory 406 may be referred to as "off-chip memory" and/or "external memory". Alternatively, the at least one processor 404 may be implemented on a chip (e.g. semiconductor die and/or integrated circuit package) and memory 406 may be physically located on the same chip (e.g. semiconductor die and/or integrated circuit package) as the at least one processor 404. As such, memory 406 may be referred to as "on-chip memory" and/or "local memory". Alternatively again, memory 406 shown in Figure 4 may represent any combination of "on-chip" and "off-chip" memories - e.g. one or more "on-chip" memories and one or more "off-chip" memories arranged in a memory hierarchy.

Memory 406 may store computer executable instructions for performing a method of compressing and/or configuring a graph attention network in accordance with the principles described herein (e.g. one or more of the methods as will be described herein with reference to Figures 5, 9 and 12). Memory 406 may store a graph attention network received at the processing system 400 for compressing and/or configuring (e.g. a software model defining that graph attention network, as described herein). Memory 406 may store a compressed and/or configured graph attention network output as a result of the at least one processor executing the computer executable instructions stored by the memory 406. Memory 406 may store that compressed and/or configured graph attention network for subsequent implementation (e.g. at a system for implementing a graph attention network).

Processing system 400 can be used to configure a system 300 for implementing graph attention network. The system 300 shown in Figure 4 may have the same properties as the system 300 described with reference to Figure 3. That is, system 300 may comprise hardware logic 302 for implementing a neural network, said hardware logic comprising a neural network accelerator (NNA) and/or a graphics processing unit (GPU). The at least one processor 404 may configure the hardware logic to implement a compressed and/or configured graph attention network output as a result of the at least one processor performing a method of compressing and/or configuring a graph attention network in accordance with the principles described herein (e.g. one or more of the methods as will be described herein with reference to Figures 5, 9 and 12).

### *Figure 5*

Figure 5 shows a method of compressing a graph attention network. The method of compressing a graph attention network shown in Figure 5 is a computer-implemented method. The processing system 400 for compressing a graph attention network shown in Figure 4 may be configured to perform the method of compressing a graph attention network shown in Figure 5. The method of compressing a graph attention network shown in Figure 5 can be used independently, or can be used in combination with one or both of the methods of configuring a graph attention network shown in Figures 9 and 12, as will be described herein.

In step S502, a graph attention network is received. The received a graph attention network may be defined by a software model. For example, that software model may define the adjacency matrix mask (M) of the received graph attention network, the series of layers of the received graph attention network (e.g. the number of layers, the order of the layers, and the connectivity between those layers), each of the layers in that series in terms of the series of operations it is configured to perform, and the feature embedding matrix (H), weight matrix (W) and pair of attention vectors ($a_1$ and $a_2$) each graph attention network layer will use. The received graph attention network may comprise at least one graph attention network layer arranged to perform the series of operations described herein with reference to Figures 2A to 2D. The received graph attention network may be a trained neural network. That is, as would be understood by the skilled person, the received graph attention network may have previously been trained by iteratively: processing training data in a forward pass; assessing the accuracy of the output of that forward pass; and updating the coefficients (e.g. weight and attention coefficients) of the layers in a backward pass. The graph attention network (e.g. the software model defining that graph attention network) may be received at processing system 400 shown in Figure 4, and stored in memory 406.

The graph attention network received in step S502 comprises a graph attention network layer. That graph attention network layer is arranged to perform an operation in dependence on an adjacency matrix mask (M), as described herein. The adjacency matrix mask (M) comprises a plurality of elements representative of connected graph nodes. In preferred examples, each element representative of connected graph nodes comprises a zero value, such that the adjacency matrix mask (M) comprises a plurality of zero values.

In step S504, the rows and/or columns of the adjacency matrix mask (M) are rearranged (e.g. reordered, or permuted) so as to gather the plurality of elements representative of connected graph nodes into one or more adjacency sub-matrix masks. The one or more adjacency sub-matrix masks have a greater number of elements representative of connected graph nodes per total number of elements of the one or more adjacency sub-matrix masks than the number of elements representative of connected graph nodes per total number of elements of the adjacency matrix mask (M). That is, the one or more adjacency sub-matrix masks have a smaller number of elements representative of non-connected graph nodes per total number of elements of the one or more adjacency sub-matrix masks than the number of elements representative of non-connected graph nodes per total number of elements of the adjacency matrix mask (M). The one or more adjacency sub-matrix masks comprise a subset of the values comprised by the adjacency matrix mask (M). In some examples, each of the one or more adjacency sub-matrix masks may have a greater number of elements representative of connected graph nodes per total number of elements of that adjacency sub-matrix mask than the number of elements representative of connected graph nodes per total number of elements of the adjacency matrix mask (M) - although this need not be the case. The at least one processor 404 shown in Figure 4 can be configured to perform step S504.

In preferred examples, the one or more adjacency sub-matrix masks may have a greater number of zero values per total number of values of the one or more adjacency sub-matrix masks than the number of zero values per total number of values of the adjacency matrix mask (M). That is, the one or more adjacency sub-matrix masks may have a smaller number of "-∞" values per total number of values of the one or more adjacency sub-matrix masks than the number of "-∞" values per total number of values of the adjacency matrix mask (M). In other words, the "zero density" of the one or more adjacency sub-matrix masks, as a whole, may be greater than the "zero density" of the adjacency matrix mask (M). In more preferred examples, the "zero density" of each and every adjacency sub-matrix mask of the one or more adjacency sub-matrix masks may be greater than the "zero density" of the adjacency matrix mask (M) - although this need not be the case.

The rearranging of the rows and/or columns of the adjacency matrix mask (M) performed in step S504 may comprise permuting (e.g. rearranging, or reordering) the rows and/or columns of the adjacency matrix mask (M), and then partitioning (e.g. dividing) the rows and/or columns of the permuted adjacency matrix mask in order to form the one or more adjacency sub-matrix masks. The rearranging of the rows and/or columns of the adjacency matrix mask (M) may be performed in dependence on a hypergraph model, a hypergraph clustering algorithm, a graph partitioning algorithm, a separator vertex set approach or any other suitable approach for gathering like values within an array of values - as would be understood by the skilled person.

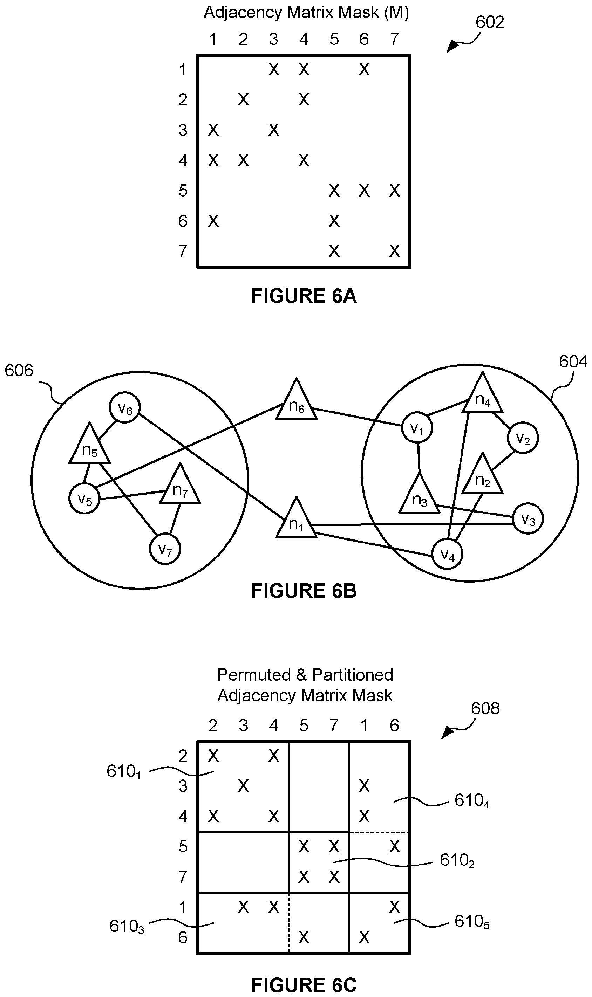

An example of step S504 is explained with reference to Figures 6A to 6C.

Figure 6A shows an example adjacency matrix mask 602 comprising a plurality of elements representative of connected graph nodes. In Figure 6A, elements of the adjacency matrix mask 602 representative of connected graph nodes are marked with an "X", whilst elements of the adjacency matrix mask 602 representative of non-connected graph nodes are not marked. For example, the elements of row 1 positioned in columns 3, 4 and 6 of the adjacency matrix mask 602 are representative of connected graph nodes (and are marked with an "X"), whilst the other elements positioned in row 1 of the adjacency matrix mask 602 are representative of non-connected graph nodes (and are not marked with an "X"). The adjacency matrix mask 602 is a square matrix. As described herein, each element representative of connected graph nodes may comprise a zero (i.e. "0") value, whilst each element representative of non-connected graph nodes may comprise a value representative of negative infinity ("-∞"). The adjacency matrix mask 602 shown in Figure 6A is a 7x7 matrix, and it is to be understood that this is a simplified example describing the connection information between nodes in a graph comprising seven nodes. In more realistic examples, the adjacency matrix mask may be much larger than that shown in Figure 6A, e.g. the adjacency matrix mask may be a 4096x4096 matrix describing the connection information between nodes in a graph comprising 4096 nodes.

The rearranging of the rows and/or columns of the adjacency matrix mask 602 in step S504 may be performed in dependence on a hypergraph model. A hypergraph model can be formed in dependence on the respective row and column position of each of the plurality of elements representative of connected graph nodes within the adjacency matrix mask 602. Figure 6B shows an example hypergraph model corresponding to the adjacency matrix mask 602 shown in Figure 6A.

Figure 6C shows an example rearranged adjacency matrix mask 608 comprising a plurality of adjacency sub-matrix masks. The hypergraph model can be used to convert the adjacency matrix mask 602 into "doubly-bordered block-diagonal matrix form" as shown in the rearranged adjacency matrix mask 608 of Figure 6C. The doubly-bordered block-diagonal matrix form comprises: (i) a plurality of block arrays (e.g. $610_1$ and $610_2$) which are aligned along the diagonal of the rearranged adjacency matrix mask 608, (ii) one or more horizontal border arrays (e.g. $610_3$) which are horizontally aligned across the rearranged adjacency matrix mask 608, and (iii) one or more vertical border arrays (e.g. $610_4$) which are

vertically aligned across the rearranged adjacency matrix mask 608. The corner array $610_5$ is a border array and may be considered to be a horizontal border array and/or a vertical border array. The one or more block arrays and the border arrays are nonoverlapping. In Figure 6C: the block array $610_1$ is an adjacency sub-matrix mask; the block array $610_2$ is an adjacency sub-matrix mask; the horizontal border array $610_3$ comprises two adjacency sub-matrix masks (e.g. the horizontal border array $610_3$ is partitioned as shown by the vertical dotted line to form two adjacency sub-matrix masks having the same number of columns as the two block arrays $610_1$ and $610_2$, respectively); the vertical border array $610_4$ comprises two adjacency sub-matrix masks (e.g. the vertical border array $610_4$ is partitioned as shown by the horizontal dotted line to form two adjacency sub-matrix masks having the same number of rows as the two block arrays $610_1$ and $610_2$, respectively); and the corner array $610_5$ is an adjacency sub-matrix mask. In other words, the rearranged adjacency matrix mask 608 shown in Figure 6C comprises seven adjacency sub-matrix masks.

The rearrangement of the rows and/or columns of the adjacency matrix mask 602 in step S504 may comprise: performing permutations of the rows and of the columns of the adjacency matrix mask 602; and partitioning the rows and columns of the permuted adjacency matrix mask to determine the set of one or more adjacency sub-matrix masks shown in Figure 6C. For example, performing permutations of the rows and of the columns of the adjacency matrix mask 602 in step S504 may comprise performing a symmetric permutation, and the partitioning of the rows of the permuted adjacency matrix mask may be the same as the partitioning of the columns of the permuted adjacency matrix mask.

In the example shown in Figure 6A, the adjacency matrix mask 602 is symmetric, e.g. the adjacency matrix mask 602 may represent an undirected graph. However, in other examples, the adjacency matrix mask may represent a directed graph, and in those examples the adjacency matrix mask might not initially be symmetric. In those examples step S504 may comprise making the adjacency matrix mask symmetric by altering one or more of the values in that adjacency matrix mask. In particular, the rearranging of the rows and/or columns of the adjacency matrix mask, $M$, in step S504 may comprise: determining a symmetric adjacency matrix mask, $M'$, such that, for each of the elements, $M[i,j]$, of the adjacency matrix mask: if $M[i,j]$ is representative of non-connected graph nodes (e.g. "-∞") and $M[j,i]$ is representative of connected graph nodes (e.g. "0"), the corresponding element of the symmetric adjacency matrix mask, $M'[i,j]$, is representative of connected graph nodes (e.g. "0"); and if $M[i,j]$ is representative of connected graph nodes (e.g. "0"), the corresponding element of the symmetric adjacency matrix mask, $M'[i,j]$, is representative of connected graph nodes (e.g. "0"). Then the hypergraph model can be used to rearrange the symmetric adjacency matrix mask. For example, the hypergraph model may be used to reorder and partition the rows and columns of the symmetric adjacency matrix mask into a singly-bordered block-diagonal matrix form which comprises one or more initial border arrays which are either horizontally or vertically aligned across the symmetric adjacency matrix mask. For example, in the singly-bordered block-diagonal matrix form, all of the one or more initial border arrays may be either horizontally or vertically aligned across the symmetric adjacency matrix mask. Then the column reordering may be applied to the rows, or vice versa, to re-arrange the adjacency matrix mask into the doubly-bordered block-diagonal form matrix. In particular, if the one or more initial border arrays are horizontally aligned across the symmetric adjacency matrix mask, the row ordering can be applied to the columns of the singly-bordered block diagonal matrix to thereby determine the adjacency matrix mask in the doubly-bordered block-diagonal matrix form; whereas if the one or more initial border arrays are vertically aligned across the symmetric adjacency matrix mask, the column ordering can be applied to the rows of the singly-bordered block diagonal matrix to thereby determine the adjacency matrix mask in the doubly-bordered block-diagonal matrix form. In an alternative example, the hypergraph model may be used to reorder and partition the rows and columns of the symmetric adjacency matrix mask directly into a doubly-bordered block-diagonal matrix form.

As would be understood by those skilled in the art, hypergraphs may be implemented using a row-net hypergraph model or a column-net hypergraph model. A row-net or a column-net hypergraph model may be used in step S504 to re-arrange the adjacency matrix mask 602 into singly-bordered block-diagonal form matrix, before applying the row/column ordering to the columns/rows to determine the adjacency matrix mask 608 in the doubly-bordered block diagonal matrix form. The same re-ordered adjacency matrix mask 608 will be produced in step S504 whether a row-net or a column-net hypergraph is used.

In the example shown in Figure 6B, the hypergraph model may be a "rownet" hypergraph model. Forming a rownet hypergraph model comprises forming a vertex (denoted $v_1$ to $v_7$ in Figure 6B) representative of each column of the adjacency matrix mask 602 that comprises an element representative of connected graph nodes and forming a net (denoted $n_1$ to $n_7$ in Figure 6B) representative of each row of the adjacency matrix mask 602 that comprises an element representative of connected graph nodes. For each of the plurality of elements representative of connected graph nodes within the adjacency matrix mask 602, the vertex representative of the column of the adjacency matrix mask 602 comprising that element representative of connected graph nodes is connected to the net representative of the row of the adjacency matrix mask 602 comprising that element representative of connected graph nodes. For example, column 4 of the adjacency matrix mask 602 is represented by vertex $v_4$, and row 1 of the adjacency matrix mask 602 is represented by vertex $n_1$. It can be seen in Figure 6A that the element positioned in row 1, column 4 of the adjacency matrix mask 602 is representative of connected graph nodes. As such, by way of example, the vertex $v_4$ is connected to the net $n_1$ in the hypergraph shown in Figure 6B. To form the rownet hypergraph model shown in Figure 6B, the same vertex-net connecting process has been repeated for each of the elements representative of connected graph nodes in the adjacency matrix mask 602 - as will be understood by comparing Figures 6A and 6B.

Put another way, a rownet hypergraph model can be constructed for a matrix M as follows. Let $H = (V,N)$ be a hypergraph $H$ with a vertex set $V$ and a net set $N$. Each column $M(:,i)$ is represented by a vertex $v_i \in V$ and each row $M(j,:)$ is represented by a net $n_j \in N$. A net $n_j$ connects a vertex $v_i$ if there is an element representative of connected graph nodes $M(i, j)$ in the matrix $M$. Vertices connected by net $n_j$ can be denoted as $pins(n_j) = \{v_i \in V | \exists M(j,i) \in M(j,:)\}$.

It is to be understood that, when forming a hypergraph model (e.g. a rownet hypergraph model) for the adjacency matrix mask, a vertex may not be formed for a column of the adjacency matrix mask that does not comprise any elements representative of connected graph nodes (none shown in the Figures), and a net may not be formed for a row of the adjacency matrix mask that does not comprise any elements representative of connected graph nodes (none shown in the Figures).

In another example, the hypergraph model is a "columnnet" hypergraph model. Forming a columnnet hypergraph model comprises forming a net representative of each column of the adjacency matrix mask that comprises an element representative of connected graph nodes and forming a vertex representative of each row of the adjacency matrix mask that comprises an element representative of connected graph nodes. For each of the plurality of elements representative of connected graph nodes within the adjacency matrix mask, the net representative of the column of the adjacency matrix mask comprising that element representative of connected graph nodes is connected to the vertex representative of the row of the adjacency matrix mask comprising that element representative of connected graph nodes.

Put another way, a columnnet hypergraph model can be constructed for a matrix M as follows. Let $H = (V,N)$ be a hypergraph $H$ with a vertex set $V$ and a net set $N$. Each row $M(j,:)$ is represented by a vertex $v_j \in V$ and each column $M(:, i)$ is represented by a net $n_i \in N$. A net $n_i$ connects a vertex $v_j$ if there is an element representative of connected graph nodes $M(i, j)$ in the matrix $M$. Vertices connected by net $n_i$ can be denoted as $pins(n_i) = \{v_j \in V | \exists M(j,i) \in M(j,:)\}$.

It is to be understood that, when forming a hypergraph model (e.g. a columnnet hypergraph model) for the adjacency matrix mask, a net may not be formed for a column of the adjacency matrix mask that does not comprise any elements representative of connected graph nodes (none shown in the Figures), and/or a vertex may not be formed for a row of the adjacency matrix mask that does not comprise any elements representative of connected graph nodes (none shown in the Figures).

Once formed, the hypergraph model can be partitioned. Figure 6B shows a hypergraph model that has been partitioned into two parts 604 and 606. It is to be understood that a hypergraph model may be partitioned into any suitable number of parts. The hypergraph model can be partitioned in dependence on a load balancing constraint that aims to minimise the number of nets that are connected to vertices within more than one of part - e.g. that aims to minimise the number of rows of the border array. The rows and/or columns of the adjacency matrix mask can be rearranged in dependence on the partitioned hypergraph model so as to gather the plurality of elements representative of connected graph nodes of the adjacency matrix mask into the one or more adjacency sub-matrix masks.

The elements representative of connected graph nodes that are positioned in the rows of the adjacency matrix mask 602 that are represented by nets that are connected to vertices representative of columns of the adjacency matrix mask 602 within a single part of the partitioned hypergraph model can be gathered into one or more diagonal block arrays in the singly-bordered block-diagonal form matrix. When the row ordering is then applied to the columns of the singly-bordered block diagonal form matrix, the diagonal block arrays, e.g. $610_1$ and $610_2$, and the vertical border array, e.g. $610_4$, are formed in the doubly-bordered block-diagonal form matrix. For example, in Figure 6B, part 604 leads to the formation of diagonal block array $610_1$ shown in Figure 6C. Some of the elements representative of connected graph nodes that are positioned in the rows of the adjacency matrix mask that are represented by nets that are connected only to vertices representative of columns of the adjacency matrix mask within part 604 are gathered into diagonal block array $610_1$. For example, in Figure 6B, nets $n_2$, $n_3$ and $n_4$ are connected only to vertices within part 604 - i.e. respectively, vertices $v_2$ and $v_4$; vertices $v_1$ and $v_3$; and vertices $v_1$, $v_2$ and $v_4$. As such, the rows and columns of the adjacency matrix mask 602 can be rearranged such that some of the elements representative of connected graph nodes that are positioned in rows 2, 3 and 4 are gathered into diagonal block array $610_1$ - as shown in Figure 6C. In this case, it is the elements representative of connected graph nodes that are positioned in rows 2, 3 and 4, and columns 2, 3 and 4, that are gathered into diagonal block array $610_1$. In an analogous way: part 606 leads to the formation of diagonal block array $610_2$ shown in Figure 6C, such that the rows and columns of the adjacency matrix mask 602 can be rearranged such that some of the elements representative of connected graph nodes that are positioned in rows 5 and 7 are gathered into diagonal block array $610_2$. In this case, it is the elements representative of connected graph nodes that are positioned in rows 5 and 7, and columns 5 and 7, that are gathered into diagonal block array $610_2$. Applying the row ordering to the columns of the singly-bordered block diagonal matrix means that the other elements representative of connected graph nodes that are positioned in the rows of the adjacency matrix mask that are represented by nets that are connected to vertices representative of columns of the adjacency matrix mask within a single part are gathered into the vertical border array, e.g. $610_4$. In this case, it is the elements representative of connected graph nodes that are positioned in rows 2, 3, 4, 5 and 7, and columns 1 and 6, that are gathered into vertical border array $610_4$ - as will be understood from the following paragraph.

The elements representative of connected graph nodes that are positioned in the rows of the adjacency matrix mask 602 that are represented by nets that are connected to vertices representative of columns of the adjacency matrix mask 602 within more than one part of the partitioned hypergraph model can be gathered into a horizontal border array in the singly-bordered block-diagonal form matrix. When the row ordering is then applied to the columns of the singly-bordered block diagonal matrix, the horizontal and vertical border arrays, e.g. $610_3$, $610_4$ and $610_5$, are formed in the doubly-bordered block-diagonal matrix form. For example, in Figure 6B, net $n_1$ is connected to vertices within parts 604 and 606 - i.e. vertices $v_3$, $v_4$ and $v_6$. As shown in Figure 6B, net $n_6$ is also connected to vertices within more than one part. As such, the rows and columns of the adjacency matrix mask 602 are rearranged such that the elements representative connected graph nodes that are positioned in rows 1 and 6 are gathered into the horizontal border arrays $610_3$ and $610_5$. Applying the row ordering to the columns of the singly-bordered block diagonal matrix form causes the vertical border array, e.g. $610_4$, to be formed in the doubly-bordered block-diagonal matrix form - e.g. such that the elements representative of connected graph nodes that are positioned in columns 1 and 6 are gathered into the vertical border array $610_4$. As described above, the reordering and partitioning of the rows of the permuted and partitioned adjacency matrix mask 608 is the same as the reordering and partitioning of the columns of the permuted and partitioned adjacency matrix mask 608.

It is to be understood that any row or column of the adjacency matrix mask 602 that does not include any elements representative of connected graph nodes (e.g. any row or column for which a net or vertex, as appropriate, was not formed when forming the hypergraph model) can be rearranged (e.g. arbitrarily) to any row or column position within the rearranged adjacency matrix mask 608. Alternatively, a further "empty" block array (not shown in the Figures) may be formed into which elements of the rows and columns that do not include any elements representative of connected graph nodes can be gathered. Said "empty" block array may be used in an equivalent manner as the "non-empty" block arrays during the future computations performed in the compressed graph attention network layer (as will be described further herein), or not used in (e.g. discarded from) the future computations performed in the compressed graph attention network layer.

Put another way, a K-way vertex partition of a hypergraph model H can be defined as $\Pi(H) = \{V_1, V_2, \cdots V_K\}$ consisting of mutually disjoint and exhaustive subsets of vertices $V_m \in V$ where $V_m \cap V_n = \Phi$ if $m \neq n$ and $V_m \neq \Phi$ for all $V_m \in \Pi(H)$ such that $\cup_{V_m \in \Pi(H)} V_m = V$. Under a partition $\Pi(H)$, the set of parts that are connected by a net $n_j$ can be defined as the connectivity set $\Lambda(n_j)$ and the number of parts that are connected by net $n_j$ can be defined as connectivity $\lambda(n_j) = |\Lambda(n_j)|$. A net $n_j$ is said to be cut (external) if it connects to multiple parts (i.e., $\lambda(n_j) > 1$) and uncut (internal) otherwise (i.e., $\lambda(n_j) = 1$). A net $n_j$ is an internal net of a part $V_m$ if it connects only vertices in part $V_m$ (i.e., $\Lambda(n_j) = V_m$ and $pins(n_j) = V_m$). The set of internal nets of a part $V_m$ is denoted as $N_m$, and the set of external nets of a partition $\Pi(H)$ is denoted as $N_S$. Therefore, a K-way vertex partition $\Pi(H)$ can also induces a $(K + 1)$-way partition $\{N_1, N_2, \cdots N_K; N_S\}$ on the net set N. Here, $N_S$ is a net separator whose removal gives K disconnected vertex parts $V_1, V_2, \cdots V_K$ as well as K disconnected net parts $N_1, N_2, \cdots N_K$.

A hypergraph model H can be partitioned with the objective of minimizing the number of cut nets under the load balancing constraint $W(V_m) \leq W_{avg}(1 + \varepsilon), \forall V_m \in \Pi(H)$ where the weight of a part $V_m$ is $W(V_m) = \Sigma_{v_i \in V_m} w(v_i)$, the average part weight is $W_{avg} = \Sigma_{v_i \in V} w(v_i) / K$, and the maximum allowed imbalance ratio is $\varepsilon$. The weight of each vertex $v_i$ can be determined as $w(v_i) = 1$. The aim of the load-balancing constraint may be to produce equal-sized block arrays, e.g. which can each fit in a buffer of a neural network accelerator (NNA).

The K-way partition $\Pi(H) = \{V_1, V_2, \cdots V_K\} = \{N_1, N_2, \cdots N_k; N_S\}$ can induce a partial ordering on the rows and columns of the adjacency matrix mask M. In this ordering, in examples where the hypergraph model is formed as a rownet hypergraph model, the columns associated with the vertices in $V_{m+1}$ can be ordered after the columns associated with the vertices in $V_m$ for $m = 1,2, \cdots K - 1$. Similarly, the rows represented with the internal nets $N_{m+1}$ of part $V_{m+1}$ can be ordered after the rows associated with the internal nets $N_m$ of part $V_m$ for $m = 1,2, \cdots K - 1$. The rows associated with the external nets $N_S$ are ordered last as the border array. In other words, a vertex $v_i \in V_m$ means permuting column $M(:,i)$ to the mth column slice, an internal net $n_j \in N_m$ means permuting row $M(j,:)$ to the mth row slice and an external net $n_j \in N_S$ means permuting row $M(j,:)$ to border matrix. Then, the row ordering can be applied to the columns of the singly-bordered block diagonal matrix to thereby determine the adjacency matrix mask in the doubly-bordered block-diagonal matrix form.

It will also be appreciated, e.g. by considering Figures 6B and 6C, that a rearranged matrix in the doubly-bordered block diagonal matrix form could be obtained directly from a partitioned hypergraph model - i.e. without first forming a rearranged matrix in the singly-bordered block diagonal matrix form. For example, nets $n_1$ and $n_6$ are connected to vertices in more than one part of the partitioned hypergraph model - and so the horizontal and vertical border arrays can be formed using rows 1 and 6, and columns 1 and 6, respectively. Nets $n_2$, $n_3$ and $n_4$ are connected to vertices within a single part (i.e. part 604) - and so a first diagonal block array (i.e. $610_1$) can be formed using rows 2, 3 and 4, and columns 2, 3 and 4. Nets $n_5$ and $n_7$ are connected to vertices within a single part (i.e. part 606) - and so a second diagonal block array (i.e. $610_2$) can be formed using rows 5 and 7, and columns 5 and 7.

As described herein, the rearranged adjacency matrix mask 608 comprises a plurality of adjacency sub-matrix masks. It can be appreciated that the rearranged adjacency matrix mask 608 shown in Figure 6C can be formed by rearranging (e.g. reordering) the rows and columns of the adjacency matrix mask 602 shown in Figure 6A. That is, Figure 6C shows the 7 rows and 7 columns of the adjacency matrix mask 602 in a different order. For example, column 2 of the adjacency matrix mask 602, having elements representative of connected graph nodes in rows 2 and 4, has been shifted "left" and is now the first column in rearranged adjacency matrix mask 608. In another example, row 6 of adjacency matrix mask 602, having elements representative of connected graph nodes in columns 1 and 5, has been shifted "down" and is now the final row in rearranged adjacency matrix mask 608. By rearranging the rows and columns as described herein, the plurality of elements representative of connected graph nodes of the adjacency matrix mask are gathered into the plurality of adjacency sub-matrix masks - as identified above - comprised by the rearranged adjacency matrix mask 608. The elements of the rearranged adjacency matrix mask 608 that are not comprised by any of the adjacency sub-matrix masks identified above are exclusively elements representative of non-connected graph nodes.

In Figure 6A, the adjacency matrix mask 602 comprises 17 elements representative of connected graph nodes, and a total of 49 (i.e. 7x7) elements. In Figure 6C, the set of adjacency sub-matrix masks identified above also comprises 17 elements representative of connected graph nodes, but in a total of 37 (i.e. (3x3)+(2x2)+(2x3)+(2x2)+(3x2)+(2x2)+(2x2)) elements. Thus, the one or more adjacency sub-matrix masks have a greater number of elements (17) representative of connected graph nodes per total number of elements (37) of the one or more adjacency sub-matrix masks than the number of elements representative of connected graph nodes (17) per total number of elements (49) of the adjacency matrix mask 602 - e.g. where 17/37 > 17/49.

As will be understood by assessing Figure 6C, some of the adjacency sub-matrix masks identified above, when considered alone, may have a smaller number of elements representative of connected graph nodes per total number of elements of that adjacency sub-matrix mask than the number of elements (17) representative of connected graph nodes per total number of elements (49) of the adjacency matrix mask 602. For example, the lower-most adjacency sub-matrix mask comprised by the vertical border array $610_4$ comprises 1 element representative of connected graph nodes, and a total of 4 (i.e. 2x2) elements - e.g. where 1/4 < 17/49. The same can be said for the right-most adjacency sub-matrix mask comprised by the horizontal border array 610s. This is evidence that it is not necessary for each and every adjacency sub-matrix mask to have a greater number of elements representative of connected graph nodes per total number of elements of that adjacency sub-matrix mask than the number of elements representative of connected graph nodes per total number of elements of the adjacency matrix mask 602. That said, in other (more realistic) examples, it may well be the case that each and every adjacency sub-matrix mask has a greater number of elements representative of connected graph nodes per total number of elements of that adjacency sub-matrix mask than the number of elements representative of connected graph nodes per total number of elements of the adjacency matrix mask 602.

It is to be understood that the use of a hypergraph model in step S504 is not essential. Other methods exist for rearranging the rows and/or columns of the adjacency matrix mask 602 so as to gather the plurality of elements representative of connected graph nodes of the adjacency matrix mask into the one or more adjacency sub-matrix masks. For example, a hypergraph clustering algorithm or graph partitioning algorithm could alternatively be used for this purpose. As another example, the rearranging of the rows and/or columns of the adjacency matrix mask in step S504 could be performed by finding vertex separators on a net intersection graph of the hypergraph model. A person skilled in the art would understand how these different techniques could be used to rearrange the rows and/or columns of the adjacency matrix mask in step S504.

As described above, if the received adjacency matrix mask is not a symmetric matrix (e.g. if the received adjacency matrix mask represents the connectivity of the nodes of a directed graph) then some of the values of the adjacency matrix mask may have been altered to make it symmetric, so that it could be rearranged into the doubly-bordered block-diagonal matrix form. In these examples, step S504 may further comprise: when the rows and columns of the adjacency matrix mask have been reordered and the adjacency sub-matrix masks have been formed, if a value of the adjacency matrix mask was altered to determine the symmetric adjacency matrix mask, returning that value to a value representative of non-connected graph nodes (e.g. "-∞") in the adjacency matrix mask in the doubly-bordered block-diagonal matrix form. Alternatively, these altered values representative of connected graph nodes can be retained, with the graph attention network layer being configured to remove any contributions derived from those altered values after the matrix multiplications have been performed.

Returning to Figure 5, in step S506, a compressed graph attention network is output comprising a compressed graph attention network layer arranged to perform a compressed operation in dependence on the one or more adjacency sub-matrix masks formed in step S504. The compressed graph attention network layer is arranged to perform the same type of operation that the received graph attention network layer is arranged to perform. That said, the compressed graph attention network layer is arranged to perform that type of operation in dependence on the one or more adjacency sub-matrix masks formed in step S504, e.g. rather than being arranged to perform that type of operation in dependence on the adjacency matrix mask (M). In other words, only the subset of the values of the adjacency matrix mask (M) that are comprised by the one or more adjacency sub-matrix masks formed in step S504 may be used by the compressed graph attention network layer. The other values of the adjacency matrix mask (M) that are not comprised by one or more adjacency sub-matrix masks formed in step S504 are not used by the compressed graph attention network layer. Said other values are exclusively values representative of non-connected graph nodes (e.g. "-∞" values). As described herein with references to Figures 2A to 2D, a "-∞" value in a (row, column) position in the adjacency matrix mask (M) causes the intermediate matrix (A) to comprise a zero (i.e. "0") value in the corresponding (row, column) position (i.e. because "-∞" -> "0" during a SoftMax operation). The received graph attention network layer is typically arranged to multiply the intermediate matrix (A) by the intermediate matrix (HW). An element-wise multiplication between a zero value in the intermediate matrix (A) (i.e. caused by a "-∞" value in the adjacency matrix mask (M)) and a value of the intermediate matrix (HW) would inevitably result in a zero output value - regardless of the value of that value of the intermediate matrix (HW). As such, no "information" is lost by the compressed layer not using said other "-∞" values of the adjacency matrix mask (M) that are not comprised by one or more adjacency sub-matrix masks formed in step S504. In other words, the compression is lossless compression. That is, the method of compressing a graph attention network described herein is a method of losslessly compressing a graph attention network. In particular, the graph attention network layer is losslessly compressed. As such, the graph attention network is losslessly compressed.

As described herein, the same adjacency matrix mask (M) is used by each of the graph attention network layers of a graph attention network. That is, the graph attention network received in step S502 may comprise a plurality of graph attention network layers, each of said graph attention network layers being arranged to perform a respective operation in dependence the same adjacency matrix mask (M). As such, the compressed graph attention network output in step S506 may comprise a plurality of compressed graph attention network layers, each compressed graph attention network layer being arranged to perform a respective compressed operation in dependence on the same one or more adjacency sub-matrix masks formed in step S504. In other words, step S504 need only be performed once, even for a received graph attention network comprising a plurality of graph attention network layers that are each to be compressed.

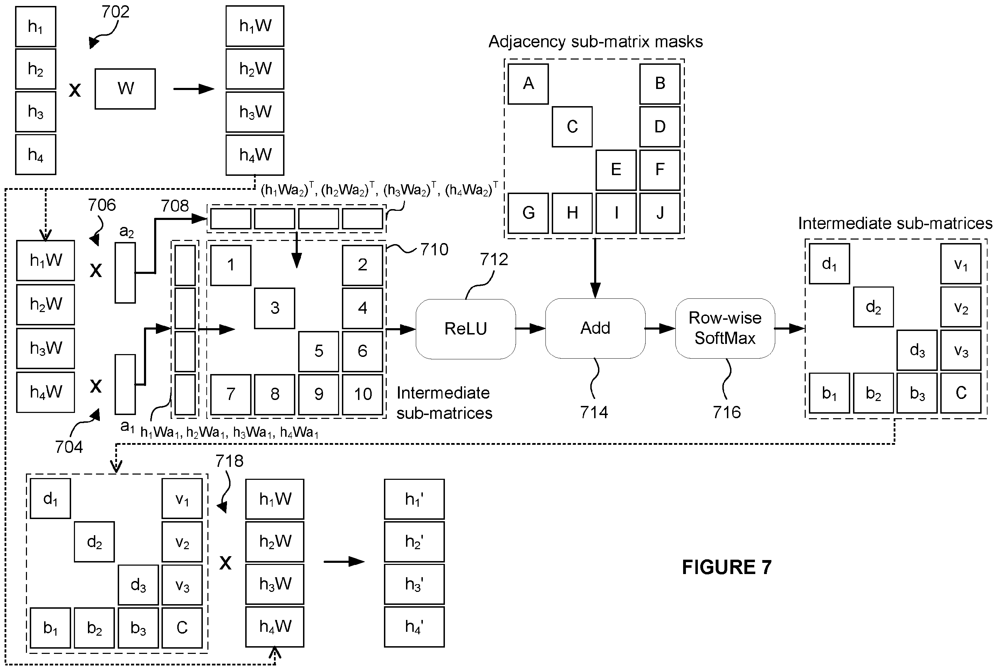

Step S506 is explained further with reference to Figure 7 - which illustrates a compressed series of operations that may be performed by a graph attention network layer of a graph attention network compressed by performing the method shown in Figure 5. The compressed series of operations illustrated in Figure 7 can be performed in dependence on the same inputs as the series of operations illustrated in Figures 2A to 2D. That is, a compressed graph attention network layer can be configured to perform a compressed series of operations in dependence on one or more feature embedding sub-matrices ($h_{1-p}$) formed in dependence on the feature embedding matrix (H) of the graph attention network layer received in step S502, the weight matrix (W) of the graph attention network layer received in step S502, the pair of attention vectors ($a_1$ and $a_2$) of the graph attention network layer received in step S502, and the one or more adjacency sub-matrix masks formed in step S504.

For ease of understanding, the plurality of adjacency sub-matrix masks A to J are shown arranged in double-bordered block-diagonal (DB) form. This is to represent that the plurality of adjacency sub-matrix masks A to J have been formed by rearranging the adjacency matrix mask (M) into double-bordered block-diagonal (DB) form - e.g. according to the principles described herein with reference to Figures 6A to 6C. It is to be understood that, whilst this is a preferred implementation, is not essential for implementing a compressed series of operations to have rearranged the adjacency matrix mask (M) into double-bordered block-diagonal (DB) form - as will be explained further, below.

The one or more feature embedding sub-matrices ($h_{1-p}$) can be formed by permuting (e.g. rearranging, or reordering) and partitioning (e.g. dividing) the rows of the feature embedding matrix (H) of the graph attention network layer received in step S502 to match the permutation and partitioning of the columns of the adjacency matrix mask (M) performed in step S504. That is, the rows of the feature embedding matrix (H) may be rearranged so as to correspond with the rearranged columns of the rearranged adjacency matrix mask. To give a simple illustrative example, if the positions of columns 2 and 3 of the adjacency matrix mask were swapped when forming the rearranged adjacency matrix mask, the positions of rows 2 and 3 of the feature embedding matrix (H) would be swapped when forming the feature embedding sub-matrices. The re-arranged feature embedding matrix can then be partitioned according to the column partitioning of the partitioned adjacency matrix mask. For example, referring to Figure 7, the plurality of feature embedding sub-matrices $h_1$, $h_2$, $h_3$ and $h_4$ may comprise a number of rows equal to the number of columns comprised by, respectively: the plurality of adjacency sub-matrix masks A and G; C and H; E and I; and B, D, F and J. That is: feature embedding sub-matrix $h_1$ may have a number of rows equal to the number of columns of adjacency sub-matrix masks A and G; feature embedding sub-matrix $h_2$ may have a number of rows equal to the number of columns of adjacency sub-matrix masks C and H; feature embedding sub-matrix $h_3$ may have a number of rows equal to the number of columns of adjacency sub-matrix masks E and I; and feature embedding sub-matrix $h_4$ may have a number of rows equal to the number of columns of adjacency sub-matrix masks B, D, F and J. The columns of the feature embedding matrix (H) of the graph attention network layer received in step S502 need not be permuted, nor partitioned, when forming the one or more feature embedding sub-matrices ($h_{1-p}$). Likewise, the rows and the columns of the weight matrix (W), and the pair of attention vectors ($a_1$ and $a_2$), of the graph attention network layer received in step S502 need not be permuted, nor partitioned.

The first operation in the compressed series of operations may be a multiplication operation 702 (e.g. a matrix multiplication operation 702). The multiplication operation 702 comprises multiplying each of the one or more feature embedding sub-matrices ($h_{1-p}$) by the weight matrix (W). For example, referring to Figure 7, the multiplication operation 702 may comprise: multiplying feature embedding sub-matrix $h_1$ by the weight matrix (W); multiplying feature embedding sub-matrix $h_2$ by the weight matrix (W); multiplying feature embedding sub-matrix $h_3$ by the weight matrix (W); and multiplying feature embedding sub-matrix $h_4$ by the weight matrix (W). The multiplication operation 702 outputs one or more intermediate sub-matrices ($h_{1-pW}$). For example, referring to Figure 7, the multiplication operation 702 may output a plurality of intermediate sub-matrices: $h_1W$ to $h_4W$.

Next, the compressed series of operations comprises a multiplication operation 704 and a multiplication operation 706. Both operations 704 and 706 may be referred to as matrix-vector multiplication operations. The multiplication operation 704 comprises multiplying each of the one or more intermediate sub-matrices ($h_{1-pW}$) by the first attention vector ($a_1$). For example, referring to Figure 7, the multiplication operation 704 may comprise: multiplying intermediate sub-matrix $h_1W$ by the first attention vector ($a_1$); multiplying intermediate sub-matrix $h_2W$ by the first attention vector ($a_1$); multiplying intermediate sub-matrix $h_3W$ by the first attention vector ($a_1$); and multiplying intermediate sub-matrix $h_4W$ by the first attention vector ($a_1$). The multiplication operation 704 outputs one or more intermediate column sub-vectors ($h_{1-p}Wa_1$). For example, referring to Figure 7, the multiplication operation 704 may output a plurality of intermediate column sub-vectors: $h_1Wa_1$ to $h_4Wa_1$. The multiplication operation 706 comprises multiplying each of the one or more intermediate sub-matrices ($h_{1-pW}$) by the second attention vector ($a_2$). For example, referring to Figure 7, the multiplication operation 704 may comprise: multiplying intermediate sub-matrix $h_1W$ by the second attention vector ($a_2$); multiplying intermediate sub-matrix $h_2W$ by the second attention vector ($a_2$); multiplying intermediate sub-matrix $h_3W$ by the second attention vector ($a_2$); and multiplying intermediate sub-matrix $h_4W$ by the second attention vector ($a_2$). The multiplication operation 706 outputs one or more intermediate column sub-vectors ($h_{1-p}Wa_2$). For example, referring to Figure 7, the multiplication operation 706 may output a plurality of intermediate column sub-vectors: $h_1Wa_2$ to $h_4Wa_2$.

Next, the compressed series of operations comprises a transpose operation 708. The transpose operation 708 comprises transposing each of the one or more intermediate column sub-vectors ($h_{1-p}Wa_2$). For example, referring to Figure 7, the transpose operation 708 may comprise transposing each of the plurality of intermediate column sub-vectors: $h_1Wa_2$ to $h_4Wa_2$. The transpose operation 208 outputs one or more intermediate row sub-vectors ($(h_{1-p}Wa_2)^T$). For example, referring to Figure 7, the transpose operation 708 may output a plurality of intermediate row sub-vectors $(h_1Wa_2)^T$ to $(h_4Wa_2)^T$.

Next, the compressed series of operations comprises a compressed broadcast add operation 710. The compressed broadcast add operation 710 comprises broadcast adding pairs of the one or more intermediate column sub-vectors ($h_{1-p}Wa_1$) and the one or more intermediate row sub-vectors ($(h_{1-p}Wa_2)^T$). The compressed broadcast add operation 710 is performed in order to form one or more intermediate sub-matrices, each of said one or more intermediate sub-matrices having the same dimensions as a respective one of the adjacency sub-matrix masks formed in step S504. Said one or more intermediate sub-matrices may be referred to as one or more intermediate "attention" sub-matrices. For example, referring to Figure 7, the compressed broadcast add operation 710 may comprise broadcast adding the intermediate column sub-vector ($h_1Wa_1$) and the intermediate row sub-vector ($(h_1Wa_2)^T$) to form the intermediate "attention" sub-matrix labelled 1 in Figure 7. This can be achieved by: forming a first intermediate sub-matrix comprising a number of columns equal to the number of columns of the intermediate row sub-vector ($(h_1Wa_2)^T$), each column comprising the intermediate column sub-vector ($h_1Wa_1$); forming a second intermediate matrix comprising a number of rows equal to the number of rows of the intermediate column sub-vector ($h_1Wa_1$), each row comprising the intermediate row sub-vector ($(h_1Wa_2)^T$); and summing said first intermediate matrix and said second intermediate matrix in order to form the intermediate "attention" sub-matrix 1. The intermediate "attention" sub-matrix 1 has the same dimensions as the adjacency sub-matrix mask labelled A in Figure 7. In another example, referring to Figure 7, the compressed broadcast add operation 710 may comprise broadcast adding the intermediate column sub-vector ($h_1Wa_1$) and the intermediate row sub-vector ($(h_4Wa_2)^T$) to form the intermediate "attention" sub-matrix labelled 2 in Figure 7. This can be achieved by: forming a first intermediate sub-matrix comprising a number of columns equal to the number of columns of the intermediate row sub-vector ($(h_4Wa_2)^T$), each column comprising the intermediate column sub-vector ($h_1Wa_1$); forming a second intermediate matrix comprising a number of rows equal to the number of rows of the intermediate column sub-vector ($h_1Wa_1$), each row comprising the intermediate row sub-vector ($(h_4Wa_2)^T$); and summing said first intermediate matrix and said second intermediate matrix in order to form the intermediate "attention" sub-matrix 2. The intermediate "attention" sub-matrix 2 has the same dimensions as the adjacency sub-matrix mask labelled 8 in Figure 7. The intermediate "attention" sub-matrices labelled 3 to 10 in Figure 7 can be formed in an analogous way using pairs of the intermediate column sub-vectors ($h_{2-4}Wa_1$) and the intermediate row sub-vectors ($(h_{1-4}Wa_2)^T$). Each of the intermediate "attention" sub-matrices labelled 3 to 10 in Figure 7 has the same dimensions as the respective one of adjacency sub-matrix masks labelled C to J in Figure 7.

It will be appreciated that the compressed broadcast add operation 710 (e.g. as shown in Figure 7) is less computationally expensive than the broadcast add operation 210 (e.g. as shown in Figure 2B). This is because the one or more intermediate "attention" sub-matrices (e.g. 1 to 10, in Figure 7) comprise a subset of the values of the intermediate "attention" matrix (e.g. B, in Figure 2B) - and so the compressed broadcast add operation 710 is required to perform fewer value additions than the broadcast add operation 210. The values of the intermediate "attention" matrix (e.g. B, in Figure 2B) that are not present in the intermediate "attention" sub-matrices (e.g. 1 to 10, in Figure 7) are those that would have, in the series of operations shown in Figure 2B, subsequently had a "$-\infty$" value of the adjacency matrix mask (M) added to them during the addition operation 214, been converted to a "0" value through the SoftMax operation 216, and then been involved in a multiply-by-zero operation during multiplication operation 218 that inevitably leads to a zero output - and thus no "information" is lost by the compressed broadcast add operation 710 not forming these values of the intermediate "attention" matrix (e.g. B, in Figure 2B). In other words, the compression is lossless compression. That is, the method of compressing a graph attention network described herein is a method of losslessly compressing a graph attention network. In particular, the graph attention network layer is losslessly compressed. As such, the graph attention network is losslessly compressed.

Next, the compressed series of operations may comprise a compressed activation operation 712. The compressed activation operation 712 can be performed on each of the one or more intermediate "attention" sub-matrices. The compressed activation operation 712 may comprise applying an activation function, such as a sigmoid function or step function, to each of the values in the one or more intermediate "attention" sub-matrices. The compressed activation operation 712 may comprise applying a rectified linear (ReLU) activation function to each of the values in the one or more intermediate "attention" sub-matrices. The compressed activation operation 712 outputs one or more intermediate sub-matrices (not shown in Figure 7). Each of said one or more intermediate sub-matrices has the same dimensions as a respective one of the adjacency sub-matrix masks formed in step S504.

It will be appreciated that the compressed activation operation 712 (e.g. as shown in Figure 7) is less computationally expensive than the activation operation 212 (e.g. as shown in Figure 2B). This is because the one or more intermediate "attention" sub-matrices (e.g. 1 to 10, in Figure 7) comprise a subset of the values of the intermediate "attention" matrix (e.g. B, in Figure 2B) - and so the compressed activation operation 712 requires the activation function to be applied to fewer values than the activation operation 212.

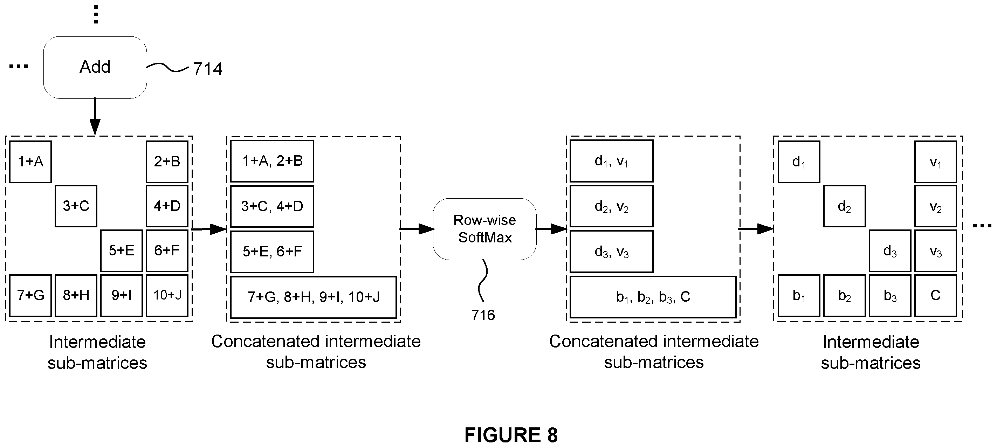

Next, the compressed series of operations comprises a compressed addition operation 714 (e.g. a matrix addition operation 714). The compressed addition operation 714 may comprise adding each of the one or more intermediate sub-matrices output by the compressed activation operation 712 to a respective one of the adjacency sub-matrix masks formed in step S504. For example, referring to Figure 7: the intermediate sub-matrix output after performing the activation operation 712 on intermediate "attention" sub-matrix 1 can be added to the adjacency sub-matrix mask A; the intermediate sub-matrix output after performing the activation operation 712 on intermediate "attention" sub-matrix 2 can be added to the adjacency sub-matrix mask B; and so on, through to the intermediate sub-matrix output after performing the activation operation 712 on intermediate "attention" sub-matrix 10 can be added to the adjacency sub-matrix mask J. The compressed addition operation 714 can output one or more intermediate sub-matrices (not shown in Figure 7, shown in Figure 8), each of said one or more intermediate sub-matrices having the same dimensions as a respective one of the adjacency sub-matrix masks formed in step S504.

It will be appreciated that the compressed addition operation 714 (e.g. as shown in Figure 7) is less computationally expensive than the addition operation 214 (e.g. as shown in Figure 2B). This is because the one or more intermediate sub-matrices and the one or more adjacency sub-matrix masks added together when performing the compressed addition operation 714 comprise a subset of the values of the intermediate matrix and the adjacency matrix mask (M) added together when performing the addition operation 214 - and so the compressed addition operation 714 requires fewer value additions to be performed than the addition operation 214. Again, as will be understood from the preceding paragraphs, the values of the matrix output from the addition operation 214 that are not present in the one or more intermediate sub-matrices output from the compressed addition operation 714 are exclusively "-∞" values that would have, in the series of operations shown in Figure 2B, subsequently been converted to a "0" value through the SoftMax operation 216, and then been involved in a multiply-by-zero operation during multiplication operation 218 that inevitably leads to a zero output - and thus no "information" is lost by the compressed addition operation 714 not forming these values. In other words, the compression is lossless compression. That is, the method of compressing a graph attention network described herein is a method of losslessly compressing a graph attention network. In particular, the graph attention network layer is losslessly compressed. As such, the graph attention network is losslessly compressed.

Next, the compressed series of operations comprises a compressed row-wise SoftMax operation 716. The compressed row-wise SoftMax operation 716 can be performed in dependence on the one or more intermediate sub-matrices output from the compressed addition operation 714. The compressed row-wise SoftMax operation 716 may comprise scaling the values in each of the rows of each of the one or more intermediate sub-matrices such that the sum of the scaled values in each row equals 1. The compressed row-wise SoftMax operation 716 may output one or more intermediate sub-matrices, each of which has the same dimensions as a respective one of the adjacency sub-matrix masks formed in step S504. The one or more intermediate sub-matrices output by the compressed row-wise SoftMax operation 716 comprise a subset of the values of the intermediate matrix (A) that would have been formed by performing the row-wise SoftMax operation 216. As such, said one or more intermediate sub-matrices may be referred to as one or more intermediate "adjacency-attention" sub-matrices. This is because the one or more intermediate adjacency-attention sub-matrices are representative of the adjacency information (e.g. as derived from the one or more adjacency sub-matrix masks described herein) and the attention information (e.g. as derived from the series of operations 702 to 712 described herein) of the graph attention network layer (e.g. the compressed graph attention network layer).

In examples, such as the example shown in Figure 7, where at least one set of two or more of the intermediate sub-matrices output from the compressed addition operation 714 comprise a subset of values from the same rows of the intermediate matrix (ReLU(B)+M) that would have been output from the addition operation 214, said at least one set of two or more intermediate sub-matrices can be row-wise concatenated (e.g. joined together) so as to form one or more concatenated intermediate sub-matrices. The compressed row-wise SoftMax operation 716 can be performed on said one or more concatenated intermediate sub-matrices, so as to output one or more concatenated intermediate sub-matrices. Prior to the next compressed operation in the series of compressed operations, said one or more concatenated intermediate sub-matrices can be row-wise split (e.g. the concatenation can be "undone") so as to form a plurality of intermediate submatrices, each of which has the same dimensions as a respective one of the adjacency sub-matrix masks formed in step S504.

Figure 8 illustrates an example of the use of concatenation and row-wise split operations within the compressed series of operations illustrated in Figure 7. In this example, the one or more intermediate sub-matrices output from the compressed addition operation 714 comprises ten intermediate sub-matrices - labelled in Figure 8 as 1+A, 2+B, 3+C, 4+D, 5+E, 6+F, 7+G, 8+H, 9+I and 10+J. Four sets of two or more of these intermediate sub-matrices comprise a subset of values from the same four sets of rows of the intermediate matrix (ReLU(B)+M) that would have been output from the addition operation 214. For example, intermediate sub-matrices 1+A and 2+B both comprise a subset of values from the same set of rows of the intermediate matrix (ReLU(B)+M). The same can be said of the following sets of intermediate sub-matrices: 3+C and 4+D; 5+E and 6+F; and 7+G, 8+H, 9+I and 10+J. Each of these sets of intermediate sub-matrices can be concatenated (e.g. joined) so as to form four concatenated intermediate sub-matrices - labelled in Figure 8 as: 1+A, 2+B; 3+C, 4+D; 5+E, 6+F; and 7+G, 8+H, 9+I, 10+J. The compressed row-wise SoftMax operation 716 can be performed on each of said four concatenated intermediate sub-matrices. In this example, the compressed row-wise SoftMax operation 716 comprises scaling the values in each of the rows of each of the concatenated intermediate sub-matrices such that the sum of the scaled values in each row equals 1. The compressed row-wise SoftMax operation 716 shown in Figure 8 outputs four concatenated intermediate sub-matrices, labelled as: $d_1$, $v_1$; $d_2$, $v_2$; $d_3$, $v_3$; and $b_1$, $b_2$, $b_3$, C. Said four concatenated intermediate sub-matrices can be row-wise split (e.g. the concatenation can be "undone") to form ten intermediate sub-matrices - labelled as $d_1$, $v_1$, $d_2$, $v_2$, $d_3$, $v_3$, $b_1$, $b_2$, $b_3$ and C. Each of said intermediate sub-matrices has the same dimensions as a respective one of the adjacency sub-matrix masks - labelled A to J in Figure 7.

It is to be understood that, in alternative examples, analogous concatenations can be performed earlier during the series of compressed operations, such that the one or more intermediate sub-matrices that are output from the compressed addition operation 714 are one or more concatenated intermediate sub-matrices. For example, at least one set of two or more of intermediate sub-matrices output from the compressed activation operation 712 can be concatenated, and at least one set of two or more adjacency sub-matrix masks can be equivalently concatenated, prior to the compressed addition operation 714. Alternatively again, at least one set of two or more intermediate "attention" sub-matrices can be concatenated prior to the compressed activation operation 712 such that the compressed activation operation 712 is performed on one or more concatenated intermediate "attention" sub-matrices and outputs one or more concatenated intermediate sub-matrices, and at least one set of two or more adjacency sub-matrix masks can be equivalently concatenated, prior to the compressed addition operation 714.

It will be appreciated that the compressed row-wise SoftMax operation 716 (e.g. as shown in Figure 7) is less computationally expensive than the row-wise SoftMax operation 216 (e.g. as shown in Figure 2B). This is because the one or more intermediate sub-matrices in dependence on which the compressed row-wise SoftMax operation 716 is performed comprise a subset of the values of the intermediate matrix on which the row-wise SoftMax operation 216 is performed - and so the compressed row-wise SoftMax operation 716 requires fewer values to be processed than the row-wise SoftMax operation 216.

It will be appreciated from the preceding paragraphs that the compressed graph attention network output in step S506 may comprise a compressed graph attention network layer arranged to perform a compressed series of operations, in dependence on the one or more adjacency sub-matrix masks formed in step S504, in order to form one or more intermediate sub-matrices (e.g. $d_1$, $v_1$, $d_2$, $v_2$, $d_3$, $v_3$, $b_1$, $b_2$, $b_3$ and C, in Figure 7) having a greater number of non-zero values per total number of values of the one or more intermediate sub-matrices than the number of non-zero values per total number of values of the intermediate matrix (A). In other words, said one or more intermediate sub-matrices (e.g. $d_1$, $v_1$, $d_2$, $v_2$, $d_3$, $v_3$, $b_1$, $b_2$, $b_3$ and C, in Figure 7) may have a smaller number of zero values per total number of values of the one or more intermediate sub-matrices than the number of zero values per total number of values of the intermediate matrix (A).

Finally, the compressed series of operations comprises a compressed multiplication operation 718 (e.g. a compressed matrix multiplication operation 718). The compressed multiplication operation 718 is performed in dependence on the one or more intermediate adjacency-attention sub-matrices output by the compressed row-wise SoftMax operation 716 (e.g. $d_1$, $v_1$, $d_2$, $v_2$, $d_3$, $v_3$, $b_1$, $b_2$, $b_3$ and C, in Figure 7) and the one or more intermediate sub-matrices ($h_{1\text{-}pW}$). The compressed multiplication operation 218 can be performed using the one or more intermediate sub-matrices ($h_{1\text{-}pW}$) output by the multiplication operation 702. That is, the one or more intermediate sub-matrices ($h_{1\text{-}pW}$) need not be re-calculated - although, in other examples, they could be. The compressed multiplication operation 718 outputs one or more feature embedding sub-matrices ($h_{1-p}$'). The one or more feature embedding sub-matrices ($h_{1-p}$') output by the compressed multiplication operation 718 are representative of the feature embedding matrix (H') that would have been output by the multiplication operation 218. That is, although the rows are ordered differently, the one or more feature embedding sub-matrices ($h_{1-p}$'), as a whole, include all of the values of the feature embedding matrix (H'). This is because the values of the intermediate matrix (A) that are not present in the one or more intermediate adjacency-attention sub-matrices (e.g. $d_1$, $v_1$, $d_2$, $v_2$, $d_3$, $v_3$, $b_1$, $b_2$, $b_3$ and C, in Figure 7) output by the compressed row-wise SoftMax operation 716 are exclusively zero values - and thus no "information" is lost by the compressed multiplication operation 718 not operating on those values. In other words, the compression is lossless compression. That is, the method of compressing a graph attention network described herein is a method of losslessly compressing a graph attention network. In particular, the graph attention network layer is losslessly compressed. As such, the graph attention network is losslessly compressed.

In examples, such as the example shown in Figure 7, where the compressed series of operations are performed in dependence on an adjacency matrix mask (M) that has been re-arranged into double-bordered block-diagonal (DB) form, the compressed multiplication operation 718 can be performed according to Equations (1) and (2), as follows:

$$h'_i = d_i(h_i W) + v_i(h_p W) \text{ for } i = 1 \dots p - 1 \qquad (1)$$

$$h'_p = \sum b_j(h_j W) \text{ for } j = 1 \dots p, \text{ where } b_p = C \qquad (2)$$

where $d_i$ represents the sub-matrices of the "diagonal", ordered $d_i$ to $d_{P-1}$ from the top-left of the double-bordered block-diagonal (DB) form intermediate matrix; $v_i$ represents the sub-matrices of the vertical border, ordered $v_i$ to $v_{P-1}$ from the top of the double-bordered block-diagonal (DB) form intermediate matrix; $b_i$ represents the sub-matrices of the horizontal (e.g. "bottom") border, ordered $b_i$ to $b_P$ from the left-hand-side of the double-bordered block-diagonal (DB) form intermediate matrix; and C is the sub-matrix in the bottom-right corner of the double-bordered block-diagonal (DB) form intermediate matrix. Equations (1) and (2) are general equations that can be applied to perform the compressed multiplication operation 718 regardless of the number of partitions used when forming the adjacency sub-matrix masks in step S504.

In the specific example shown in Figure 7, where four partitions have been used to form the adjacency sub-matrix masks, meaning that the compressed series of operations has formed a plurality of intermediate submatrices $d_1$, $v_1$, $d_2$, $v_2$, $d_3$, $v_3$, $b_1$, $b_2$, $b_3$ and C, the compressed multiplication operation 718 can be performed by writing out Equations (1) and (2) in full, as follows in Equations (3) to (6):

$$h'_1 = d_1(h_1 W) + v_1(h_4 W) \qquad (3)$$

$$h'_2 = d_2(h_2 W) + v_2(h_4 W) \qquad (4)$$

$$h'_3 = d_3(h_3 W) + v_3(h_4 W) \qquad (5)$$

$$h'_4 = b_1(h_1 W) + b_2(h_2 W) + b_3(h_3 W) + C(h_4 W) \qquad (6)$$

It will be appreciated that the compressed multiplication operation 718 (e.g. as shown in Figure 7) is less computationally expensive than the multiplication operation 218 (e.g. as shown in Figure 2B). This is because the one or more intermediate adjacency-attention sub-matrices (e.g. $d_1$, $v_1$, $d_2$, $v_2$, $d_3$, $v_3$, $b_1$, $b_2$, $b_3$ and C, in Figure 7) in dependence on which the compressed multiplication operation 718 is performed comprise a subset of the values of the intermediate adjacency-attention matrix (A) on which the multiplication operation 218 is performed - and so the compressed multiplication operation 718 requires fewer multiply-accumulate operations to be performed than the multiplication operation 218.

The method shown in Figure 5 can be applied to more than one graph attention network layer of a received graph attention network comprising a plurality of graph attention network layers. That is, the compressed graph attention network output in step S506 may comprise a plurality of compressed graph attention network layers, each of said compressed graph attention network layers being configured to perform a respective compressed series of operations as described herein with reference to Figure 7.

In examples, such as the example shown in Figure 7, where the compressed series of operations are performed in dependence on an adjacency matrix mask (M) that has been rearranged into double-bordered block-diagonal (DB) form, the one or more feature embedding sub-matrices ($h_{1-p}$') may be input - directly, or indirectly (e.g. after performing an activation operation on said one or more feature embedding sub-matrices ($h_{1-p}$')) - to a subsequent compressed graph attention network layer of the compressed graph attention network. Said subsequent compressed graph attention network layer can perform a respective compressed series of operations 702 to 718 in dependence on the one or more feature embedding sub-matrices ($h_{1-p}$'), a further weight matrix (W), a further pair of attention vectors ($a_1$' and $a_2$') and the same one or more adjacency sub-matrix masks formed in step S504. That is, in examples where the compressed series of operations are performed in dependence on an adjacency matrix mask (M) that has been rearranged into double-bordered block-diagonal (DB) form, there is no need to perform a permute operation on (e.g. to re-arrange, or reorder) the one or more feature embedding sub-matrices ($h_{1-p}$') prior to their use in the next compressed graph attention network layer of the compressed graph attention network.

If the compressed graph attention network layer is the final (and/or, only) layer of the compressed graph attention network, concatenate and permute operations can be performed on the one or more feature embedding sub-matrices ($h_{1-p}$') to form an output feature embedding matrix (H'). That is, the one or more feature embedding sub-matrices ($h_{1-p}$') can be concatenated, and the rows of said concatenated matrix re-arranged (e.g. re-ordered), so as to "undo" (e.g. reverse) the row permutations and partitions applied to the input feature embedding matrix (H) when forming the one or more feature embedding sub-matrices ($h_{1-p}$). Said feature embedding matrix (H') may be output - directly, or indirectly (e.g. after performing an activation operation on that feature embedding matrix (H')) - from the compressed graph attention network.

The method shown in Figure 5 can be applied to one, more than one, or all of the graph attention network layers of a received graph attention network comprising a plurality of graph attention network layers. That is, a subset of the graph attention network layers of a received graph attention network comprising a plurality of graph attention network layers could be compressed according to the principles described herein, with the other graph attention network layers of said received graph attention network not being compressed. In these examples, where a non-compressed graph attention network layer follows a compressed graph attention network layer, concatenate and permute operations would be performed on the one or more feature embedding sub-matrices output by the compressed graph attention network layer to form a feature embedding matrix for processing in accordance with the subsequent non-compressed graph attention network layer. Similarly, where a compressed graph attention network layer follows a non-compressed graph attention network layer, permute and partition operations would be performed on a feature embedding matrix output by a non-compressed graph attention network layer to form one or more feature embedding sub-matrices for processing in accordance with a subsequent compressed graph attention network layer.

It is to be understood that it is not essential for implementing a compressed series of operations to have rearranged the adjacency matrix mask (M) into double-bordered block-diagonal (DB) form. For example, the adjacency matrix mask (M) may have been rearranged in step S504 into K-way partitioned singly-bordered block-diagonal (SB) form - with diagonally arranged adjacency sub-matrix masks and either a vertical or horizontal border array comprising further adjacency sub-matrix masks. In these examples, the operations prior to the compressed broadcast add operation could be performed according to the principles described previously herein. The compressed broadcast add operation would be modified such that it forms an intermediate "attention" sub-matrix corresponding to each of the adjacency sub-matrix masks of the adjacency matrix mask (M) rearranged into K-way partitioned singly-bordered block-diagonal (SB) form - rather than forming an intermediate "attention" sub-matrix corresponding to each of the adjacency sub-matrix masks of the adjacency matrix mask (M) rearranged into doubly-bordered block-diagonal (DB) form, as in Figure 7. The compressed activation, addition and row-wise SoftMax could then be performed according to the principles described herein in dependence on the intermediate "attention" sub-matrices formed by the modified compressed broadcast add operation. Finally, a modified compressed multiplication operation would be performed in dependence on the sub-matrices output by the compressed row-wise SoftMax operation.

In particular, if the adjacency matrix mask (M) had been rearranged into K-way partitioned singly-bordered block-diagonal (SB) form with diagonally arranged adjacency sub-matrix masks and a vertical border array comprising further adjacency sub-matrix masks, the modified compressed multiplication operation could be performed according to Equation (7), as follows:

$$h_i{}' = d_i(h_iW) + v_i(h_{K+1}W) \text{ for } i = 1 \dots K \qquad (7)$$

where $d_i$ represents the sub-matrices of the "diagonal", ordered $d_i$ to $d_K$ from the top-left of the singly-bordered block-diagonal (SB) form intermediate matrix; and $v_i$ represents the sub-matrices of the vertical border, ordered $v_i$ to $v_K$ from the top of the singly-bordered block-diagonal (SB) form intermediate matrix.

It will be appreciated from Equation (7) that, in this example, the values output by the modified compressed multiplication operation would be comprised by a set of feature embedding sub-matrices comprising one fewer feature embedding sub-matrix than were in the set of features embedding sub-matrices formed for operation on by that compressed series of operations. In addition, as described above, in the singly-bordered block-diagonal (SB) form, the permutation (e.g. reordering) of the rows of the adjacency matrix mask does not match the permutation (e.g. reordering) of the columns of the adjacency matrix mask. As such, the row-order of the "output" set of feature embedding sub-matrices does not match the row-order of the "input" set of feature embedding sub-matrices. This means that, prior to a subsequent compressed graph attention network layer configured to use the same one or more adjacency sub-matrix masks, the "output" set of feature embedding sub-matrices would be concatenated, the rows of the concatenated set of feature embedding sub-matrices permuted and then the rows of the concatenated and permuted set of feature embedding sub-matrices partitioned to form a set of input feature embedding sub-matrices suitable for operation on by that subsequent compressed graph attention network layer.

Similarly, if the adjacency matrix mask (M) had been rearranged into K-way partitioned singly-bordered block-diagonal (SB) form with diagonally arranged adjacency sub-matrix masks and a horizontal border array comprising further adjacency sub-matrix masks, the modified compressed multiplication operation could be performed according to Equations (8) and (9), as follows:

$$h_i' = d_i(h_iW) \text{ for } i = 1 \dots K \qquad (8)$$

$$h_{K+1}' = \sum_1^K b_i(h_iW) \qquad (9)$$

where $d_i$ represents the sub-matrices of the "diagonal", ordered $d_i$ to $d_K$ from the top-left of the singly-bordered block-diagonal (SB) form intermediate matrix; and $b_i$ represents the sub-matrices of the horizontal (e.g. "bottom") border, ordered $b_i$ to $b_K$ from the left-hand-side of the singly-bordered block-diagonal (SB) form intermediate matrix.

It will be appreciated from Equations (8) and (9) that, in this example, the values output by the modified compressed multiplication operation would be comprised by a set of feature embedding sub-matrices comprising one additional feature embedding sub-matrix than were in the set of features embedding sub-matrices formed for operation on by that compressed series of operations. In addition, as described above, in the singly-bordered block-diagonal (SB) form, the permutation (e.g. reordering) of the rows of the adjacency matrix mask does not match the permutation (e.g. reordering) of the columns of the adjacency matrix mask. As such, the row-order of the "output" set of feature embedding sub-matrices does not match the row-order of the "input" set of feature embedding sub-matrices. This means that, prior to a subsequent compressed graph attention network layer configured to use the same one or more adjacency sub-matrix masks, the "output" set of feature embedding sub-matrices would be concatenated, the rows of the concatenated set of feature embedding sub-matrices permuted, and then the rows of the concatenated and permuted set of feature embedding sub-matrices partitioned to form a set of input feature embedding sub-matrices suitable for operation on by that subsequent compressed graph attention network layer.

Returning to Figure 5, step S506 may comprise storing the compressed graph attention network for subsequent implementation. For example, referring to Figure 4, the at least one processor 404 may write the compressed graph attention network into memory 406 for subsequent implementation. Owing to one or more adjacency sub-matrix masks formed in step S504 comprising a subset of the values comprised by the adjacency matrix mask (M) of the received graph attention network, the memory footprint of the compressed graph attention network can be reduced relative to that of the graph attention network received in step S502. As such, the data representing the compressed graph attention network can be stored in memory more efficiently than the received graph attention network.

Step S506 may comprise outputting a computer readable description of the compressed graph attention network that, when implemented at a system for implementing a graph attention network (e.g. system 300 shown in Figure 3), causes the compressed graph attention network to be executed. Step S506 may comprise configuring hardware logic to implement the compressed graph attention network. The hardware logic may comprise a neural network accelerator (NNA), one or more graphics processing units (GPUs), or any combination thereof. For example, referring to Figure 4, the at least one processor 404 may be configured to configure hardware logic comprised by the system 300 for implementing a graph attention network to implement the compressed graph attention network. Step S506 may comprise using the compressed graph attention network (e.g. using the compressed graph attention network to perform processing). That is, step S506 may comprise using the hardware logic configured to implement the compressed graph attention network to perform processing. For example, the compressed graph attention network may be used to perform image processing. Performing image processing using the compressed graph attention network may comprise: receiving (e.g. at the hardware logic) image data representing one or more images; processing said image data using the compressed graph attention network (e.g. as implemented at the hardware logic); and generating (e.g. at the hardware logic) an output representative of the processing of said image data. In an example, said image processing may comprise image classification. In image classification, image data representing one or more images may be input to the compressed graph attention network, and the output of that compressed graph attention network may be data indicative of a probability (or set of probabilities) that each of those images belongs to a particular classification (or set of classifications). That is, the computations performed in the layers of the compressed graph attention network may enable characteristic features (e,g, low level features such as edges) of the input data to be identified, and predictions to be made as to which classification (or set of classifications) the one or more images represented by that input data belongs to.

As described herein, the graphs operated on by typical graph attention networks often comprise a large number of nodes, a large proportion of which are not at are not connected to one another. Hence, the adjacency matrix mask (M) of a typical graph attention networks will often comprise a large proportion of "-∞" values. As will be appreciated from the description of Figures 2A to 2D herein, the intermediate matrix (A) will include a zero (i.e. "0") value in each (row, column) position that corresponds to a (row, column) position in the adjacency matrix mask (M) that includes a "-∞" value. It follows that the intermediate matrix (A) will typically comprise a large proportion of zero values. An element-wise multiplication between a zero value in the intermediate matrix (A) (i.e. caused by a "-∞" value in the adjacency matrix mask (M)) and a value of the intermediate matrix (HW) would inevitably result in a zero output value - regardless of the value of that value of the intermediate matrix (HW). This means that no "information" is lost by the compressed series of operations described herein not forming said large proportion of zero values of the intermediate matrix (A). In other words, the compression is lossless compression. That is, the method of compressing a graph attention network described herein is a method of losslessly compressing a graph attention network. In particular, the graph attention network layer is losslessly compressed. As such, the graph attention network is losslessly compressed.

It follows that, by performing steps S504 and S506 as described herein, a large proportion of the values that would have been involved in each of the broadcast add 210, activation 212, addition 214, row-wise SoftMax 216 and multiplication 218 operations need not be formed during the compressed broadcast add operation, and/or subsequently operated on during the following compressed activation 712, addition 714, row-wise SoftMax 716 and multiplication 718 operations. This means that each of the compressed broadcast add 710, activation 712, addition 714, row-wise SoftMax 716 and multiplication 718 operations can be significantly less computationally expensive than their non-compressed equivalents. In addition, owing to the number of values being operated on by each of these compressed operations being significantly reduced, the inference time (e.g. latency between input and output) for the compressed graph attention network can be significantly reduced relative to that of the graph attention network received in step S502. Also, owing to one or more adjacency sub-matrix masks formed in step S504 comprising a subset of the values comprised by the adjacency matrix mask (M) of the received graph attention network, the memory bandwidth consumed by the compressed graph attention network (e.g. to read the values of the one or more adjacency sub-matrix masks into the hardware logic from an off-chip memory when executing the compressed graph attention network) can also be reduced relative to that of the graph attention network received in step S502 (e.g. in which the greater number of values of the adjacency matrix mask can be read into the hardware logic from an off-chip memory when executing the received graph attention network). This means that processing (e.g. image processing) can be performed using the compressed graph attention network output in step S506 (e.g. using hardware logic configured to implement that compressed graph attention) more efficiently (e.g. more quickly, and consuming less computational resources) relative to the graph attention network received in step S502.

As described herein, each of the compressed broadcast add 710, activation 712, addition 714, row-wise SoftMax 716 and multiplication 718 operations can be less computationally expensive and faster than their non-compressed equivalents. Whilst performing each of these operations in their compressed form leads to the greatest combined advantages, it is to be understood that performing any one of these compressed operations is advantageous over performing its non-compressed equivalent. That is, for example, some advantages of the principles described herein would be realised even if only the compressed addition operation 714 described herein were to be performed, with the other operations of the compressed series of operations being performed in their non-compressed form (e.g., with the inputs to those operations being converted - e.g. by concatenate and permute operations, or scatter operations - from sub-matrix form into matrix form for the purposes of performing a non-compressed operation).

## *Figure 9*

A graph attention network layer of a graph attention network is arranged to perform a multiplication operation (A×H×W) using the intermediate matrix (A), a feature embedding matrix (H) and a weight matrix (W). A typical graph attention network layer, as described herein with reference to Figures 2A to 2D, is arranged to implement this multiplication operation (A×H×W) by multiplying the feature embedding matrix (H) by the weight matrix (W) so as to form an intermediate matrix (HW) (e.g. as in multiplication operation 202 described herein), and subsequently multiplying the intermediate matrix (A) by the intermediate matrix (HW) (e.g. as in multiplication operation 218 described herein). In other words, the multiplication operation (A×H×W) is typically performed by performing the series of operations (H×W) = HW, and subsequently A×(HW) = AHW. This series of operations may be referred to herein as "Ax(HW)".

The inventors have realised that the multiplication operation (A×H×W) could alternatively be implemented by configuring a graph attention network layer to multiply the intermediate matrix (A) by the feature embedding matrix (H) so as to form an intermediate matrix (AH), and subsequently multiply the intermediate matrix (AH) by the weight matrix (W). In other words, the multiplication operation (A×H×W) can alternatively be performed by performing the series of operations (AxH) = AH, and subsequently (AH)xW = AHW. This series of operations may be referred to herein as "(AH)xW'. The result of the series of operations "(AH)xW' will be the same as the result of the typical series of operations "Ax(HW)". This is because of the associative property of matrix multiplication.

That said, it will be recalled that the series of operations that a graph attention network layer is arranged to perform typically first involves multiplying the feature embedding matrix (H) by the weight matrix (W) so as to form an intermediate matrix (HW) (e.g. as in multiplication operation 202 described herein). This intermediate matrix (HW) is input to the next multiplication operations (e.g. multiplication operations 204 and 206 described herein) in that series of operations, but is also typically reused later in that series of operations to implement the multiplication operation (A×H×W) (e.g. during the multiplication operation 218). It follows that implementing the multiplication operation (A×H×W) by configuring the graph attention network layer to perform the alternative series of operations "(AH)xW' could be considered to be counterintuitive. This is because the intermediate matrix (HW) (that has already been formed in multiplication operation 202) cannot be reused when performing the series of operations "(AH)xW'. In any case, the inventors have found that, in certain circumstances that will be described herein, it can be advantageous to configure a graph attention network layer to implement the multiplication operation (A×H×W) by performing the series of operations "(AH)xW', rather than the series of operations "A×(HW)". These principles can also be extended to a graph attention network layer compressed according to the method shown in Figure 5.

Figure 9 shows a method of configuring a graph attention network. The method of configuring a graph attention network shown in Figure 9 is a computer-implemented method. The processing system 400 for configuring a graph attention network shown in Figure 4 may be configured to perform the method of configuring a graph attention network shown in Figure 9. The method of configuring a graph attention network shown in Figure 9 can be used independently, or can be used in combination with one or both of the methods of compressing/configuring a graph attention network shown in Figures 5 and 12, as will be described herein.

In step S902, a graph attention network is received. The received a graph attention network may be defined by a software model. For example, that software model may define the adjacency matrix mask (M) of the received graph attention network, the series of layers of the received graph attention network (e.g. the number of layers, the order of the layers, and the connectivity between those layers), each of the layers in that series in terms of the series of operations it is configured to perform, and the feature embedding matrix (H), weight matrix (W) and pair of attention vectors ($a_1$ and $a_2$) each graph attention network layer will use. The received graph attention network may comprise at least one graph attention network layer arranged to perform the series of operations described herein with reference to Figures 2A to 2D. The received graph attention network may be a trained neural network. The graph attention network (e.g. the software model defining that graph attention network) may be received at processing system 400 shown in Figure 4, and stored in memory 406.

The graph attention network received in step S902 comprises a graph attention network layer. That graph attention network layer is arranged to perform one or more operations in dependence on a feature embedding matrix (H) and a weight matrix (W). As described herein, that graph attention network layer may be arranged to perform a multiplication operation (A×H×W) using an intermediate matrix (A), the feature embedding matrix (H) and the weight matrix (W).

In step S904, at least one dimension of one or both of the feature embedding matrix (H) and the weight matrix (W) are assessed (e.g. inspected). Step S904 may be performed in order to select, from a plurality of predefined series of operations, the series of operations that causes a graph attention network layer configured to perform that series of operations to incur (e.g. be required to perform) the fewest multiple-accumulate operations. The predefined series of operations may comprise: a first series of operations that comprises (i) performing an operation in dependence on the feature embedding matrix and the weight matrix so as to form an intermediate output, and subsequently performing an operation in dependence on an intermediate matrix and that intermediate output; and a second series of operations that comprises (ii) performing an operation in dependence on an intermediate matrix and the feature embedding matrix so as to form an intermediate output, and subsequently performing an operation in dependence on that intermediate output and the weight matrix. The at least one processor 404 shown in Figure 4 can be configured to perform step S904.

When the method of configuring a graph attention network shown in Figure 9 is used independently of the method of compressing a graph attention network shown in Figure 5: the first series of operations may comprise (i) multiplying the feature embedding matrix (H) by the weight matrix (W) so as to form an intermediate matrix (HW), and subsequently multiplying the intermediate adjacency-attention matrix (A) by the intermediate matrix (HW); and the second series of operations may comprise (ii) multiplying the intermediate adjacency-attention matrix (A) by the feature embedding matrix (H) so as to form an intermediate matrix (AH), and subsequently multiplying the intermediate matrix (AH) by the weight matrix (W). In other words, the first series of operations may be "A×(HW)" and the second series of operations may be "(AH)xW', as described herein.

An example of a graph attention network layer configured to perform said first series of operations is described herein with reference to Figures 2A to 2D.

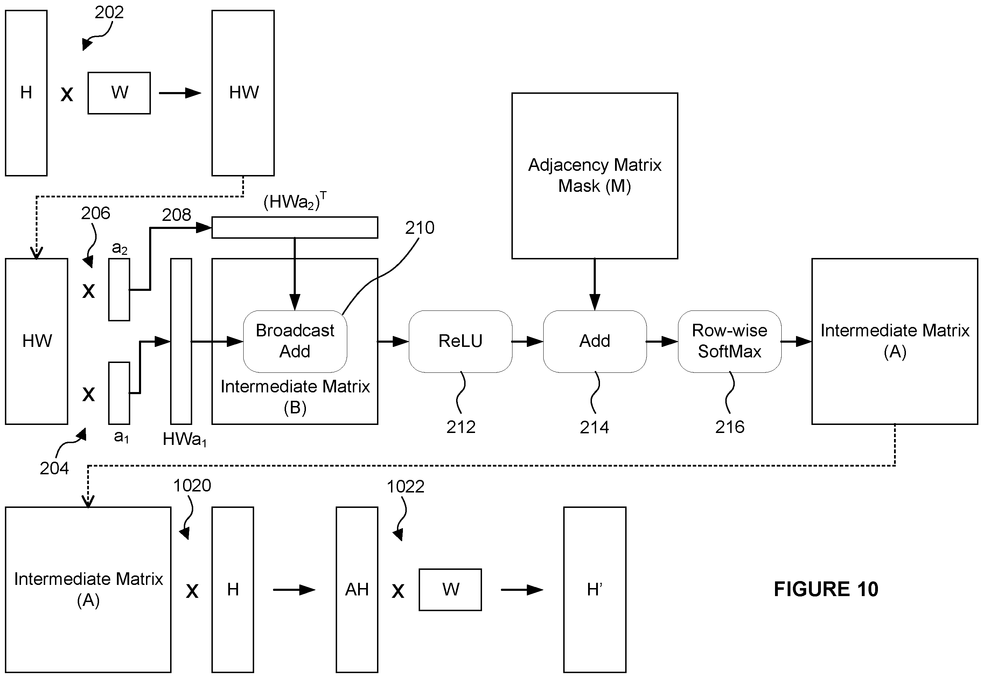

An example of a graph attention network layer configured to perform said second series of operations is illustrated in Figure 10. In Figure 10, the series of operations comprises multiplication operations 202, 204 and 206, transpose operation 208, broadcast add operation 210, activation operation 212, addition operation 214 and row-wise SoftMax operation 216 that are performed in the same manner as the respective multiplication operations 202, 204 and 206, transpose operation 208, broadcast add operation 210, activation operation 212, addition operation 214 and row-wise SoftMax operation 216 described herein with reference to Figures 2A to 2D. Said series of operations forms an intermediate matrix (A) having the dimensions $N \times N$. In Figure 10, the series of operations further comprises a multiplication operation 1020 (e.g. a matrix multiplication operation 1020) and a multiplication operation 1022 (e.g. a matrix multiplication operation 1022). The multiplication operation 1020 comprises multiplying the intermediate matrix (A) by the feature embedding matrix (H). As described herein, the intermediate matrix (A) has the dimensions $N \times N$ and the feature embedding matrix (H) has the dimensions $N \times F$. The multiplication operation 1020 outputs an intermediate matrix (AH). The intermediate matrix (AH) has the dimensions $N \times F$. The multiplication operation 1022 comprises multiplying the intermediate matrix (AH) by the weight matrix (W). As described herein, the intermediate matrix (AH) has the dimensions $N \times F$ and the weight matrix (W) has the dimensions $F \times F'$. The multiplication operation 1022 outputs a feature embedding matrix (H'). The feature embedding matrix (H') has the dimensions $N \times F'$. Owing to the associative property of matrix multiplication, the feature embedding matrix (H') output by the multiplication operation 1022 will be the same as the feature embedding matrix (H') output by the multiplication operation 218. The feature embedding matrix (H') output by the multiplication operation 1022 can be used to form an input for a subsequent graph attention network layer, or to form an output of the graph attention network, in the same manner as the feature embedding matrix (H') output by the multiplication operation 218 - as described herein.

When the method of configuring a graph attention network shown in Figure 9 is used in combination with the method of compressing a graph attention network shown in Figure 5: the first series of operations may comprise (i) performing an operation in dependence on one or more feature embedding sub-matrices ($h_{1-p}$) (e.g. formed in dependence on the feature embedding matrix (H), as described herein) and the weight matrix (W) so as to form one or more intermediate sub-matrices ($h_{1-p}W$), and subsequently performing an operation in dependence on one or more intermediate adjacency-attention sub-matrices (e.g. that comprise a subset of the values of the intermediate matrix (A), as described herein) and the one or more intermediate sub-matrices ($h_{1-p}W$); and the second series of operations may comprise (ii) performing an operation in dependence on one or more intermediate adjacency-attention sub-matrices (e.g. that comprise a subset of the values of the intermediate matrix (A), as described herein) and one or more feature embedding sub-matrices ($h_{1-p}$) (e.g. formed in dependence on the feature embedding matrix (H), as described herein) so as to form one or more intermediate sub-matrices ($Ah_{1-p}$), and subsequently performing an operation in dependence on the one or more intermediate sub-matrices ($Ah_{1-p}$) and the weight matrix (W). That is, when the method of configuring a graph attention network shown in Figure 9 is used in combination with the method of compressing a graph attention network shown in Figure 5, the "intermediate matrix" referred to in the broadest definitions of the first and second series of operations is to be interpreted as a sub-matrix of the one or more intermediate sub-matrices comprising a subset of the values of the intermediate matrix (A).

An example of a compressed graph attention network layer configured to perform said first series of operations is described herein with reference to Figure 7.

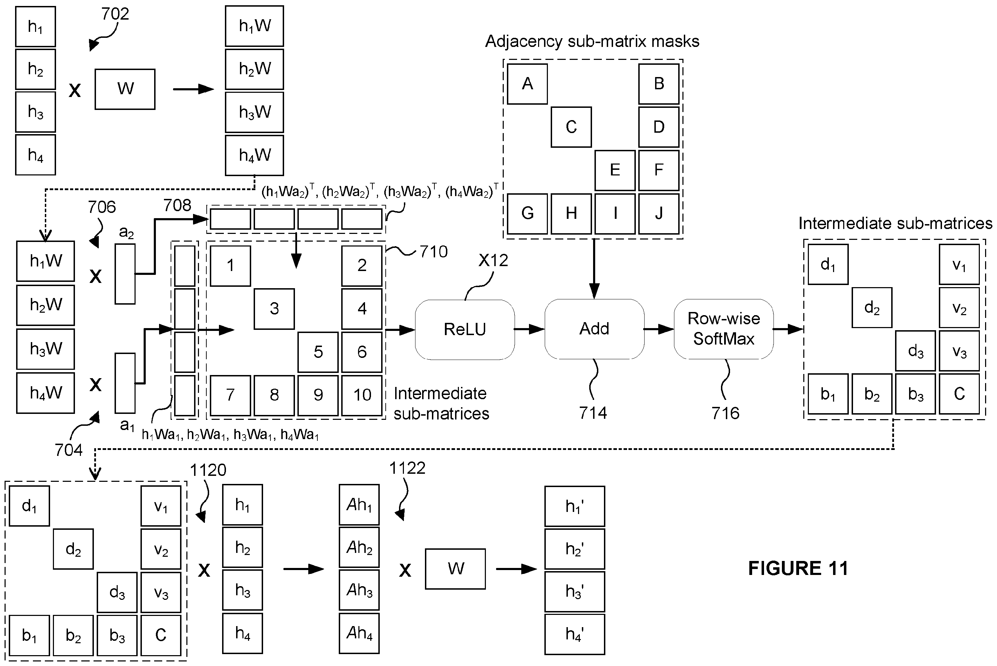

An example of a compressed graph attention network layer configured to perform said second series of operations is illustrated in Figure 11.

In Figure 11, the compressed series of operations comprises multiplication operations 202, 204 and 206, transpose operation 208, compressed broadcast add operation 210, compressed activation operation 212, compressed addition operation 214 and compressed row-wise SoftMax operation 216 that are performed in the same manner as the respective multiplication operations 202, 204 and 206, transpose operation 208, compressed broadcast add operation 210, compressed activation operation 212, compressed addition operation 214 and compressed row-wise SoftMax operation 216 described herein with reference to Figure 7. Said compressed series of operations forms one or more intermediate sub-matrices comprising a subset of the values of the intermediate matrix (A). In Figure 11, the series of operations further comprises a compressed multiplication operation 1120 (e.g. a compressed matrix multiplication operation 1120) and a multiplication operation 1122 (e.g. a matrix multiplication operation 1122).

The compressed multiplication operation 1120 is performed in dependence on the one or more intermediate sub-matrices comprising a subset of the values of the intermediate matrix (A) and the one or more feature embedding sub-matrices ($h_{1-p}$). The compressed multiplication operation 1120 outputs one or more intermediate sub-matrices (e.g. $Ah_{1-p}$).

In examples, such as the example shown in Figure 11, where the compressed series of operations are performed in dependence on an adjacency matrix mask (M) that has been re-arranged into double-bordered block-diagonal (DB) form, the compressed multiplication operation 1120 can be performed according to Equations (10) and (11), as follows:

$$Ah_i = d_i h_i + v_i h_p \text{ for } i = 1 \dots p-1 \qquad (10)$$

$$Ah_p = \sum b_j h_j \text{ for } j = 1 \dots p, \text{ where } b_p = C \quad (11)$$

where $d_i$ represents the sub-matrices of the "diagonal", ordered $d_i$ to $d_{P-1}$ from the top-left of the double-bordered block-diagonal (DB) form intermediate matrix; $v_i$ represents the sub-matrices of the vertical border, ordered $v_i$ to $v_{P-1}$ from the top of the double-bordered block-diagonal (DB) form intermediate matrix; $b_i$ represents the sub-matrices of the horizontal (e.g. "bottom") border, ordered $b_i$ to $b_P$ from the left-hand-side of the double-bordered block-diagonal (DB) form intermediate matrix; and C is the sub-matrix in the bottom-right corner of the double-bordered block-diagonal (DB) form intermediate matrix.

In the specific example shown in Figure 11, where four partitions have been used to form the adjacency sub-matrix masks, meaning that the compressed series of operations has formed a plurality of intermediate submatrices $d_1$, $v_1$, $d_2$, $v_2$, $d_3$, $v_3$, $b_1$, $b_2$, $b_3$ and C, the compressed multiplication operation 1120 can be performed by writing out Equations (10) and (11) in full, as follows in Equations (12) to (15):

$$Ah_1 = d_1 h_1 + v_1 h_4 \qquad (12)$$

$$Ah_2 = d_2 h_2 + v_2 h_4 \qquad (13)$$

$$Ah_3 = d_3 h_3 + v_3 h_4 \qquad (14)$$

$$Ah_4 = b_1 h_1 + b_2 h_2 + b_3 h_3 + Ch_4 \quad (15)$$

The multiplication operation 1122 comprises multiplying each of the one or more intermediate sub-matrices (e.g. $Ah_{1-p}$) by the weight matrix (W). For example, referring to Figure 11, the multiplication operation 1122 may comprise: multiplying intermediate sub-matrix $Ah_1$ by the weight matrix (W); multiplying intermediate sub-matrix $Ah_2$ by the weight matrix (W); multiplying intermediate sub-matrix $Ah_3$ by the weight matrix (W); and multiplying intermediate sub-matrix $Ah_4$ by the weight matrix (W). The multiplication operation 1122 outputs one or more feature embedding sub-matrices ($h_{1-p}'$). Owing to the associative property of matrix multiplication, the one or more feature embedding sub-matrices ($h_{1-p}'$) output by the multiplication operation 1122 will be the same as the one or more feature embedding sub-matrices ($h_{1-p}'$) output by the compressed multiplication operation 718. The one or more feature embedding sub-matrices ($h_{1-p}'$) output by the multiplication operation 1122 can be used to form an input for a subsequent graph attention network layer or to form an output of the compressed graph attention network in the same manner as one or more feature embedding sub-matrices ($h_{1-p}'$) output by the compressed multiplication operation 718 - as described herein.

Returning to Figure 9, in a first example, step S904 may comprise determining which of the row dimension (e.g. $F$) of the weight matrix (W - dimensions $F \times F'$) or the column dimension (e.g. $F'$) of the weight matrix (W) is greater. That is, in this first example, step S904 comprises assessing only the dimensions of the weight matrix (W). In other words, in this first example, step S904 does not comprise assessing the dimensions of the feature embedding matrix (H).

If it is determined that the row dimension (e.g. $F$) is greater than the column dimension (e.g. $F'$) (i.e. the weight matrix (W) comprises more rows than columns), it can be determined that a graph attention network layer configured to perform the first series of operations (e.g. "Ax(HW)") would incur fewer multiple-accumulate operations than a graph attention network layer configured to perform the second series of operations (e.g. "(AH)$\times$W"). Considering an illustrative example in which the first series of operations is "A$\times$(HW)" and the second series of operations is "(AH)xW', this is because the intermediate matrix (A) is typically significantly larger than the matrices (H) and (W), and so the bulk of the multiply-accumulate operations incurred when performing the series of operations "(AH)xW' or "A$\times$(HW)" will be incurred during the multiplication(s) performed in dependence on the intermediate matrix (A) (i.e. during AxH, or A$\times$(HW)). Owing to the rules of matrix multiplication, the number of columns of the matrix output from a matrix multiplication equals the number of columns in the right-hand matrix involved in that matrix multiplication. For these reasons, it is preferable for the intermediate matrix (A) to be multiplied by a matrix having fewer columns, as this means that the matrix output by that multiplication will have fewer columns - and so will require fewer multiple-accumulate operations to form. The number of rows of the weight matrix (W) is equal to the number of columns of the feature embedding matrix (H). Hence, if the weight matrix (W) comprises more rows than columns, it is preferable for the multiplication (H$\times$W) to be performed first, to form an intermediate matrix (HW) that has fewer columns than the feature embedding matrix (H). In this case, multiplying the intermediate matrix (A) by the intermediate matrix (HW) as part of the first series of operations (e.g. "Ax(HW)") will incur fewer multiple-accumulate operations that multiplying the intermediate matrix (A) by the feature embedding matrix (H) as part of the second series of operations (e.g. "(AH)xW'). Overall, this means that, in this case, a graph attention network layer configured to perform the first series of operations (e.g. "Ax(HW)") will incur fewer multiple-accumulate operations, than a graph attention network layer configured to perform the second series of operations (e.g. "(AH)xW').

If, by contrast, it is determined that the column dimension (e.g. $F'$) is greater than the row dimension (e.g. $F$) (i.e. the weight matrix (W) comprises more columns than rows), it cannot necessarily be determined that a graph attention network layer configured to perform the second series of operations (e.g. "(AH)$\times$W") would incur fewer multiple-accumulate operations than a graph attention network layer configured to perform the first series of operations (e.g. "Ax(HW)"). Considering the series of operations "A×(HW)" and "(AH)xW' as an illustrative example, this is because, as described herein, the intermediate matrix (HW) is also formed for use in other operations (e.g. multiplication operations 204 and 206) in the series of operations performed by a typical graph attention network layer, and so can be reused when performing the series of operations "Ax(HW)" (e.g. in multiplication operation 218). The intermediate matrix (HW) cannot be reused when performing the series of operations "(AH)xW', and so a graph attention network layer configured to perform the series of operations "(AH)xW' may be configured to perform both the multiplication HxW and the multiplication AxH. Hence, in this case, the reduction in the number of multiple-accumulate operations incurred when performing the second series of operations (e.g. "(AH)xW'), rather than the first series of operations (e.g. "Ax(HW)"), may need to be great enough to make up for the graph attention network layer being configured to perform both HxW and AxH. That is, the reduction in the number of multiple-accumulate operations incurred when performing the second series of operations (e.g. "(AH)xW') rather than the first series of operations (e.g. "Ax(HW)") may need to be great enough to make up for not being able to reuse the result of HxW in the second series of operations (e.g. "(AH)xW').

In a second example, step S904 may comprise: inputting one or both dimensions of each of the feature embedding matrix (H) and the weight matrix (W) into a first function; inputting one or both dimensions of each of the feature embedding matrix (H) and the weight matrix (W) into a second function; and determining whether the output of said first function is greater than the output of said second function, or vice versa.

The first function may be indicative of the number of multiply-accumulate operations associated with operations performed in dependence on the feature embedding matrix (H) and the weight matrix (W) that would be incurred by a graph attention network layer configured to perform the first series of operations. As would be understood by the skilled person, the number of multiply-accumulate operations incurred by a matrix multiplication is equal to the product of all of the dimensions involved in the matrix multiplication. Considering an illustrative example in which the first series of operations is "Ax(HW)", multiplying the feature embedding matrix (H - dimensions $N \times F$) by the weight matrix (W - dimensions $F \times F'$) incurs $N * F * F'$ multiply-accumulate operations. Multiplying the intermediate matrix (A - dimensions $N \times N$) by the intermediate matrix (HW - dimensions $N \times F'$) incurs $N * N * F'$ multiply-accumulate operations. So, in the illustrative example, the first function may be $N * F * F' + N * N * F'$.

The second function may be indicative of the number of multiply-accumulate operations associated with operations performed in dependence on the feature embedding matrix (H) and the weight matrix (W) that would be incurred by a graph attention network layer configured to perform a second series of operations. Considering an illustrative example in which the second series of operations is "(AH)×W", multiplying the intermediate matrix (A - dimensions $N \times N$) by the feature embedding matrix (H - dimensions $N \times F$) incurs $N * N * F$ multiply-accumulate operations. Multiplying the intermediate matrix (AH - dimensions $N \times F$) by the weight matrix (W - dimensions $F \times F'$) incurs $N * F * F'$ multiply-accumulate operations. As described herein, although it cannot be reused during the series of operations "(AH)×W", the intermediate matrix (HW) may be formed for use in other operations (e.g. multiplication operations 204 and 206). Hence, the second function may also account for the number of multiply-accumulate operations incurred by forming the intermediate matrix (HW). Multiplying the feature embedding matrix (H - dimensions $N \times F$) by the weight matrix (W - dimensions $F \times F'$) incurs $N * F * F'$ multiply-accumulate operations. So, in the illustrative example, the second function may be $N * F * F' + N * N * F + N * F * F'$.

Continuing with the illustrative example in which the first series of operations is "A×(HW)" and the second series of operations is "(AH)xW', to determine whether a graph attention network layer configured to perform the second series of operations "(AH)xW' will incur fewer multiply-accumulate operations than a graph attention network layer configured to perform the first of operations "A×(HW)", it can be determined whether $N * F * F' + N * N * F' > N * F * F' + N * N * F + N * F * F'$. The first and second functions can be rearranged and simplified as follows:

$$N * F * F' + N * N * F' > N * F * F' + N * N * F + N * F * F'$$

$$N * N * F' > N * N * F + N * F * F'$$

$$N(N * F') > N(N * F + F * F')$$

$$N * F' > N * F + F * F'$$

That is, the first function may be $N * F'$, and the second function may be $N * F + F * F'$. Continuing with the illustrative example, if it is determined that $N * F' > N * F + F * F'$, it can be determined that a graph attention network layer configured to perform the second series of operations "(AH)xW' will incur fewer multiply-accumulate operations than a graph attention network layer configured to perform the first series of operations "Ax(HW)".

Other rearrangements of and/or simplifications to the first and second functions can also be made.

For example, $N * F' > N * F + F * F'$ could be rearranged to $F'/\left(1+\frac{F'}{N}\right) > F$. That is, the first function may be $F'/\left(1+\frac{F'}{N}\right)$, and the second function may be $F$. In this case, in the illustrative example, if it is determined that $F'/\left(1+\frac{F'}{N}\right) > F$, it can be determined that a graph attention network layer configured to perform the second series of operations "(AH)xW' will incur fewer multiply-accumulate operations than a graph attention network layer configured to perform the first series of operations "Ax(HW)".

In another example, if it is determined when assessing the dimensions of the feature embedding matrix (H) and the weight matrix (W) that $N$ is an integer $M$ times greater than $F'$, then $N * F' > N * F + F * F'$ could be simplified to $N/(M + 1) > F$. That is, the first function may be $N/(M + 1)$ and the second function may be $F$. In this case, in the illustrative example, if it is determined that $N/(M + 1) > F$, it can be determined that a graph attention network layer configured to perform the second series of operations "(AH)×W'" will incur fewer multiply-accumulate operations than a graph attention network layer configured to perform the first series of operations "Ax(HW)".

It follows that, in the illustrative example, if it is determined that $N \times F' \leq N \times F + F \times F'$, $F'/\left(1 + \frac{F'}{N}\right) \leq F$, or $N/(M + 1) \leq F$, it can be determined that a graph attention network layer configured to perform the first series of operations "Ax(HW)" will incur fewer multiply-accumulate operations than a graph attention network layer configured to perform the second series of operations "(AH)xW'.

It will be appreciated from the preceding paragraphs that there are numerous different suitable definitions of the first and second functions. It is also to be understood that, when the method of configuring a graph attention network shown in Figure 9 is used in combination with the method of compressing a graph attention network shown in Figure 5, the various example first and second functions described in the preceding paragraphs can be used as functions indicative of (e.g. indicating, but not necessarily precisely calculating) the number of multiply-accumulate operations associated with the compressed operations performed in dependence on the feature embedding matrix (H) and the weight matrix (W) that would be incurred by compressed graph attention network layers configured to perform, respectively, the first and second compressed series of operations described herein. Alternatively, different first and second functions could be defined and used that represent, more precisely, the number of multiply-accumulate operations incurred by performing the respective first and second compressed series of operations described herein. For example, said different first and second functions may assess, and sum, each of the products of the dimensions of each of the sub-matrices involved in each of the sub-matrix multiplication operations comprised by the compressed first and second series of operations described herein.

In step S906, the graph attention network is configured in dependence on the dimensions of one or both of the feature embedding matrix (H) and the weight matrix (W). In other words, the graph attention network is configured in dependence on the assessment performed in step S904. The graph attention network is configured such that the graph attention network layer is configured to, either: perform the first series of operation as described herein; or perform the second series of operations described herein. Step S906 may comprise configuring said graph attention network layer to perform the series of operations that it has been determined in step S904 will cause a graph attention network layer configured to perform that series of operations to incur the fewest multiple-accumulate operations. In the first example described herein, the graph attention network layer may be configured to perform the first series of operations in response to determining that the weight matrix (W) comprises more rows than columns. In the second example described herein, the graph attention network layer may be configured to perform the first series of operations in response to determining that the output of the first function is less than the output of the second function; or perform the second series of operations in response to determining that the output of the first function is greater than the output of the second function.

In an example, the graph attention network layer may be configured in step S906 to perform the first series of operations when it is determined in step S904 that the weight matrix (W) comprises more rows than columns, and/or that $N \times F' \leq N \times F + F \times F'$, $F'/\left(1 + \frac{F'}{N}\right) \leq F$, or $N/(M + 1) \leq F$.

In an alternative example, the graph attention network layer may be configured in step S906 to perform the second series of operations when it is determined in step S904 that that $N \times F' > N \times F + F \times F'$, $F'/\left(1 + \frac{F'}{N}\right) > F$, or $N/(M + 1) > F$.

The method shown in Figure 9 can be applied to more than one graph attention network layer of a received graph attention network comprising a plurality of graph attention network layers. The series of operations can be varied between the first series of operations and the second series of operations on a layer-by-layer basis. This may be desirable as the dimensions of the feature embedding and weight matrices are often different for different graph attention network layers of the same graph attention network. That is, different graph attention network layers in the same graph attention network can be configured according to the method shown in Figure 9 to perform their respective AxHxW multiplication using different series of operations (e.g. the first series of operations or the second series of operations described herein). For example, a first graph attention network layer could be configured to perform the first series of operations, whilst a second graph attention network layer is configured to perform the second series of operations, or vice versa. This is because, owing to the associative property of matrix multiplication, the output of a graph attention network layer is the same regardless of whether it is configured to perform the first or second series of operations described herein, and so no knock-on changes to preceding or subsequent graph attention network layers need to be made when either the first or second series of operations is selected for a graph attention network layer.

It is to be understood that not all of the graph attention network layers of a received graph attention network comprising a plurality of graph attention network layers need be configured according to the method shown in Figure 9. That is, a subset of the graph attention network layers of a received graph attention network comprising a plurality of graph attention network layers could be configured according to the method shown in Figure 9, with the method shown in Figure 9 not being applied to the other graph attention network layers of said received graph attention network.

Returning to Figure 9, step S906 may comprise storing the configured graph attention network for subsequent implementation. For example, referring to Figure 4, the at least one processor 404 may write the configured graph attention network into memory 406 for subsequent implementation. Step S906 may comprise outputting a computer readable description of the configured graph attention network that, when implemented at a system for implementing a graph attention network (e.g. system 300 shown in Figure 3), causes the configured graph attention network to be executed.

Step S906 may comprise configuring hardware logic to implement the configured graph attention network. The hardware logic may comprise a neural network accelerator (NNA), one or more graphics processing units (GPUs), or any combination thereof. For example, referring to Figure 4, the at least one processor 404 may be configured to configure hardware logic comprised by the system 300 for implementing a graph attention network to implement the configured graph attention network. Step S906 may comprise using the configured graph attention network (e.g. using the configured graph attention network to perform processing). That is, step S906 may comprise using the hardware logic configured to implement the configured graph attention network to perform processing. For example, the configured graph attention network may be used to perform image processing. Performing image processing using the configured graph attention network may comprise: receiving (e.g. at the hardware logic) image data representing one or more images; processing said image data using the configured graph attention network (e.g. as implemented at the hardware logic); and generating (e.g. at the hardware logic) an output representative of the processing of said image data. In an example, said image processing may comprise image classification. In image classification, image data representing one or more images may be input to the configured graph attention network, and the output of that configured graph attention network may be data indicative of a probability (or set of probabilities) that each of those images belongs to a particular classification (or set of classifications). That is, the computations performed in the layers of the configured graph attention network may enable characteristic features (e,g, low level features such as edges) of the input data to be identified, and predictions to be made as to which classification (or set of classifications) the one or more images represented by that input data belongs to

As described herein, step S904 can be performed in order to select, from a plurality of predefined series of operations, the series of operations that cause a graph attention network layer configured to perform that series of operations to incur the fewest multiple-accumulate operations. The configured graph attention network being required to perform fewer multiple-accumulate operations means that a graph attention network configured according to the method shown in Figure 9 can have a reduced computational demand, e.g. relative to a graph attention network that comprises one or more graph attention network layers that are exclusively configured to perform the typical "Ax(HW)" series of operations. This also means that the inference time (e.g. latency between input and output) for a graph attention network configured according to the method shown in Figure 9 can be less than that of a graph attention network that comprises one or more graph attention network layers that are exclusively configured to perform the typical "Ax(HW)" series of operations. This means that processing (e.g. image processing) can be performed using the configured graph attention network output in step S906 (e.g. using hardware logic configured to implement that configured graph attention) more efficiently (e.g. more quickly, and consuming less computational resources) relative to the graph attention network received in step S902.

### *Figure 12*

Figure 12 shows another method of configuring a graph attention network. The method of configuring a graph attention network shown in Figure 12 is a computer-implemented method. The processing system 400 for configuring a graph attention network shown in Figure 4 may be configured to perform the method of configuring a graph attention network shown in Figure 12. The method of configuring a graph attention network shown in Figure 12 can be used independently, or can be used in combination with one or both of the methods of compressing/configuring a graph attention network shown in Figures 5 and 9, as will be described herein.

In step S1202, a graph attention network is received. The received a graph attention network may be defined by a software model. For example, that software model may define the adjacency matrix mask (M) of the received graph attention network, the series of layers of the received graph attention network (e.g. the number of layers, the order of the layers, and the connectivity between those layers), each of the layers in that series in terms of the series of operations it is configured to perform, and the feature embedding matrix (H), weight matrix (W) and pair of attention vectors ($a_1$ and $a_2$) each graph attention network layer will use. The received graph attention network may comprise at least one graph attention network layer arranged to perform the series of operations described herein with reference to Figures 2A to 2D. The received graph attention network may be a trained neural network. The graph attention network (e.g. the software model defining that graph attention network) may be received at processing system 400 shown in Figure 4, and stored in memory 406.

The graph attention network received in step S1202 comprises a graph attention network layer. That graph attention network layer is arranged to perform an operation in dependence on a weight matrix (W) and an attention vector (e.g. $a_1$ or $a_2$). As described herein, the graph attention network layer may be arranged to multiply a feature embedding matrix (H) by the weight matrix (W) so as to form an intermediate matrix (HW), and multiply the intermediate matrix (HW) by the attention vector (e.g. $a_1$ or $a_2$) (e.g. see operations 202, and 204 or 206, in Figures 2A and 2B).

The graph attention network layer received in step S1202 may also be arranged to perform an operation in dependence on the weight matrix (W) and a further attention vector (e.g. the other of $a_1$ or $a_2$). As described herein, the graph attention network layer may be arranged to multiply a feature embedding matrix (H) by the weight matrix (W) so as to form an intermediate matrix (HW), and multiply the intermediate matrix (HW) by the further attention vector (e.g. the other of $a_1$ or $a_2$) (e.g. see operations 202 and 204 or 206 in Figures 2A and 2B).

In step S1204, an attention weight vector (e.g. $Wa_1$ or $Wa_2$) is computed in dependence on the weight matrix (W) and the attention vector (e.g. $a_1$ or $a_2$). Computing the attention weight vector (e.g. $Wa_1$ or $Wa_2$) may comprise multiplying the weight matrix (W) by the attention vector (e.g. $a_1$ or $a_2$) so as to form the attention weight vector (e.g. $Wa_1$ or $Wa_2$). Said multiplication may be a matrix-vector multiplication operation. As described herein, the weight matrix (W) has the dimensions $F \times F'$ and the attention vector (e.g. $a_1$ or $a_2$) has the dimensions $F' \times 1$. Said matrix-vector multiplication operation outputs an intermediate column vector (e.g. $Wa_1$ or $Wa_2$) - i.e. the attention weight vector (e.g. $Wa_1$ or $Wa_2$). The intermediate column vector (e.g. $Wa_1$ or $Wa_2$) has the dimensions $F \times 1$. The attention weight vector (e.g. $Wa_1$ or $Wa_2$) may be computed in an offline phase, prior to implementing the configured graph attention network. The at least one processor 404 shown in Figure 4 can be configured to perform step S1204. In other words, the attention weight vector (e.g. $Wa_1$ or $Wa_2$) may be "pre-computed" by the at least one processor 404 shown in Figure 4.

Step S1204 may further comprise computing a further attention weight vector (e.g. the other of $Wa_1$ and $Wa_2$) in dependence on the weight matrix (W) and the further attention vector (e.g. the other of $a_1$ and $a_2$). Computing the further attention weight vector (e.g. the other of $Wa_1$ and $Wa_2$) may comprise multiplying the weight matrix (W) by the further attention vector (e.g. the other of $a_1$ or $a_2$) so as to form the further attention weight vector (e.g. the other of $Wa_1$ or $Wa_2$). Said multiplication may be a matrix-vector multiplication operation. As described herein, the weight matrix (W) has the dimensions $F \times F'$ and the further attention vector (e.g. the other of $a_1$ or $a_2$) has the dimensions $F' \times 1$. Said matrix-vector multiplication operation outputs a further intermediate column vector (e.g. the other of $Wa_1$ or $Wa_2$) - i.e. the further attention weight vector (e.g. the other of $Wa_1$ or $Wa_2$). The further intermediate column vector (e.g. the other of $Wa_1$ or $Wa_2$) has the dimensions $F \times 1$. The further attention weight vector (e.g. the other of $Wa_1$ or $Wa_2$) may be computed in an offline phase, prior to implementing the configured graph attention network. The at least one processor 404 shown in Figure 4 can be configured to compute the further attention weight vector (e.g. the other of $Wa_1$ or $Wa_2$). In other words, the further attention weight vector (e.g. the other of $Wa_1$ or $Wa_2$) may be "pre-computed" by the at least one processor 404 shown in Figure 4.

In step S1206, the graph attention network is configured such that the graph attention network layer is configured to perform an operation in dependence on the attention weight vector (e.g. $Wa_1$ or $Wa_2$). The graph attention network layer of the configured graph attention network may be configured to multiply the feature embedding matrix (H), or each of one or more feature embedding sub-matrices ($h_{1-p}$) formed in dependence on the feature embedding matrix (H), by the computed attention weight vector (e.g. $Wa_1$ or $Wa_2$). Step S1204 may further comprise configuring the graph attention network such that the graph attention network layer is configured to perform an operation in dependence on the further attention weight vector (e.g. the other of $Wa_1$ or $Wa_2$). The graph attention network layer of the configured graph attention network may be configured to multiply the feature embedding matrix (H), or each of one or more feature embedding sub-matrices ($h_{1-p}$) formed in dependence on the feature embedding matrix (H), by the computed further attention weight vector (e.g. the other of $Wa_1$ or $Wa_2$).

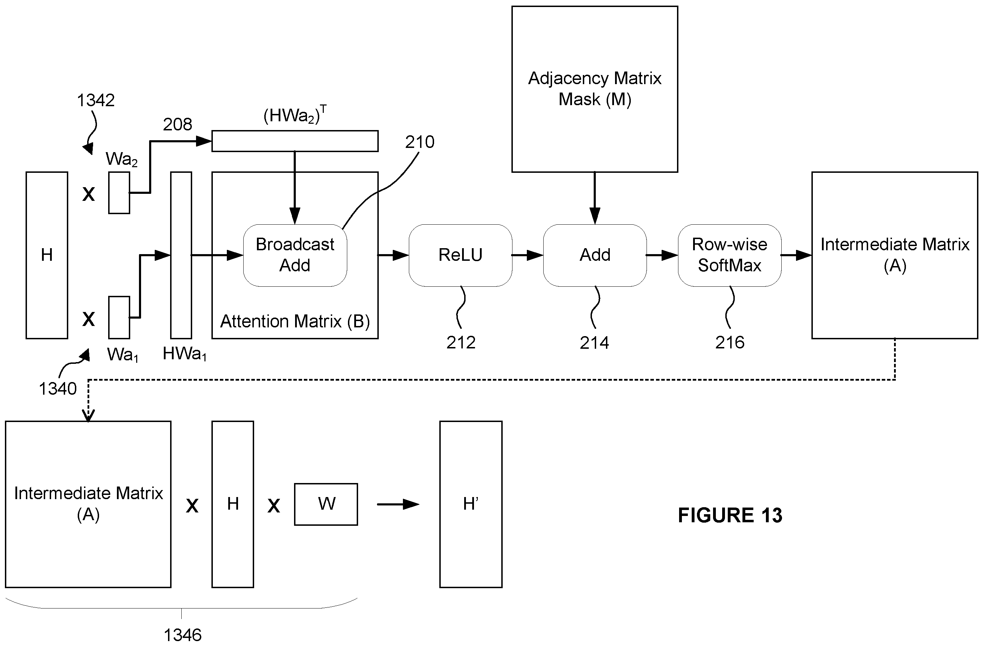

As described herein, the method of configuring a graph attention network shown in Figure 12 can be used independently of the method of compressing a graph attention network shown in Figure 5. In this case, Figure 13 illustrates a series of operations performed by configured graph attention network layer of a graph attention network configured according to the method shown in Figure 12.

In Figure 13, the first two operations in the series of operations are multiplication operations 1340 and 1342. Both operations 1340 and 1342 may be referred to as matrix-vector multiplication operations. That is, the series of operations illustrated in Figure 13 does not begin with the multiplication operation 202 as described herein with reference to Figures 2A to 2D. The multiplication operation 1340 comprises multiplying the feature embedding matrix (H) by the pre-computed first attention weight vector ($Wa_1$). As described herein, the feature embedding matrix (H) has the dimensions $N \times F$ and the pre-computed first attention weight vector ($Wa_1$) has the dimensions $F \times 1$. The multiplication operation 1340 outputs an intermediate column vector ($HWa_1$). The intermediate column vector ($HWa_1$) has the dimensions $N \times 1$. The multiplication operation 1342 comprises multiplying the feature embedding matrix (H) by the pre-computed second attention weight vector (Waz). As described herein, the feature embedding matrix (H) has the dimensions $N \times F$ and the pre-computed second attention weight vector (Waz) has the dimensions $F \times 1$. The multiplication operation 1342 outputs an intermediate column vector ($HWa_2$). The intermediate column vector ($HWa_2$) has the dimensions $N \times 1$. Owing to the associative property of matrix multiplication, the intermediate column vectors ($HWa_1$ and $HWa_2$) formed by the pre-computing step S1204, and multiplication operations 1340 and 1342, will be the same as (e.g. equal to) the intermediate column vectors ($HWa_1$ and $HWa_2$) formed by the multiplication operations 202, 204 and 206 described herein with reference to Figures 2A and 2B.

Next, in Figure 13, the series of operations comprises transpose operation 208, broadcast add operation 210, activation operation 212, addition operation 214 and row-wise SoftMax operation 216 that are performed in the same manner as the respective transpose operation 208, broadcast add operation 210, activation operation 212, addition operation 214 and row-wise SoftMax operation 216 described herein with reference to Figures 2A to 2D.

Finally, in Figure 13, the series of operations comprises a series of multiplication operations 1346. The method of configuring a graph attention network shown in Figure 12 can be used in combination with the method of configuring a graph attention network shown in Figure 9. As such, the series of multiplication operations 1346 shown in Figure 13 can be performed by, either: performing a first series of operations "Ax(HW)"; or performing a second series of operations "(AH) xW". A selection between the first series of operations and the second series of operations can be made according to the principles described herein with reference to Figure 9. That said, as will be appreciated from Figure 13, when performing the second series of operations "(AH)xW' as part of a series of operations configured according to the method of Figure 12, the graph attention network layer need not also multiply the feature embedding matrix (H) by the weight matrix (W) so as to form an intermediate matrix (HW). That is, as above, the series of operations illustrated in Figure 13 does not begin with the multiplication operation 202 as described herein with reference to Figures 2A to 2D. This means that, in the first example, the graph attention network layer may be configured to perform the first series of operations when it is determined in step S904 that the weight matrix (W) comprises more rows than columns, or perform the second series of operations when it is determined in step S904 that the weight matrix (W) comprises more columns than row. This also means that, in the second example, the second function need not also account for the number of multiply-accumulate operations incurred by forming the intermediate matrix (HW). That is, the second function may be $N * N * F + N * F * F'$. The feature embedding matrix (H') output by the series of multiplication operations 1346 can be used to form an input for a subsequent graph attention network layer, or to form an output of the graph attention network, in the same manner as the feature embedding matrix (H') output by the multiplication operation 218 - as described herein.

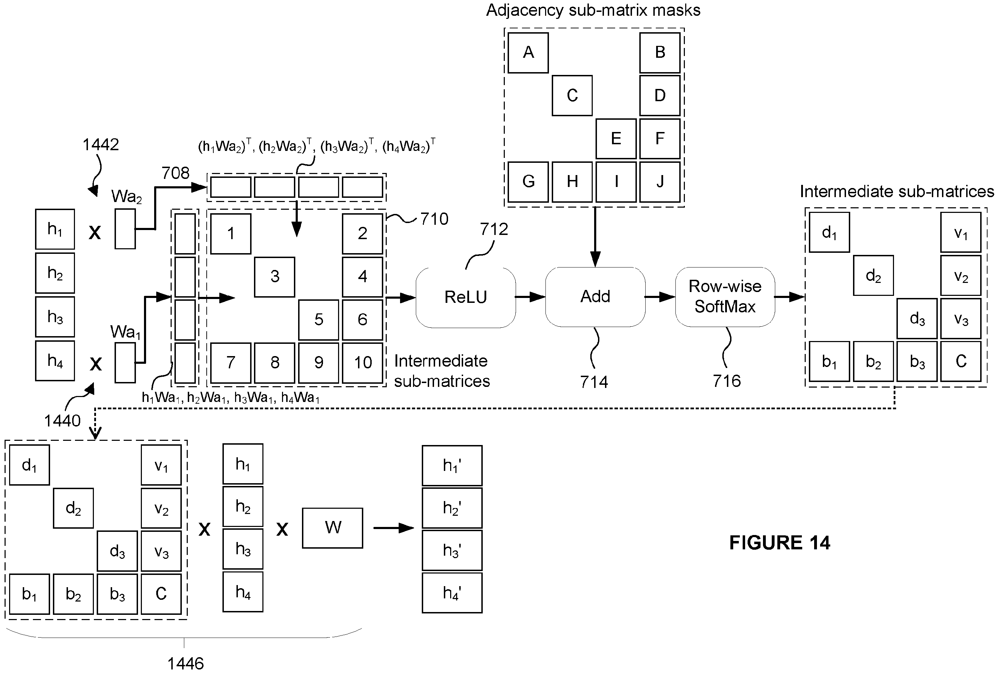

As described herein, the method of configuring a graph attention network shown in Figure 12 can be used in combination with the method of compressing a graph attention network shown in Figure 5. In this case, Figure 14 illustrates a compressed series of operations performed by a configured and compressed graph attention network layer of a graph attention network configured according to the method shown in Figure 12 and compressed according to the method shown in Figure 5.

In Figure 14, the first two operations in the compressed series of operations are multiplication operations 1440 and 1442. Both operations 1440 and 1442 may be referred to as matrix-vector multiplication operations. That is, the compressed series of operations illustrated in Figure 14 does not begin with the multiplication operation 702 as described herein with reference to Figure 7. The multiplication operation 1440 comprises multiplying each of the one or more feature embedding sub-matrices ($h_{1-p}$) by the pre-computed first attention weight vector ($Wa_1$). For example, referring to Figure 14, the multiplication operation 1440 may comprise: multiplying feature embedding sub-matrix $h_1$ by the pre-computed first attention weight vector ($Wa_1$); multiplying feature embedding sub-matrix hz by the pre-computed first attention weight vector ($Wa_1$); multiplying feature embedding sub-matrix $h_3$ by the pre-computed first attention weight vector ($Wa_1$); and multiplying feature embedding sub-matrix $h_4$ by the pre-computed first attention weight vector ($Wa_1$). The multiplication operation 1440 outputs one or more intermediate column sub-vectors ($h_{1-p}Wa_1$). For example, referring to Figure 14, the multiplication operation 1440 may output a plurality of intermediate column sub-vectors: $h_1Wa_1$ to $h_4Wa_1$. The multiplication operation 1442 comprises multiplying each of the one or more feature embedding sub-matrices ($h_{1-p}$) by the pre-computed second attention weight vector ($Wa_2$). For example, referring to Figure 14, the multiplication operation 1442 may comprise: multiplying feature embedding sub-matrix $h_1$ by the pre-computed second attention weight vector ($Wa_2$); multiplying feature embedding sub-matrix hz by the pre-computed second attention weight vector ($Wa_2$); multiplying feature embedding sub-matrix $h_3$ by the pre-computed second attention weight vector ($Wa_2$); and multiplying feature embedding sub-matrix $h_4$ by the pre-computed second attention weight vector ($Wa_2$). The multiplication operation 1442 outputs one or more intermediate column sub-vectors ($h_{1-p}Wa_2$). For example, referring to Figure 14, the multiplication operation 1442 may output a plurality of intermediate column sub-vectors: $h_1Wa_2$ to $h_4Wa_2$. Owing to the associative property of matrix multiplication, the intermediate column vectors ($h_{1-p}Wa_1$ and $h_{1-p}Wa_2$) formed by the pre-computing step S1204, and multiplication operations 1440 and 1442, will be the same as (e.g. equal to) the intermediate column vectors ($h_{1-p}Wa_1$ and $h_{1-p}Wa_2$) formed by the multiplication operations 702, 704 and 706 described herein with reference to Figure 7.

Next, in Figure 14, the compressed series of operations comprises a compressed transpose operation 708, compressed broadcast add operation 710, compressed activation operation 712, compressed addition operation 714 and compressed row-wise SoftMax operation 716 that are performed in the same manner as the respective compressed transpose operation 708, compressed broadcast add operation 710, compressed activation operation 712, compressed addition operation 714 and compressed row-wise SoftMax operation 716 described herein with reference to Figure 7.

Finally, in Figure 14, the compressed series of operations comprises a compressed series of multiplication operations 1446. The method of configuring a graph attention network shown in Figure 12 can be used in combination with the method of configuring a graph attention network shown in Figure 9. As such, the compressed series of multiplication operations 1446 shown in Figure 14 can be performed by, either: performing a first compressed series of operations as described herein (e.g. as shown in Figure 7); or performing a second compressed series of operations as described herein (e.g. as shown in Figure 11). A selection between the first compressed series of operations and the second compressed series of operations can be made according to the principles described herein with reference to Figure 9. That said, as will be appreciated from Figure 14, when performing the second compressed series of operations as part of a compressed series of operations configured according to the method of Figure 12, the compressed graph attention network layer need not also multiply each of the one or more feature embedding sub-matrices ($h_{1-p}$) by the weight matrix (W) so as to form one or more intermediate sub-matrices ($h_{1-p}W$). That is, as above, the compressed series of operations illustrated in Figure 14 does not begin with the multiplication operation 702 as described herein with reference to Figure 7. This means that, in the first example, the graph attention network layer may be configured to perform the first compressed series of operations when it is determined in step S904 that the weight matrix (W) comprises more rows than columns, or perform the second series of operations when it is determined in step S904 that the weight matrix (W) comprises more columns than row. This also means that, in the second example, the second function need not also account for the number of multiply-accumulate operations incurred by forming the intermediate matrix (HW). That is, the second function may be $N*N*F + N*F*F'$. The one or more feature embedding sub-matrices ($h_{1-p}'$) output by the compressed series of multiplication operations 1446 can be used to form an input for a subsequent graph attention network layer or to form an output of the compressed graph attention network in the same manner as one or more feature embedding sub-matrices ($h_{1-p}'$) output by the compressed multiplication operation 718 - as described herein.

The method shown in Figure 12 can be applied to one, more than one, or all of the graph attention network layers of a received graph attention network comprising a plurality of graph attention network layers. That is, a subset of the graph attention network layers of a received graph attention network comprising a plurality of graph attention network layers could be configured according to the method shown in Figure 12, with the method shown in Figure 12 not being applied to the other graph attention network layers of said received graph attention network. Owing to the associative property of matrix multiplication, the output of a graph attention network layer will be the same regardless of whether or not that graph attention network layer is configured according to the method shown in Figure 12, and so no knock-on changes to preceding or subsequent graph attention network layers need to be made when a graph attention network layer is configured according to the method shown in Figure 12.

Returning to Figure 12, step S1206 may comprise storing the configured graph attention network for subsequent implementation. For example, referring to Figure 4, the at least one processor 404 may write the configured graph attention network into memory 406 for subsequent implementation. Step S1206 may comprise outputting a computer readable description of the configured graph attention network that, when implemented at a system for implementing a graph attention network (e.g. system 300 shown in Figure 3), causes the configured graph attention network to be executed.

Step S1206 may comprise configuring hardware logic to implement the configured graph attention network. The hardware logic may comprise a neural network accelerator (NNA), one or more graphics processing units (GPUs), or any combination thereof. For example, referring to Figure 4, the at least one processor 404 may be configured to configure hardware logic comprised by the system 300 for implementing a graph attention network to implement the configured graph attention network. Step S1206 may comprise using the configured graph attention network (e.g. using the configured graph attention network to perform processing). That is, step S1206 may comprise using the hardware logic configured to implement the configured graph attention network to perform processing. For example, the configured graph attention network may be used to perform image processing. Performing image processing using the configured graph attention network may comprise: receiving (e.g. at the hardware logic) image data representing one or more images; processing said image data using the configured graph attention network (e.g. as implemented at the hardware logic); and generating (e.g. at the hardware logic) an output representative of the processing of said image data. In an example, said image processing may comprise image classification. In image classification, image data representing one or more images may be input to the configured graph attention network, and the output of that configured graph attention network may be data indicative of a probability (or set of probabilities) that each of those images belongs to a particular classification (or set of classifications). That is, the computations performed in the layers of the configured graph attention network may enable characteristic features (e,g, low level features such as edges) of the input data to be identified, and predictions to be made as to which classification (or set of classifications) the one or more images represented by that input data belongs to.

Configuring a graph attention network such that a graph attention network layer is configured to perform its operations in dependence on pre-computed attention weight vectors (e.g. $Wa_1$ and $Wa_2$) as in the method shown in Figure 12 can increase hardware utilisation when implementing that graph attention network layer. This is because, in a typical graph attention network layer, the multiplication HxW (e.g. multiplication operation 202) must be performed before the intermediate matrix (HW) can be used in further operations - e.g., such as multiplications $(HW)xa_1$ and $(HW)xa_2$ (e.g. multiplication operations 204 and 206). As such, the multiplication HxW acts as a "blocking computation". That is, the hardware implementing a graph attention network layer cannot be used to perform other operations of that graph attention network layer until the HxW multiplication has been completed. This may mean that that hardware is not being 100% utilised for a period of time whist the HxW multiplication is being performed. By pre-computing the attention weight vectors (e.g. $Wa_1$ and $Wa_2$), the "blocking computation" HxW is removed from the series of operations required to generate the intermediate matrix (A). The inventors have found that doing so can increase hardware utilisation, and thereby lead to faster network inference. This is true in examples where a graph attention network layer performs the first or second series of operations (e.g. "Ax(HW)" or "(AH)xW') described herein. Further, in examples where a graph attention network layer performs the second series of operations described herein (e.g. "(AH)×W'), pre-computing the attention weight vectors (e.g. $Wa_1$ and $Wa_2$) can reduce the number of multiply-accumulate operations performed when implementing that graph attention network layer. This means that processing (e.g. image processing) can be performed using the configured graph attention network output in step S1206 (e.g. using hardware logic configured to implement that configured graph attention) more efficiently (e.g. more quickly, and consuming less computational resources) relative to the graph attention network received in step S1202.

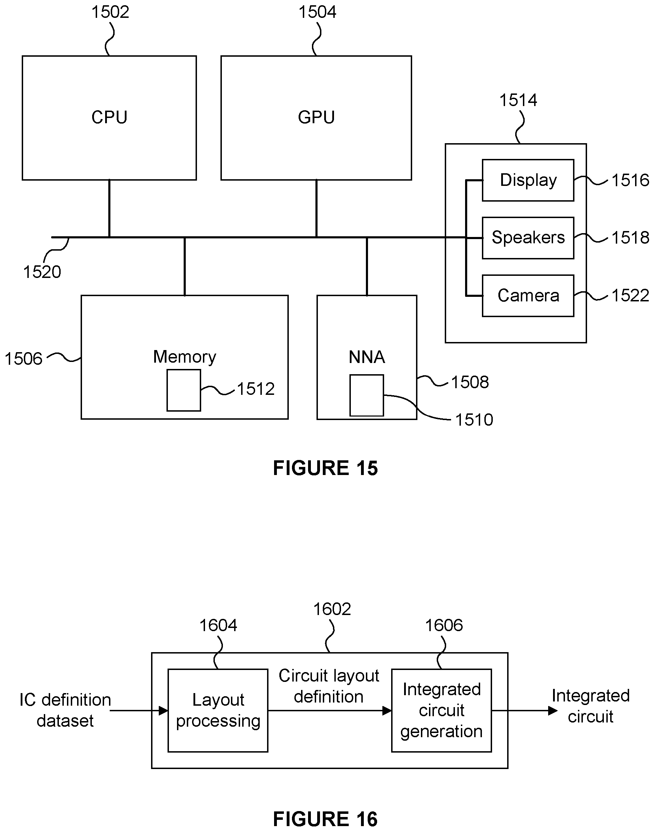

Figure 15 shows a computer system in which the graph attention network systems described herein may be implemented. The computer system comprises a CPU 1502, a GPU 1504, a memory 1506, a neural network accelerator (NNA) 1508, and other devices 1514, such as a display 1516, speakers 1518 and a camera 1522. One or both of GPU 1504 and NNA 1508 may act as hardware logic for implementing a graph attention network. The GPU 1504 may comprise specific hardware logic, for example equivalent to NNA 1508, for accelerating (at least aspects of) the implementation of neural networks. It is to be understood that one or more of the depicted components may be omitted from the system. The components of the computer system can communicate with each other via a communications bus 1520.

The systems of Figures 3, 4, and 15 are shown as comprising a number of functional blocks. This is schematic only and is not intended to define a strict division between different logic elements of such entities. Each functional block may be provided in any suitable manner. It is to be understood that intermediate values described herein as being formed by the at least one processor and/or a graph attention network layer of a graph attention network need not be physically generated by the at least one processor and/or that graph attention network layer of a graph attention network at any point and may merely represent logical values which conveniently describe the processing performed by the at least one processor and/or that graph attention network layer of a graph attention network between its input and output.

The processing system described herein may be embodied in hardware on an integrated circuit. The processing system described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing system will now be described with respect to Figure 16.

Figure 16 shows an example of an integrated circuit (IC) manufacturing system 1602 which is configured to manufacture a processing system as described in any of the examples herein. In particular, the IC manufacturing system 1602 comprises a layout processing system 1604 and an integrated circuit generation system 1606. The IC manufacturing system 1602 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 1602 to manufacture an integrated circuit embodying a processing system as described in any of the examples herein.

The layout processing system 1604 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1604 has determined the circuit layout it may output a circuit layout definition to the IC generation system 1606. A circuit layout definition may be, for example, a circuit layout description.

The IC generation system 1606 generates an IC according to the circuit layout definition, as is known in the art. For example, the IC generation system 1606 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1606 may be in the form of computer-readable code which the IC generation system 1606 can use to form a suitable mask for use in generating an IC.

The different processes performed by the IC manufacturing system 1602 may be implemented all in one location, e.g. by one party. Alternatively, the IC manufacturing system 1602 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 16 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 16, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

Aspects of the disclosure are described in the numbered paragraphs of Annex A and Annex B in terms of exemplary combinations of features.

ANNEX A

1. A computer implemented method of configuring a graph attention network, the method comprising:

receiving a graph attention network comprising a graph attention network layer, said graph attention network layer being arranged to perform one or more operations in dependence on a feature embedding matrix and a weight matrix;
assessing at least one dimension of one or both of the feature embedding matrix and the weight matrix; and
in dependence on the dimensions of one or both of the feature embedding matrix and the weight matrix, configuring the graph attention network such that the graph attention network layer is configured to, either:

(i) perform an operation in dependence on the feature embedding matrix and the weight matrix so as to form a first intermediate output, and subsequently perform an operation in dependence on a first intermediate matrix and the first intermediate output; or
(ii) perform an operation in dependence on the first intermediate matrix and the feature embedding matrix so as to form a second intermediate output, and subsequently perform an operation in dependence on the second intermediate output and the weight matrix.

2. The computer implemented method of paragraph 1, wherein the graph attention network is configured such that the graph attention network layer is configured to, either:

(i) multiply the feature embedding matrix by the weight matrix so as to form a second intermediate matrix as the first intermediate output, and subsequently multiply the first intermediate matrix by the second intermediate matrix; or
(ii) multiply the first intermediate matrix by the feature embedding matrix so as to form a third intermediate matrix as the second intermediate output, and subsequently multiply the third intermediate matrix by the weight matrix.

3. The computer implemented method of paragraph 1, wherein the first intermediate matrix is a sub-matrix of one or more first intermediate sub-matrices, the method comprises forming one or more feature embedding sub-matrices in dependence on the feature embedding matrix, and wherein the graph attention network is configured such that the graph attention network layer is configured to, either:

(i) perform an operation in dependence on the one or more feature embedding sub-matrices and the weight matrix so as to form one or more second intermediate sub-matrices as the first intermediate output, and subsequently perform an operation in dependence on the one or more first intermediate sub-matrices and the one or more second intermediate sub-matrices; or
(ii) perform an operation in dependence on the one or more first intermediate sub-matrices and the one or more feature embedding sub-matrices so as to form a one or more third intermediate sub-matrices as the second intermediate output, and subsequently perform an operation in dependence on the one or more third intermediate sub-matrices and the weight matrix.

4. The computer implemented method of any preceding paragraph, the method comprising assessing at least one dimension of one or both of the feature embedding matrix and the weight matrix in order to select, from a plurality of predefined series of operations, the series of operations that causes a graph attention network layer configured to perform that series of operations to incur the fewest multiple-accumulate operations.

5. The computer implemented method of any preceding paragraph, wherein assessing at least one dimension of one or both of the feature embedding matrix and the weight matrix comprises:

inputting one or both dimensions of each of the feature embedding matrix and the weight matrix into a first function;
inputting one or both dimensions of each of the feature embedding matrix and the weight matrix into a second function; and
determining whether the output of said first function is greater than the output of said second function.

6. The computer implemented method of paragraph 5, wherein:

the first function is indicative of the number of multiply-accumulate operations associated with operations performed in dependence on the feature embedding matrix and the weight matrix that would be incurred by a graph attention network layer configured to perform a first series of operations; and
the second function is indicative of the number of multiply-accumulate operations associated with operations performed in dependence on the feature embedding matrix and the weight matrix that would be incurred by a graph attention network layer configured to perform a second series of operations.

7. The computer implemented method of paragraph 6, comprising configuring the graph attention network such that the graph attention network layer is configured to:

perform the first series of operations in response to determining that the output of the first function is less than the output of the second function; or
perform the second series of operations in response to determining that the output of the first function is greater than the output of the second function.

8. The computer implemented method of paragraph 6 or 7, wherein:

the first series of operations comprises (i) performing an operation in dependence on the feature embedding matrix and the weight matrix so as to form the first intermediate output, and subsequently performing an operation in dependence on the first intermediate matrix and the first intermediate output; and
the second series of operations comprises (ii) performing an operation in dependence on the first intermediate matrix and the feature embedding matrix so as to form the second intermediate output, and subsequently performing an operation in dependence on the second intermediate output and the weight matrix.

9. The computer implemented method of paragraph 8, wherein:

the first series of operations comprises (i) multiplying the feature embedding matrix by the weight matrix so as to form a second intermediate matrix as the first intermediate output, and subsequently multiplying the first intermediate matrix by the second intermediate matrix; and
the second series of operations comprises (ii) multiplying the first intermediate matrix by the feature embedding matrix so as to form a third intermediate matrix as the second intermediate output, and subsequently multiplying the third intermediate matrix by the weight matrix.

10. The computer implemented method of paragraph 8, wherein the first intermediate matrix is a sub-matrix of one or more first intermediate sub-matrices, the method comprises forming one or more feature embedding sub-matrices in dependence on the feature embedding matrix, and wherein:

the first series of operations comprises (i) performing an operation in dependence on the one or more feature embedding sub-matrices and the weight matrix so as to form one or more second intermediate sub-matrices as the first intermediate output, and subsequently performing an operation in dependence on the one or more first intermediate sub-matrices and the one or more second intermediate sub-matrices; and
the second series of operations comprises (ii) performing an operation in dependence on the one or more first intermediate sub-matrices and the one or more feature embedding sub-matrices so as to form one or more third intermediate sub-matrices as the second intermediate output, and subsequently performing an operation in dependence on the one or more third intermediate sub-matrices and the weight matrix.

11. The computer implemented method of any preceding paragraph, wherein the feature embedding matrix has the dimensions $N \times F$, and the weight matrix has the dimensions $F \times$ F', and the method comprises:

determining that $N \times F' > N \times F + F \times$ F'; and
in response to determining that $N \times F' > N \times F + F \times$ F', configuring the graph attention network such that the graph attention network layer is configured to (ii) perform the operation in dependence on the first intermediate matrix and the feature embedding matrix so as to form the second intermediate output, and subsequently perform the operation in dependence on the second intermediate output and the weight matrix.

12. The computer implemented method of any preceding paragraph, wherein the graph attention network is configured such that the graph attention network layer is configured to:

perform the operation in dependence on the feature embedding matrix and the weight matrix so as to form the first intermediate output; and
(ii) perform the operation in dependence on the first intermediate matrix and the feature embedding matrix so as to form the second intermediate output, and subsequently perform the operation in dependence on the second intermediate output and the weight matrix.

13. The computer implemented method of paragraph 12, wherein the graph attention network is configured such that the graph attention network layer is configured to:

multiply the feature embedding matrix by the weight matrix so as to form the second intermediate matrix as the first intermediate output; and
(ii) multiply the first intermediate matrix by the feature embedding matrix so as to form the third intermediate matrix as the second intermediate output, and subsequently multiply the third intermediate matrix by the weight matrix.

14. The computer implemented method of paragraph 12, wherein the first intermediate matrix is a sub-matrix of one or more first intermediate sub-matrices, the method further comprises forming one or more feature embedding sub-matrices in dependence on the feature embedding matrix; and wherein the graph attention network is configured such that the graph attention network layer is configured to:

perform an operation in dependence on the one or more feature embedding sub- matrices and the weight matrix so as to form one or more second intermediate sub-matrices as the first intermediate output; and
(ii) perform an operation in dependence on the one or more first intermediate sub-matrices and the one or more feature embedding sub-matrices so as to form one or more third intermediate sub-matrices as the second intermediate output, and subsequently perform an operation in dependence on the one or more third intermediate sub-matrices and the weight matrix.

15. The computer implemented method of any of paragraphs 1 to 10, the method comprising:

determining that the weight matrix comprises more rows than columns; and
in response to determining that the weight matrix comprises more rows than columns, configuring the graph attention network such that the graph attention network layer is configured to (i) perform the operation in dependence on the feature embedding matrix and the weight matrix so as to form the first intermediate output, and subsequently perform the operation in dependence on the first intermediate matrix and the first intermediate output.

16. The computer implemented method of any of paragraphs 1 to 10 or 15, wherein the feature embedding matrix has the dimensions $N \times F$, and the weight matrix has the dimensions $F \times F'$, and the method comprises:

determining that $N \times F' \le N \times F + F \times F'$; and
in response to determining that $N \times F' \le N \times F + F \times F'$, configuring the graph attention network such that the graph attention network layer is configured to (i) perform the operation in dependence on the feature embedding matrix and the weight matrix so as to form the first intermediate output, and subsequently perform the operation in dependence on the first intermediate matrix and the first intermediate output.

17. The computer implemented method of any preceding paragraph, wherein the received graph attention network comprises a further graph attention network layer, the further graph attention network layer being arranged to perform one or more further operations in dependence on a further feature embedding matrix and a further weight matrix; the method further comprising:

assessing at least one dimension of one or both of the further feature embedding matrix and the further weight matrix; and
in dependence on the dimensions of one or both of the further feature embedding matrix and the further weight matrix, configuring the graph attention network such that the further graph attention network layer is configured to, either:

(i) perform an operation in dependence on the further feature embedding matrix and the further weight matrix so as to form a further first intermediate output, and subsequently perform an operation in dependence on a further first intermediate matrix and the further first intermediate output; or
(ii) perform an operation in dependence on the further first intermediate matrix and the further feature embedding matrix so as to form a further second intermediate output, and subsequently perform an operation in dependence on the further second intermediate output and the further weight matrix.

18. The computer implemented method of paragraph 17, the method comprising configuring the graph attention network such that:

the graph attention network layer is configured to (ii) perform the operation in dependence on the first intermediate matrix and the feature embedding matrix so as to form a second intermediate output, and subsequently perform the operation in dependence on the second intermediate output and the weight matrix; and
the further graph attention network layer is configured to (i) perform the operation in dependence on the further feature embedding matrix and the further weight matrix so as to form a further first intermediate output, and subsequently perform the operation in dependence on the further first intermediate matrix and the further first intermediate output.

19. The computer implemented method of any preceding paragraph, the method further comprising storing the configured graph attention network for subsequent implementation.

20. The computer implemented method of any preceding paragraph, the method further comprising outputting a computer readable description of the configured graph attention network that, when implemented at a system for implementing a graph attention network, causes the configured graph attention network to be executed.

21. The computer implemented method of any preceding paragraph, the method further comprising configuring hardware logic to implement the configured graph attention network.

22. The computer implemented method of paragraph 21, wherein the hardware logic comprises:

a neural network accelerator; and/or
a graphics processing unit.

23. The computer implemented method of any preceding paragraph, wherein the first intermediate matrix is:

an intermediate adjacency-attention matrix that is representative of the adjacency information and the attention information of the graph attention network layer; or
a sub-matrix of one or more intermediate adjacency-attention sub-matrices, said one or more intermediate adjacency-attention sub-matrices being representative of the adjacency information and the attention information of the graph attention network layer.

24. A processing system for configuring a graph attention network, the processing system comprising at least one processor configured to:

receive a graph attention network comprising a graph attention network layer, said graph attention network layer being arranged to perform one or more operations in dependence on a feature embedding matrix and a weight matrix;
assess at least one dimension of one or both of the feature embedding matrix and the weight matrix; and
in dependence on the dimensions of one or both of the feature embedding matrix and the weight matrix, configure the graph attention network such that the graph attention network layer is configured to, either:

(i) perform an operation in dependence on the feature embedding matrix and the weight matrix so as to form a first intermediate output, and subsequently perform an operation in dependence on a first intermediate matrix and the first intermediate output; or
(ii) perform an operation in dependence on the first intermediate matrix and the feature embedding matrix so as to form a second intermediate output, and subsequently perform an operation in dependence on the second intermediate output and the weight matrix.

25. Computer readable code configured to cause the computer implemented method of any of paragraphs 1 to 23 to be performed when the code is run.

26. A non-transitory computer readable storage medium having stored thereon computer readable instructions that, when executed at a computer system, cause the computer system to perform a computer-implemented method of configuring a graph attention network, the method comprising:

receiving a graph attention network comprising a graph attention network layer, said graph attention network layer being arranged to perform one or more operations in dependence on a feature embedding matrix and a weight matrix;
assessing at least one dimension of one or both of the feature embedding matrix and the weight matrix; and
in dependence on the dimensions of one or both of the feature embedding matrix and the weight matrix, configuring the graph attention network such that the graph attention network layer is configured to, either:

(i) perform an operation in dependence on the feature embedding matrix and the weight matrix so as to form a first intermediate output, and subsequently perform an operation in dependence on a first intermediate matrix and the first intermediate output; or
(ii) perform an operation in dependence on the first intermediate matrix and the feature embedding matrix so as to form a second intermediate output, and subsequently perform an operation in dependence on the second intermediate output and the weight matrix.

ANNEX B

1. A computer implemented method of configuring a graph attention network, the method comprising:

   receiving a graph attention network comprising a graph attention network layer, said graph attention network layer being arranged to perform an operation in dependence on a weight matrix and an attention vector;
   computing an attention weight vector in dependence on the weight matrix and the attention vector; and
   configuring the graph attention network such that the graph attention network layer is configured to perform an operation in dependence on the attention weight vector.

2. The computer implemented method of paragraph 1, wherein:

   the graph attention network layer of the received graph attention network is arranged to multiply a feature embedding matrix by the weight matrix so as to form an intermediate matrix, and multiply the intermediate matrix by the attention vector; and
   the graph attention network layer of the configured graph attention network is configured to multiply the feature embedding matrix, or each of one or more feature embedding sub-matrices formed in dependence on the feature embedding matrix, by the computed attention weight vector.

3. The computer implemented method of paragraph 1 or 2, wherein computing the attention weight vector comprises multiplying the weight matrix by the attention vector so as to form the attention weight vector.

4. The computer implemented method of any preceding paragraph, the method comprising computing the attention weight vector in an offline phase, prior to implementing the configured graph attention network.

5. The computer implemented method of any preceding paragraph, wherein the received graph attention network layer is arranged to perform an operation in dependence on the weight matrix and a further attention vector, and the method further comprises:

   computing a further attention weight vector in dependence on the weight matrix and the further attention vector; and
   configuring the graph attention network such that the graph attention network layer is configured to perform an operation in dependence on the further attention weight vector.

6. The computer implemented method of paragraph 5, wherein:

   the graph attention network layer of the received graph attention network is arranged to multiply a feature embedding matrix by the weight matrix so as to form an intermediate matrix, and multiply the intermediate matrix by the further attention vector; and
   the graph attention network layer of the configured graph attention network is configured to multiply the feature embedding matrix, or each of one or more feature embedding sub-matrices formed in dependence on the feature embedding matrix, by the computed further attention weight vector.

7. The computer implemented method of paragraph 5 or 6, wherein computing the further attention weight vector comprises multiplying the weight matrix by the further attention vector so as to form the further attention weight vector.

8. The computer implemented method of any of paragraphs 4 to 7, the method comprising computing the further attention weight vector in an offline phase, prior to implementing the configured graph attention network.

9. The computer implemented method of any preceding paragraph, wherein the graph attention network layer is arranged to perform one or more operations in dependence on a feature embedding matrix and the weight matrix; the method further comprising:

   assessing at least one dimension of one or both of the feature embedding matrix and the weight matrix; and
   in dependence on the dimensions of one or both of the feature embedding matrix and the weight matrix, configuring the graph attention network such that the graph attention network layer is configured to, either:

      (i) perform an operation in dependence on the feature embedding matrix and the weight matrix so as to form a first intermediate output, and subsequently perform an operation in dependence on a second intermediate matrix and the first intermediate output; or

(ii) perform an operation in dependence on the second intermediate matrix and the feature embedding matrix so as to form a second intermediate output, and subsequently perform an operation in dependence on the second intermediate output and the weight matrix.

10. The computer implemented method of paragraph 9, the method comprising assessing at least one dimension of one or both of the feature embedding matrix and the weight matrix in order to select, from a plurality of predefined series of operations, the series of operations that causes a graph attention network layer configured to perform that series of operations to incur the fewest multiple-accumulate operations.

11. The computer implemented method of paragraph 9 or 10, wherein assessing at least one dimension of one or both of the feature embedding matrix and the weight matrix comprises:

inputting one or both dimensions of each of the feature embedding matrix and the weight matrix into a first function;
inputting one or both dimensions of each of the feature embedding matrix and the weight matrix into a second function; and
determining whether the output of said first function is greater than the output of said second function.

12. The computer implemented method of paragraph 11, wherein:

the first function is indicative of the number of multiply-accumulate operations associated with operations performed in dependence on the feature embedding matrix and the weight matrix that would be incurred by a graph attention network layer configured to perform a first series of operations; and
the second function is indicative of the number of multiply-accumulate operations associated with operations performed in dependence on the feature embedding matrix and the weight matrix that would be incurred by a graph attention network layer configured to perform a second series of operations.

13. The computer implemented method of paragraph 12, comprising configuring the graph attention network such that the graph attention network layer is configured to:

perform the first series of operations in response to determining that the output of the first function is less than the output of the second function; or
perform the second series of operations in response to determining that the output of the first function is greater than the output of the second function.

14. The computer implemented method of paragraph 12 or 13, wherein:

the first series of operations comprises (i) performing an operation in dependence on the feature embedding matrix and the weight matrix so as to form the first intermediate output, and subsequently performing an operation in dependence on the first intermediate matrix and the first intermediate output; and
the second series of operations comprises (ii) performing an operation in dependence on the first intermediate matrix and the feature embedding matrix so as to form the second intermediate output, and subsequently performing an operation in dependence on the second intermediate output and the weight matrix.

15. The computer implemented method of any of paragraphs 9 to 14, wherein the graph attention network is configured such that the graph attention network layer is configured to:

perform an operation in dependence on the feature embedding matrix and the attention weight vector as part of a series of operations to form the second intermediate matrix; and
(ii) perform the operation in dependence on the second intermediate matrix and the feature embedding matrix so as to form the second intermediate output, and subsequently perform the operation in dependence on the second intermediate output and the weight matrix.

16. The computer implemented method of paragraph 15, wherein the graph attention network is configured such that the graph attention network layer is configured to:

multiply the feature embedding matrix by attention weight vector as part of a series of operations to form the second intermediate matrix; and

(ii) multiply the second intermediate matrix by the feature embedding matrix so as to form a third intermediate matrix as the second intermediate output, and subsequently multiply the third intermediate matrix by the weight matrix.

17. The computer implemented method of paragraph 15, wherein the second intermediate matrix is a sub-matrix of one or more second intermediate sub-matrices, the method further comprises forming one or more feature embedding sub-matrices in dependence on the feature embedding matrix, and wherein the graph attention network is configured such that the graph attention network layer is configured to:

perform an operation in dependence on the one or more feature embedding sub-matrices and the attention weight vector as part of a series of operations to form the one or more second intermediate sub-matrices; and
(ii) perform an operation in dependence on the one or more second intermediate sub-matrices and the one or more feature embedding sub-matrices so as to form one or more third intermediate sub-matrices as the second intermediate output, and subsequently perform an operation in dependence on the one or more third intermediate sub-matrices and the weight matrix.

18. The computer implemented method of any preceding paragraph, the method further comprising storing the configured graph attention network for subsequent implementation.

19. The computer implemented method of any preceding paragraph, the method further comprising outputting a computer readable description of the configured graph attention network that, when implemented at a system for implementing a graph attention network, causes the configured graph attention network to be executed.

20. The computer implemented method of any preceding paragraph, the method further comprising configuring hardware logic to implement the configured graph attention network.

21. The computer implemented method of paragraph 20, wherein the hardware logic comprises:

a neural network accelerator; and/or
a graphics processing unit.

22. A processing system for configuring a graph attention network, the processing system comprising at least one processor configured to:

receive a graph attention network comprising a graph attention network layer, said graph attention network layer being arranged to perform an operation in dependence on a weight matrix and an attention vector;
compute an attention weight vector in dependence on the weight matrix and the attention vector; and
configure the graph attention network such that the graph attention network layer is configured to perform an operation in dependence on the attention weight vector.

23. Computer readable code configured to cause the computer implemented method of any of paragraphs 1 to 21 to be performed when the code is run.

24. A non-transitory computer readable storage medium having stored thereon computer readable instructions that, when executed at a computer system, cause the computer system to perform a computer-implemented method of configuring a graph attention network, the method comprising:

receiving a graph attention network comprising a graph attention network layer, said graph attention network layer being arranged to perform an operation in dependence on a weight matrix and an attention vector;
computing an attention weight vector in dependence on the weight matrix and the attention vector; and

configuring the graph attention network such that the graph attention network layer is configured to perform an operation in dependence on the attention weight vector.

**Claims**

1.  A computer implemented method of compressing a graph attention network, the method comprising:

receiving a graph attention network comprising a graph attention network layer, said graph attention network layer being arranged to perform an operation in dependence on an adjacency matrix mask, said adjacency matrix mask comprising a plurality of elements representative of connected graph nodes;

rearranging the rows and/or columns of the adjacency matrix mask so as to gather the plurality of elements representative of connected graph nodes into one or more adjacency sub-matrix masks, the one or more adjacency sub-matrix masks having a greater number of elements representative of connected graph nodes per total number of elements of the one or more adjacency sub-matrix masks than the number of elements representative of connected graph nodes per total number of elements of the adjacency matrix mask; and

outputting a compressed graph attention network comprising a compressed graph attention network layer arranged to perform a compressed operation in dependence on the one or more adjacency sub-matrix masks.

2. The computer implemented method of claim 1, wherein:

each element representative of connected graph nodes comprises a zero value, such that the adjacency matrix mask comprises a plurality of zero values and the one or more adjacency sub-matrix masks have a greater number of zero values per total number of values of the one or more adjacency sub-matrix masks than the number of zero values per total number of values of the adjacency matrix mask; and/or

each of the one or more adjacency sub-matrix masks has a greater number of elements representative of connected graph nodes per total number of elements of that adjacency sub-matrix mask than the number of elements representative of connected graph nodes per total number of elements of the adjacency matrix mask.

3. The computer implemented method of claim 1 or 2, wherein said rearranging the rows and/or columns of the adjacency matrix mask comprises:

performing permutations of the rows and/or columns of the adjacency matrix mask, optionally wherein said performing permutations of the rows and/or columns of the adjacency matrix mask comprises performing a symmetric permutation, such that the permuting of the rows of the adjacency matrix mask is the same as the permuting of the columns of the adjacency matrix mask; and

partitioning the rows and/or columns of the permuted adjacency matrix mask to form the one or more adjacency sub-matrix masks.

4. The computer implemented method of any preceding claim, wherein:

the graph attention network layer of the received graph attention network is arranged to perform a series of operations in order to form a first intermediate matrix, the first intermediate matrix having the same dimensions as the adjacency matrix mask; and

the compressed graph attention network layer of the compressed graph attention network is configured to perform a compressed series of operations in order to form one or more first intermediate sub-matrices, each of the one or more first intermediate sub-matrices having the same dimensions as a respective one of the one or more adjacency sub-matrix masks.

5. The computer implemented method of claim 4, wherein:

the graph attention network layer of the received graph attention network is arranged to perform an addition operation in dependence on the adjacency matrix mask and the first intermediate matrix; and

the compressed graph attention network layer of the compressed graph attention network is configured to perform a compressed addition operation in dependence on the one or more adjacency sub-matrix masks and the one or more first intermediate sub-matrices, optionally wherein:

the series of operations further comprises performing an activation operation on the first intermediate matrix prior to performing the addition operation; and

the compressed series of operations further comprises performing an activation operation on each of the one or more first intermediate sub-matrices prior to performing the compressed addition operation.

6. The computer implemented method of claims 4 or 5, wherein:

the graph attention network layer of the received graph attention network is arranged to perform a row-wise SoftMax operation on a matrix formed in dependence on the adjacency matrix mask and the first intermediate matrix; and

the compressed graph attention network layer of the compressed graph attention network is configured to perform a compressed row-wise SoftMax operation in dependence on one or more sub-matrices, said one or more sub-matrices being formed in dependence on the one or more adjacency sub-matrix masks and the one or more first intermediate sub-matrices.

7. The computer implemented method of any of claims 4 to 6, wherein:

the series of operations comprises a broadcast add operation, the broadcast add operation forming the first intermediate matrix; and
the compressed series of operations comprises a compressed broadcast add operation, the compressed broadcast add operation forming the one or more first intermediate sub-matrices.

8. The computer implemented method of any of claims 4 to 7, wherein the series of operations further comprises performing an operation in dependence on a weight matrix and an attention vector, and the method further comprises:

computing, in an offline phase prior to implementing the compressed graph attention network, an attention weight vector in dependence on the weight matrix and the attention vector; and
configuring the compressed graph attention network such that the compressed graph attention network layer is configured to perform an operation in dependence on the attention weight vector, said operation being comprised by the compressed series of operations.

9. The computer implemented method of any preceding claim, wherein:

the graph attention network layer of the received graph attention network is arranged to perform a series of operations, in dependence on the adjacency matrix mask, in order to form a second intermediate matrix having the same dimensions as the adjacency matrix mask; and
the compressed graph attention network layer of the compressed graph attention network is configured to perform a compressed series of operations, in dependence on the one or more adjacency sub-matrix masks, in order to form one or more second intermediate sub-matrices, each of the one or more second intermediate sub-matrices having the same dimensions as a respective one of the one or more adjacency sub-matrix masks, optionally wherein the one or more second intermediate sub-matrices have a greater number of non-zero values per total number of values of the one or more second intermediate sub-matrices than the number of non-zero values per total number of values of the second intermediate matrix.

10. The computer implemented method of claim 9, wherein:

the graph attention network layer of the received graph attention network is arranged to perform multiplication operations in dependence on the second intermediate matrix, a feature embedding matrix, and a weight matrix; and
the compressed graph attention network layer of the compressed graph attention network is configured to perform compressed multiplication operations in dependence on the one or more second intermediate sub-matrices, one or more feature embedding sub-matrices formed in dependence on the feature embedding matrix, and the weight matrix, the output of said compressed multiplication operations being representative of the output of said multiplication operations, optionally wherein the method further comprises, so as to form the one or more feature embedding sub-matrices, permuting and partitioning the rows of the feature embedding matrix to match the permutation and partitioning of the columns of the permuted adjacency matrix mask, further optionally wherein the columns of the feature embedding matrix are neither permuted nor partitioned, and wherein the rows and the columns of the weight matrix are neither permuted nor partitioned.

11. The computer implemented method of claim 10, the method comprising:

assessing at least one dimension of one or both of the feature embedding matrix and the weight matrix, optionally assessing at least one dimension of one or both of the feature embedding matrix and the weight matrix in order to select, from a plurality of predefined series of operations, the series of operations that causes a compressed graph attention network layer configured to perform that series of operations to incur the fewest multiple-accumulate operations; and
in dependence on the dimensions of one or both of the feature embedding matrix and the weight matrix, configuring the compressed graph attention network such that the compressed graph attention network layer is configured to, either:

(i) perform a multiplication operation in dependence on the one or more feature embedding sub-matrices and the weight matrix so as to form one or more third intermediate sub-matrices, and subsequently perform a multiplication operation in dependence on the one or more second intermediate sub-matrices and the one or more third intermediate sub-matrices; or

(ii) perform a multiplication operation in dependence on the one or more second intermediate sub-matrices and the one or more feature embedding sub-matrices so as to form one or more fourth intermediate sub-matrices, and subsequently perform a multiplication operation in dependence on the one or more fourth intermediate sub-matrices and the weight matrix.

12. The computer implemented method of any preceding claim, wherein:

the graph attention network comprises a plurality of graph attention network layers, the plurality of graph attention network layers comprising said graph attention network layer and one or more further graph attention network layers; and

the compressed graph attention network comprises a plurality of compressed graph attention network layers, the plurality of compressed graph attention network layers comprising said compressed graph attention network layer and one or more further compressed graph attention network layers, optionally wherein:

the adjacency matrix mask is the same for all of the plurality of graph attention network layers, and the one or more adjacency sub-matrix masks are the same for all of the plurality of compressed graph attention network layers; and/or

the compressed graph attention network is configured to process an output of a first of the compressed graph attention network layers to determine an input for a second of the compressed graph attention network layers in the compressed graph attention network, wherein the processing of the output of the first of the compressed graph attention network layers does not comprise performing a permute operation on the output of the first of the compressed graph attention network layers.

13. The computer implemented method of any preceding claim, the method further comprising:

storing the compressed graph attention network for subsequent implementation; and/or

outputting a computer readable description of the compressed graph attention network that, when implemented at a system for implementing a graph attention network, causes the compressed graph attention network to be executed; and/or

configuring hardware logic to implement the compressed graph attention network.

14. A processing system for compressing a graph attention network, the processing system comprising at least one processor configured to:

receive a graph attention network comprising a graph attention network layer, said graph attention network layer being arranged to perform an operation in dependence on an adjacency matrix mask, said adjacency matrix mask comprising a plurality of elements representative of connected graph nodes;

rearrange the rows and/or columns of the adjacency matrix mask so as to gather the plurality of elements representative of connected graph nodes into one or more adjacency sub-matrix masks, the one or more adjacency sub-matrix masks having a greater number of elements representative of connected graph nodes per total number of elements of the one or more adjacency sub-matrix masks than the number of elements representative of connected graph nodes per total number of elements of the adjacency matrix mask; and

output a compressed graph attention network comprising a compressed graph attention network layer arranged to perform a compressed operation in dependence on the one or more adjacency sub-matrix masks.

15. Computer readable code configured to cause the computer implemented method of any of claims 1 to 13 to be performed when the code is run.

FIGURE 1A

FIGURE 1B

FIGURE 1C

$$H \times W = HW \qquad 202$$

$$HW \times a_1 = HWa_1 \qquad\qquad HW \times a_2 = HWa_2 \qquad 206$$

$$204$$

$$(HWa_2)^T \qquad 208$$

$$Broadcast\ add(HWa_1 + (HWa_2)^T) = B \qquad 210$$

$$ReLU(B) \qquad 212$$

$$ReLU(B) + M \qquad 214$$

$$SoftMax(ReLU(B) + M) = A \qquad 216$$

$$A \times HW = H' \qquad 218$$

**FIGURE 2A**

**FIGURE 2B**

210

FIGURE 2C

216

| ROW IN | 0 | 0 | 0 | $-\infty$ | $-\infty$ | $-\infty$ | $-\infty$ | 0 |

Row-wise
SoftMax

| ROW OUT | 0.25 | 0.25 | 0.25 | 0 | 0 | 0 | 0 | 0.25 |

FIGURE 2D

FIGURE 4

FIGURE 3

Receiving a graph attention network — S502

Rearranging the rows and/or columns of the adjacency matrix mask — S504

Outputting a compressed graph attention network — S506

**FIGURE 5**

Receiving a graph attention network — S902

Assessing the dimensions of the feature embedding matrix and/or the weight matrix — S904

Configuring the graph attention network — S906

**FIGURE 9**

Receiving a graph attention network — S1202

Computing attention weight vector(s) — S1204

Configuring the graph attention network — S1206

**FIGURE 12**

Adjacency Matrix Mask (M)

602

|   | 1 | 2 | 3 | 4 | 5 | 6 | 7 |
|---|---|---|---|---|---|---|---|
| 1 |   |   | X | X |   | X |   |
| 2 |   | X |   | X |   |   |   |
| 3 | X |   | X |   |   |   |   |
| 4 | X | X |   | X |   |   |   |
| 5 |   |   |   |   | X | X | X |
| 6 | X |   |   | X |   |   |   |
| 7 |   |   |   |   | X |   | X |

**FIGURE 6A**

606                                                                 604

**FIGURE 6B**

Permuted & Partitioned
Adjacency Matrix Mask

608

|   | 2 | 3 | 4 | 5 | 7 | 1 | 6 |
|---|---|---|---|---|---|---|---|
| 2 | X |   | X |   |   |   |   |
| 3 |   | X |   |   |   | X |   |
| 4 | X |   | X |   |   | X |   |
| 5 |   |   |   | X | X |   | X |
| 7 |   |   |   | X | X |   |   |
| 1 |   | X | X |   |   |   | X |
| 6 |   |   |   | X |   | X |   |

$610_1$    $610_4$    $610_2$    $610_3$    $610_5$

**FIGURE 6C**

FIGURE 7

Intermediate sub-matrices

Concatenated intermediate sub-matrices

Row-wise SoftMax 716

Concatenated intermediate sub-matrices

Add 714

Intermediate sub-matrices

**FIGURE 8**

FIGURE 10

FIGURE 11

EP 4 575 835 A1

FIGURE 13

FIGURE 14

1502

1504

1514

CPU

GPU

Display ⌇1516

Speakers ⌇1518

Camera ⌇1522

1520

Memory

1512

NNA

1508

1510

1506

**FIGURE 15**

1604

1602

1606

IC definition
dataset → Layout
processing → Circuit layout
definition → Integrated
circuit
generation → Integrated
circuit

**FIGURE 16**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAN WEIAN ET AL: "FPGAN: An FPGA Accelerator for Graph Attention Networks With Software and Hardware Co-Optimization", IEEE ACCESS, IEEE, USA, vol. 8, 12 September 2020 (2020-09-12), pages 171608-171620, XP011811655, DOI: 10.1109/ACCESS.2020.3023946 [retrieved on 2020-09-25] * the whole document * | 1-15 | INV. G06F16/901 G06N3/045 G06N3/048 G06N3/0495 G06N3/063 |

TECHNICAL FIELDS SEARCHED (IPC)

G06N
G06F

The present search report has been drawn up for all claims

| Place of search | Date of completion of the search | Examiner |
|---|---|---|
| The Hague | 8 April 2025 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- GB 2319566 A